# EUROPEAN PATENT APPLICATION

(11) **EP 1 489 539 A1**
(43) Date of publication of application: **22.12.2004**
(21) Application number: 03707185.9
(22) Date of filing: 03.03.2003
(51) Int. Cl.: G06F 17/60

(54) **SERVICE PROCESSING DEVICE AND PROCESSING SUPPORT DEVICE**

(30) Priority: 28.03.2002 JP 2002092115
(71) Applicant: MATSUSHITA ELECTRIC INDUSTRIAL CO., LTD., Kadoma-shi, Osaka 571-8501 (JP)
(72) Inventor: TANBA, Satoshi, Yokohama-shi, Kanagawa 232-0007 (JP); MINEMURA, Atsushi, Itabashi-ku, Tokyo 173-0031 (JP)
(74) Representative: Grünecker, Kinkeldey, Stockmair & Schwanhäusser Anwaltssozietät
(86) International application number: PCT/JP2003/002415
(87) International publication number: WO 2003/083745

(57) **Abstract**

A device which are able to be applied to a kind of processing such as one in which an authorized non-member (who has no membership for purchasing tickets) is also allowed to pass through a ticket examination gate just in a way as performed by a member. As advance processing prior to such a kind of processing, data exchange has been performed between an apparatus [101] (e.g. non-member' s mobile phone) which requests for processing (processing for passing through the gate) and an apparatus [102] (e.g. member's mobile phone) which provides a support for the processing in advance (1). At the gate, at the occasion when the apparatus [101] conducts communications with an apparatus [103] (ticket examination machine), the apparatus [101] also makes connections with the apparatus [102] (2) to be authenticated by the apparatus [102], and have the apparatus [102] provide a support in presentation of a ticket (3). In such an occasion, the apparatus [102] makes a confirmation either automatically or manually. The apparatus [102] may be located away from other apparatuses. This processing may be applied to a POS payment situation.

## Description

### FIELD OF THE INVENTION

The present invention relates to an apparatus and a method thereof which enable processing in a case where an apparatus having an insufficiency in function or security performs processing with some other apparatus, where the processing is enabled by making coordination between the apparatus having such an insufficiency and the other apparatus which is capable of carrying out the processing with the apparatus.

### BACKGROUND ART

In the case where it is wished to perform some processing with an apparatus in communications with some other apparatus, it is impossible for the apparatus to perform the processing because of insufficiency or limitation in terms of its function or security, there is a scheme to have another apparatus having a sufficient function or security act as a substitute to perform the processing.

As an example related to communications schemes, there exists an apparatus which enables communications with a communication partner apparatus which is connected to a wide area communications network by making delegation from a slave terminal (such a terminal corresponds to a simplified apparatus according to the present invention) which is not provided with a wide area communications function to a master terminal (such a terminal corresponds to a standard apparatus according to the present invention) which is provided with the wide area communications function (Japanese Laid-open Patent Publication No. 2001-298391).

In a case where a terminal apparatus is unable to perform processing with a processing target apparatus such as a server on the other end due to an insufficiency in terms of its function, security, or authority, it is necessary for the terminal apparatus to make delegation to some other apparatus or to perform some procedures to compensate such an insufficiency on the terminal apparatus itself; as opposed to the contrivance mentioned above, the current state of the art, as described below, requires a service which allows the terminal apparatus having such an insufficiency to perform the processing without making any delegation while still under such an insufficient condition, however, such a service has not been made available so far.

For example, applying the workings of the scheme described in the Japanese Laid-open Patent Publication No. 2001-298391 to another scheme other than a communications scheme does not enable processing even when a simplified apparatus is located at a place where it is possible for the simplified apparatus to conduct communications with a processing target apparatus provided that the simplified apparatus is insufficient in terms of its function or security for carrying out the processing, the processing target apparatus is not provided with a wide area communications function, and a standard apparatus is located away from the simplified apparatus and the processing target apparatus.

In addition, regarding ticket examination processing of a transferred electronic ticket or electronic settlement processing, taking a case of the ticket examination processing thereof as an example here, it is not possible to carry out the ticket examination processing even in a case where a simplified apparatus, the user of which wishes to use the ticket, is located within the communication-accessible area of a ticket examination machine provided that a standard apparatus is located away from the ticket examination machine, on the assumption that the ticket examination machine is not provided with a wide area communications function, nor is the simplified apparatus provided with a ticket presentation function (a processing target apparatus here corresponds to a settlement machine such as the ticket examination machine, a POS terminal, and so forth).

Furthermore, regarding the transfer of the ticket and the examination of the transferred ticket, it is possible to see correspondences between the standard apparatus and a terminal held by a member of a ticket service (hereafter referred to as a member terminal), and between the simplified apparatus and a terminal held by a non-member of the ticket service (hereafter referred to as a non-member terminal), respectively; herein:
1. According to a scheme which requires both a transferor of a ticket and a transferee of the ticket to be members who should possess member-only devices or programs, it is troublesome to have a non-member who wishes to go through the processing of ticket examination just only once download such a program or have him / her possess such a device. Alternatively, according to a scheme which also provides non-members with otherwise member-only programs or member-only tickets, there is the fear of the analysis / leaking-out of the program or the data and abuse thereof.
2. In the case of the occurrence of a trouble in relation to the use of a ticket by a non-member, it is ambiguous where the responsibility for the trouble rests.
3. The adoption of a scheme which uses different ticket examination procedures between the case of ticket examination processing performed for use of a normal ticket and the case of ticket examination processing performed for use of a transferred ticket requires further cost related to production and proliferation of ticket examination machines.
4. A scheme in which tickets are to be transferred via a server requires a higher communications cost in comparison with a scheme in which ticket transfer is performed directly between terminals.
5. As a scheme which allows a non-member as well as a member to use a ticket without providing the non-member with the ticket, it is possible to conceive methods such as one in which a member is provided with a type of ticket each of which allows two persons to pass through ticket examination or another one in which a member purchases a plural number of tickets and goes through ticket examination processing by presenting one copy for the member himself / herself and at the same time depositing another copy of the ticket for the non-member to a ticket examination machine, and having the non-member go through the ticket examination processing using the deposited ticket; however, the former method has a limitation in that it is not possible for a member and a non-member to pass through examination unless both of the member and the non-member are present at the same time, and the latter method has a limitation in terms of the processing order of ticket examination, that is, the non-member is allowed to pass through examination only after the member.

Various problems have been left unaddressed as enumerated above.

### DESCRIPTION OF THE INVENTION

The object of the present invention is to provide a service processing apparatus, a processing support apparatus, and a method thereof which increase the freedom of use modes to enhance ease of use considerably.

This object is attained by having an apparatus which requests processing (a simplified apparatus) communicate with an apparatus which provides a support for the processing (a standard apparatus) while the simplified apparatus's also communicating with an apparatus which is the object of the processing (a processing target apparatus) at the same time, and by generating a communication path between the apparatus which provides the support for the processing (the standard apparatus) and the apparatus which is the object of the processing (the processing target apparatus) inside the simplified apparatus.

This produces the effect of enabling processing even in a situation where, for example, the processing target apparatus is not provided with a wide area communications function and the standard apparatus is located away from the simplified apparatus requesting the processing and the processing target apparatus as long as the simplified apparatus is located within the communication-accessible area of the processing target apparatus.

Furthermore, when the present invention is applied to the examination of a transferred ticket, it is possible to provide a solution to each of the above-mentioned problems; that is,
1. It is not necessary to provide non-members with otherwise member-only information and/or content, or a program for dealing with such information and/or content.
2. Because an approval given by a member at a member terminal side is required for using member-only information and/or content, it is clear where the responsibility rests at the time of the occurrence of a trouble in relation to the use of a ticket by a non-member.
3. The same processing may be performed by a ticket examination machine in the case of processing performed by a non-member under the approval from a member as that performed in the case of processing performed by a member.
4. A lower communications cost is achieved because it is possible to conduct communications between a member terminal and a non-member terminal without going by way of a server.
5. It is not necessary for a person who requests processing and a person who performs processing upon reception of the request to be present at the same time of ticket examination processing, and it is possible for the both persons to go through ticket examination processing regardless of which person has gone through the processing earlier.

The effects as enumerated above are produced.

### BRIEF DESCRIPTION OF THE DRAWINGS

FIG. 1 is a diagram illustrating that a standard apparatus communicates with a processing target apparatus through a simplified apparatus in Embodiments 1 and 2 of the present invention;
FIG. 2 is a flowchart illustrating processing in Embodiment 1 of the present invention;
FIG. 3 is a flowchart illustrating processing in Embodiment 2 of the present invention;
FIG. 4A is a diagram illustrating an example of data provided by a simplified apparatus to a standard apparatus in advance processing in Embodiments 1 and 2 of the present invention;
FIG. 4B is a diagram illustrating an example of data provided by a standard apparatus to a simplified apparatus in advance processing in Embodiments 1 and 2 of the present invention;
FIG. 5 is a diagram illustrating ticket examination processing which is performed by a non-member using a ticket held within a member terminal in Embodiment 3 of the present invention;
FIG. 6 is a diagram illustrating normal ticket examination processing in Embodiment 3 of the present invention;
FIG. 7 is a flowchart illustrating normal ticket examination processing in Embodiments 3 and 4 of the present invention;
FIG. 8A is a schematic line diagram illustrating the contents of advance processing request information;
FIG. 8B is a schematic lin.e diagram illustrating the contents of response information in response to an advance processing request;
FIG. 9 is a flowchart illustrating one example of a flow for ticket examination processing which is performed by a non-member using a ticket held within a member terminal in Embodiment 3 of the present invention;
FIG. 10A is a diagram illustrating an example of data transferred from a non-member terminal to a member terminal in advance processing performed before ticket examination in Embodiments 3 and 4 of the present invention;
FIG. 10B is a diagram illustrating an example of data transferred from a member terminal to a non-member terminal in advance processing performed before ticket examination in Embodiments 3 and 4 of the present invention;
FIG. 11 is a diagram illustrating one example of ticket examination processing which is performed by a non-member using a ticket held within a member terminal in Embodiment 4 of the present invention;
FIG. 12 is a flowchart illustrating one example of a flow for ticket examination processing which is performed by a non-member using a ticket held within a member terminal in Embodiment 4 of the present invention;
FIG. 13 is a diagram illustrating an example of data stored in a criteria storage section in Embodiment 4 of the present invention;
FIG. 14 is a diagram illustrating normal ticket examination processing in Embodiment 4 of the present invention;
FIG. 15 is a diagram illustrating settlement processing which is performed by a non-member using settlement information within a member terminal in Embodiment 5 of the present invention;
FIG. 16 is a flowchart illustrating one example of a flow for settlement processing which is performed by a non-member using settlement information within a member terminal in Embodiment 5 of the present invention;
FIG. 17A is a diagram illustrating an example of data transferred from a non-member terminal to a member terminal in advance processing performed before settlement in Embodiments 5 and 6 of the present invention;
FIG. 17B is a diagram illustrating an example of data transferred from a member terminal to a non-member terminal in advance processing performed before settlement in Embodiments 5 and 6 of the present invention;
FIG. 18 is a diagram illustrating settlement processing which is performed by a non-member using settlement information within a member terminal in Embodiment 6 of the present invention;
FIG. 19 is a flowchart illustrating one example of a flow for settlement processing which is performed by a non-member using settlement information within a member terminal in Embodiment 6 of the present invention;
FIG. 20 is a diagram illustrating an example of data stored in a criteria storage section in Embodiment 6 of the present invention;
FIG. 21 is a functional block diagram for each apparatus in Embodiment 7 of the present invention;
FIG. 22 is a diagram illustrating ticket examination processing which is performed by a member in Embodiment 7 of the present invention;
FIG. 23 is a diagram illustrating extracted functions which are necessary for processing which is performed in advance processing;
FIG. 24 is a flowchart illustrating advance processing in Embodiment 7 of the present invention;
FIG. 25A is a diagram illustrating a configuration example of advance processing request data sent from a non-member terminal to a member terminal in Embodiment 7 of the present invention;
FIG. 25B is a diagram illustrating a configuration example of response data sent from a member terminal to a non-member terminal in response to an advance processing request in Embodiment 7 of the present invention;
FIG. 25C is a diagram illustrating a configuration example of ticket examination inquiry request data sent from a non-member terminal to a ticket examination machine in Embodiment 7 of the present invention;
FIG. 25D is a diagram illustrating a configuration example of response data sent from a ticket examination machine to a non-member terminal in response to a ticket examination inquiry request in Embodiment 7 of the present invention;
FIG. 25E is a diagram illustrating a configuration example of ticket examination request data sent from a non-member terminal to a member terminal in Embodiment 7 of the present invention;
FIG. 25F is a diagram illustrating a configuration example of ticket examination command data sent from a member terminal to a ticket examination machine by way of a non-member terminal in Embodiment 7 of the present invention;
FIG. 26A is a diagram illustrating an example of advance information sent from a non-member terminal to a member terminal in advance processing in Embodiment 7 of the present invention;
FIG. 26B is a diagram illustrating an example of advance information sent from a member terminal to a non-member terminal in advance processing in Embodiment 7 of the present invention;
FIG. 27 is a flowchart illustrating ticket examination processing which is performed by a non-member in Embodiment 7 of the present invention;
FIG. 28A is a sequence chart illustrating advance processing in Embodiment 7 of the present invention;
FIG. 28B is a sequence chart illustrating ticket examination processing which is done by a non-member in Embodiment 7 of the present invention;
FIG. 29 is a functional block diagram for each apparatus in a case where the apparatus is provided with a criteria storage section and a use approval judgment section in Embodiment 7 of the present invention;
FIG. 30 is a diagram illustrating an example of data stored in a criteria storage section in a case where an apparatus is provided with the criteria storage section and a use approval judgment section in Embodiment 7 of the present invention;
FIG. 31 is a functional block diagram for each apparatus in Embodiment 8 of the present invention;
FIG. 32A is a diagram illustrating an example of advance information sent from a non-member terminal to a member terminal in advance processing in Embodiment 8 of the present invention;
FIG. 32B is a diagram illustrating an example of advance information sent from a member terminal to a non-member terminal in advance processing in Embodiment 8 of the present invention;
FIG. 33 is a flowchart illustrating settlement processing which is performed by a non-member in Embodiment 8 of the present invention;
FIG. 34A is a sequence chart illustrating advance processing in Embodiment 8 of the present invention;
FIG. 34B is a sequence chart illustrating settlement processing which is done by a non-member in Embodiment 8 of the present invention;
FIG. 35A is a diagram illustrating a configuration example of advance processing request data sent from a non-member terminal to a member terminal in Embodiment 8 of the present invention;
FIG. 35B is a diagram illustrating a configuration example of response data sent from a member terminal to a non-member terminal in response to an advance processing request in Embodiment 8 of the present invention;
FIG. 35C is a diagram illustrating a configuration example of settlement inquiry request data sent from a non-member terminal to a settlement machine in Embodiment 8 of the present invention;
FIG. 35D is a diagram illustrating a configuration example of response data sent from a settlement machine to a non-member terminal in response to a settlement inquiry request in Embodiment 8 of the present invention;
FIG. 35E is a diagram illustrating a configuration example of settlement request data sent from a non-member terminal to a member terminal in Embodiment 8 of the present invention;
FIG. 35F is a diagram illustrating a configuration example of settlement command data sent from a member terminal to a settlement machine by way of a non-member terminal in Embodiment 8 of the present invention;
FIG. 36 is a functional block diagram for each apparatus in a case where the apparatus is provided with a criteria storage section and a settlement approval judgment section in Embodiment 8 of the present invention;
FIG. 37 is a diagram illustrating an example of data stored in a criteria storage section in a case where an apparatus is provided with the criteria storage section and a use approval judgment section in Embodiment 8 of the present invention;
FIG. 38A is a diagram illustrating the combination status of information and functions in a simplified apparatus and a standard apparatus.
FIG. 38B is a diagram illustrating the combination status of information and functions in a simplified apparatus and a standard apparatus.
FIG. 38C is a diagram illustrating the combination status of information and functions in a simplified apparatus and a standard apparatus.
FIG. 39 is a diagram illustrating a processing flow between each of apparatuses in Embodiment 9 of the present invention;
FIG. 40 is a flowchart illustrating a processing flow in Embodiment 9 of the present invention; and
FIG. 41 is a diagram illustrating a processing flow between each of apparatuses in Embodiment 10 of the present invention.

### BEST MODE FOR CARRYING OUT THE INVENTION

Embodiments of the present invention will be described below with reference to the accompanying drawings. It is noted that the present invention is in no case limited to these embodiments; the present invention is able to be exploited in various kinds of modes within the range where the gist of the present invention is maintained.

### (Embodiment 1)

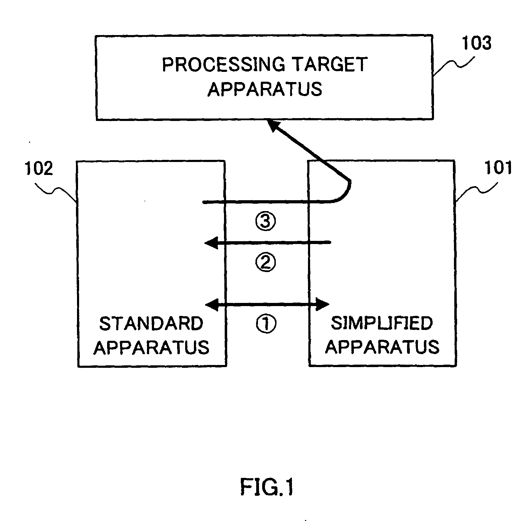

FIG. 1 is a diagram illustrating a processing flow between each of apparatuses in Embodiments 1 and 2 according to the present invention.

In FIG. 1, simplified apparatus 101 is provided with a function to conduct communications with another apparatus, a function to request processing to said another apparatus, and a function to give an approval for an authorized apparatus to conduct communications with some other apparatus other than said another apparatus by having the authorized apparatus going through the simplified apparatus 101 itself, and standard apparatus 102 is provided with a function to conduct communications with another apparatus, and a function for an input or execution of a judgment on an approval / disapproval upon reception of a processing request from said another apparatus.

Processing target apparatus 103 conducts communications with either simplified apparatus 101 or standard apparatus 102 to perform some kind of processing (for example, in a case of a ticket examination system or a settlement processing system and so on, simplified apparatus 101 and standard apparatus 102 correspond to mobile phones, PDAs, notebook-sized personal computers, and so forth, while processing target apparatus 103 corresponds to a ticket examination machine, a settlement machine, and so forth).

That is, when the user of simplified apparatus 101 wishes to perform some kind of processing with processing target apparatus 103 on the other end, even if simplified apparatus 101 alone is not able to do so because simplified apparatus 101 is insufficient in terms of its functions or security, it is made to look as if simplified apparatus 101 were performing the processing with processing target apparatus 103 on the other end through the coordination of simplified apparatus 101 with standard apparatus 102. Namely, simplified apparatus 101 has exchanged information (advance processing) with standard apparatus 102 in advance [①], and makes some kind of a request, which is required for the processing with processing target apparatus 103 on the other end, to standard apparatus 102 based on the advance processing information at the occasion of the actual execution of the processing with processing target apparatus 103 on the other end [②], while standard apparatus 102 executes the processing with processing target apparatus 103 on the other end not in direct communications but by way of simplified apparatus 101 upon reception of the processing request [③].

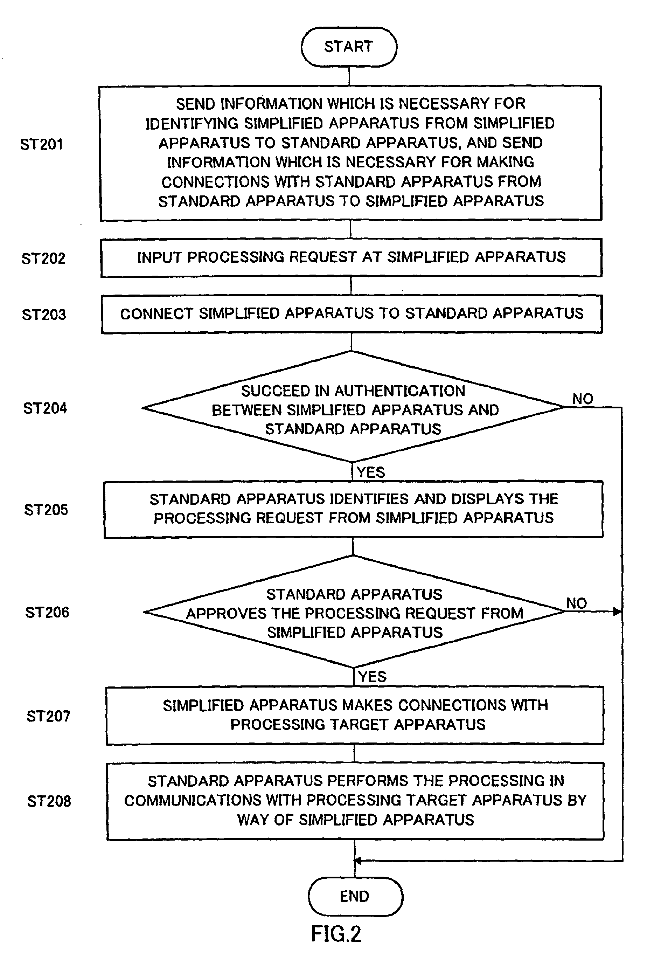

Next, a processing flow in Embodiment 1 is described below with reference to FIG. 1 and FIG. 2.

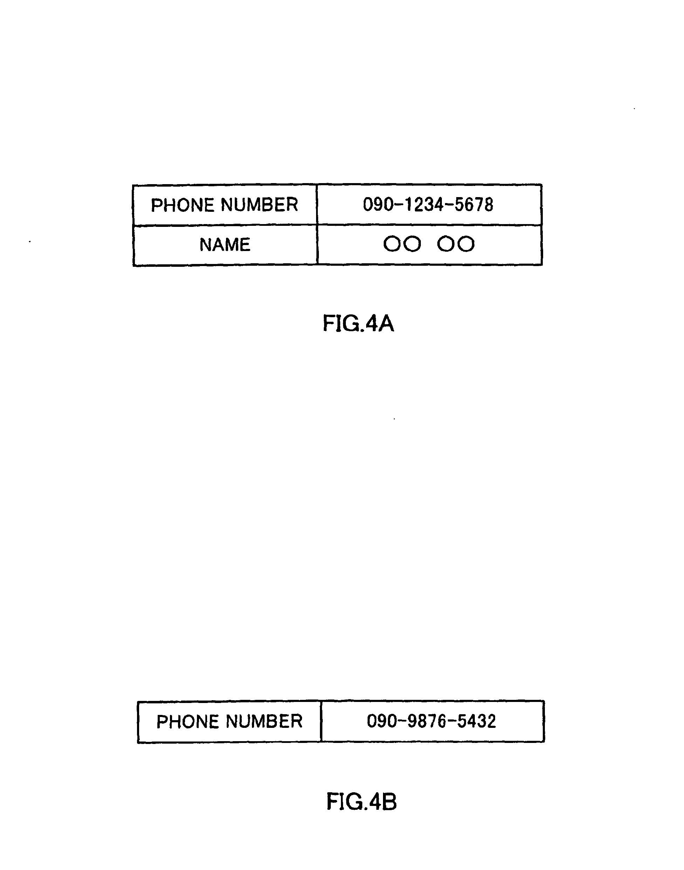

In advance, simplified apparatus 101 provides information which is necessary for identifying simplified apparatus 101 to standard apparatus 102, while standard apparatus 102 provides information which is necessary for making connections to standard apparatus 102 to simplified apparatus 101 (step ST 201). An example of data transferred in advance processing is illustrated in FIG. 4. Herein, in a case where both simplified apparatus 101 and standard apparatus 102 are mobile phones, each apparatus has exchanged information for identification of the apparatus itself with the other, that is, the telephone number (and the name) of the user of simplified apparatus 101, which is used for identification of simplified apparatus 101 by standard apparatus 102, provided from simplified apparatus 101 to standard apparatus 102 [FIG. 4(A)], and in reverse, the telephone number of standard apparatus 102, which is used for the identification of standard apparatus 102 by simplified apparatus 101, provided from standard apparatus 102 to simplified apparatus 101 [FIG. 4(B)].

Upon accepting an input of a processing request at simplified apparatus 101 (step ST 202), simplified apparatus 101 generates a communication path between standard apparatus 102 and processing target apparatus 103 within simplified apparatus 101 itself, and standard apparatus 102 performs the processing in communications with processing target apparatus 103 by way of simplified apparatus 101. As a series of procedures to be performed after the advance processing, for example, it is possible to cite methods as described below.
1. Simplified apparatus 101 sends a connection request to processing target apparatus 103, while processing target apparatus 103 makes a request for processing to simplified apparatus 101 upon reception of the request. Next, simplified apparatus 101 sends a connection request to standard apparatus 102, and simplified apparatus 101 and standard apparatus 102 perform authentication to make connections between them. Simplified apparatus 101 makes a request to standard apparatus 102 for the execution of a part of processing which the simplified apparatus itself is unable to execute among the entire processing requested by processing target apparatus 103. Next, standard apparatus 102 identifies the contents of the request from simplifiedapparatus101anddisplaystheidentified contents, and prompts the user of standard apparatus 102 to enter either an approval / disapproval to the processing request. In a case where the request is approved, standard apparatus 102 executes the processing requested from simplified apparatus 101 in communications with processing target apparatus 103 by way of simplified apparatus 101 (a flowchart is omitted).
2. Simplified apparatus 101 sends a connection request to processing target apparatus 103, while processing target apparatus 103 makes a request for processing to simplified apparatus 101 upon reception of the request. Next, simplified apparatus 101 sends a connection request to standard apparatus 102, and simplified apparatus 101 and standard apparatus 102 perform authentication to make connections between them. Simplified apparatus 101 sends all part of the processing request received from processing target apparatus 103 to standard apparatus 102, and makes a request to standard apparatus 102 for processing. Next, standard apparatus 102 identifies the contents of the request from simplified apparatus 101 and displays the identified contents, and prompts the user of standard apparatus 102 to enter either an approval / disapproval to the processing request. In a case where the request is approved, standard apparatus 102 executes the processing requested from simplified apparatus 101 in communications with processing target apparatus 103 by way of simplified apparatus 101 (a flowchart is omitted).
3. Simplified apparatus 101 performs authentication between simplified apparatus 101 itself and standard apparatus 102 using information provided in advance, and makes connections to standard apparatus 102 (steps ST 203, 204). Upon establishment of connections between simplified apparatus 101 and standard apparatus 102, standard apparatus 102 identifies the contents of the request from simplified apparatus 101, and displays the identified contents (step ST 205). The user of standard apparatus 102 enters an approval / disapproval to the requested processing (step ST 206). In a case where the request is given an approval, simplified apparatus 101 makes connections with processing target apparatus 103 (step ST 207), and standard apparatus 102 performs the processing in communications with processing target apparatus 103 by way of simplified apparatus 101 by using these communication paths (step ST 208).

It is noted that authentication herein may be made in various kinds of methods including without limitation a simple method such as identification of a connection partner terminal based on information exchanged in advance processing, a complex one which employs a signature and so on, and there is no intention to limit the authentication in one specified method.

It is noted that as a basis of differentiation between simplified apparatus 101 and standard apparatus 102, factors such as information which is required for execution of processing (such as an electronic ticket or a monetary amount), functions, security, authority (such as the difference in the authority given to the user of each apparatus), the contents of a contract, and so on are conceivable, and hereafter, these are collectively called as capabilities.

By using the method as described above, even in a case where simplified apparatus 101 is insufficient in its capabilities and thus has a problem in executing processing in direct communications with processing target apparatus 103, standard apparatus 102, which is provided with a sufficient capabilities, executes the processing in communications with processing target apparatus 103 by way of simplified apparatus 101, thereby producing the same effects as that would be produced in a case where simplified apparatus 101 were able to execute the processing in direct communications with processing target apparatus 103.

Herein, it is noted that regarding the status of simplified apparatus 101, there are statuses such as a status in which simplified apparatus 101 does not know which kind of processing should be performed with processing target apparatus 103 on the other end, and another status in which simplified apparatus 101 knows the contents of the processing which should be performed with processing target apparatus 103 on the other end, however, simplified apparatus 101 is unable to execute the processing due to an insufficiency or a limitation in its capabilities.

In the case of the former status, the adoption of the above-described procedure 1 or 2 produces an effect in that simplified apparatus 101 is able to learn which kind of processing should be requested to standard apparatus 102. Specifically, the above-described procedure 1 is suitable in a case where simplified apparatus 101 is able to judge the processing-feasibility of the processing requested from processing target apparatus 103, while the above-described procedure 2 is suitable in a case where simplified apparatus 101 is not able to judge the processing-feasibility of the processing requested from processing target apparatus 103.

On the other hand, in the case of the latter status, the adoption of the above-described procedure 3 produces an effect in that simplified apparatus 101 does not conduct communications with processing target apparatus 103 until an approval is given by standard apparatus 102, which makes it unnecessary for simplified apparatus 101 to conduct communications with processing target apparatus 103 in the case of a disapproval by standard apparatus 102.

### (Embodiment 2)

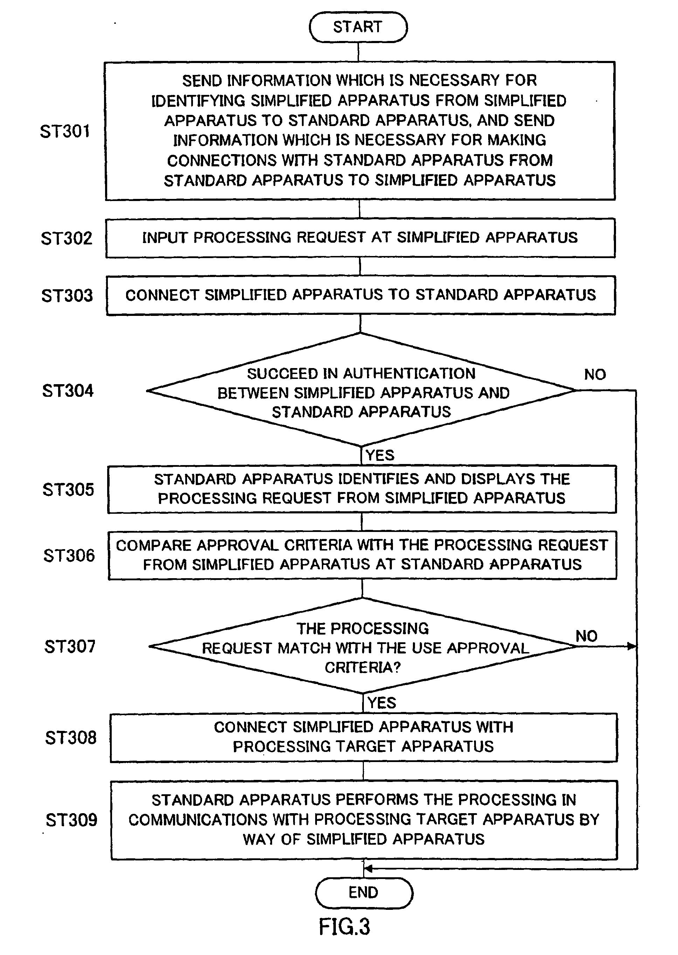

Next, an explanation is given below on Embodiment 2 according to the present invention with reference to FIG. 1 and FIG. 3.

In the case of Embodiment 1, at the side of a standard apparatus, the user of standard apparatus 102 enters an approval / disapproval to requested processing upon reception of a processing request from simplified apparatus 101; in contrast, according to the present embodiment, processing approval criteria are stored in a standard apparatus, and then a request from simplified apparatus 101 is checked against the stored criteria to automatically provide a judgment on whether the processing is approved / disapproved.

In advance, simplified apparatus 101 provides information which is necessary for identifying simplified apparatus 101 to standard apparatus 102, while standard apparatus 102 provides information which is necessary for making connections to standard apparatus 102 to simplified apparatus 101 (step ST 301).

Upon accepting an input of a processing request at the simplified apparatus (step ST 302), the simplified apparatus generates a communication path between the standard apparatus and processing targetapparatus103withinthesimplifiedapparatus itself, and the simplified apparatus has the standard apparatus execute the requested processing in communications with the processing target apparatus. This step is the same as that in Embodiment 1, and procedures to be followed thereafter are explained below with the assumption that the procedure 3 in Embodiment 1 is adopted.

The simplified apparatus performs authentication between the simplified apparatus itself and the standard apparatus using information provided in advance, and makes connections to the standard apparatus (steps ST 303, 304). Upon establishment of connections between the simplified apparatus and the standard apparatus, the standard apparatus identifies the contents of the request from the simplified apparatus (step ST 305), and compares the processing approval criteria stored in the standard apparatus itself with the processing request from the simplified apparatus (step ST 306) to provide a judgment whether the request is approved / disapproved (step ST 307). In a case where the request is given an approval, the simplified apparatus makes connections with the processing target apparatus (step ST 308), and standard apparatus 102 performs the processing in communications with processing target apparatus 103 by way of simplified apparatus 101 by using these communication paths (step ST 309) ; in a case where the request is not given an approval, the simplified apparatus is not allowed to carry through the processing with the processing target apparatus on the other end.

As described above, according to the present embodiment, in addition to the effect in Embodiment 1, there is a further effect in that it is not necessary to enter an approval / disapproval on a standard apparatus at each time of receiving a request from a simplified apparatus and that it is possible to automatically judge whether it is approved / disapproved, which also reduces the burden of trouble and time required for processing for the benefit of the user of the standard apparatus.

### (Embodiment 3)

In this embodiment, an explanation is given on a case where service models described in Embodiments 1 and 2 are applied to ticket examination processing (here, processing target apparatus 103 corresponds to a ticket examination machine, simplified apparatus 101 corresponds to a non-member terminal, which is not provided with ticket examination processing capabilities, and standard apparatus 102 corresponds to a member terminal, which is provided with ticket examination processing capabilities).

A ticket described here is an electronic ticket, and a user stores such a ticket in a member terminal, and uses the ticket at the time of ticket examination through communications between a ticket examination machine and a terminal. For example, it is possible to conceive an application such as theexecutionofticketexaminationprocessingwhich is performed by making communications, at the time of ticket examination, with a ticket examination machine, which is placed at the entrance of the venue for a movie, concert, and the like, where a purchased ticket for such an event has been downloaded by a user in a handheld terminal. Furthermore, the applying of the present application to ticket examination processing enables a non-member of a service, who does not possess a medium such as a device or a program for handling a ticket or is not given an authority for doing so (hereafter referred to as a non-member), to use the ticket which is possessed by a service member, who possesses such a medium or is given such an authority (hereafter referred to as a member).

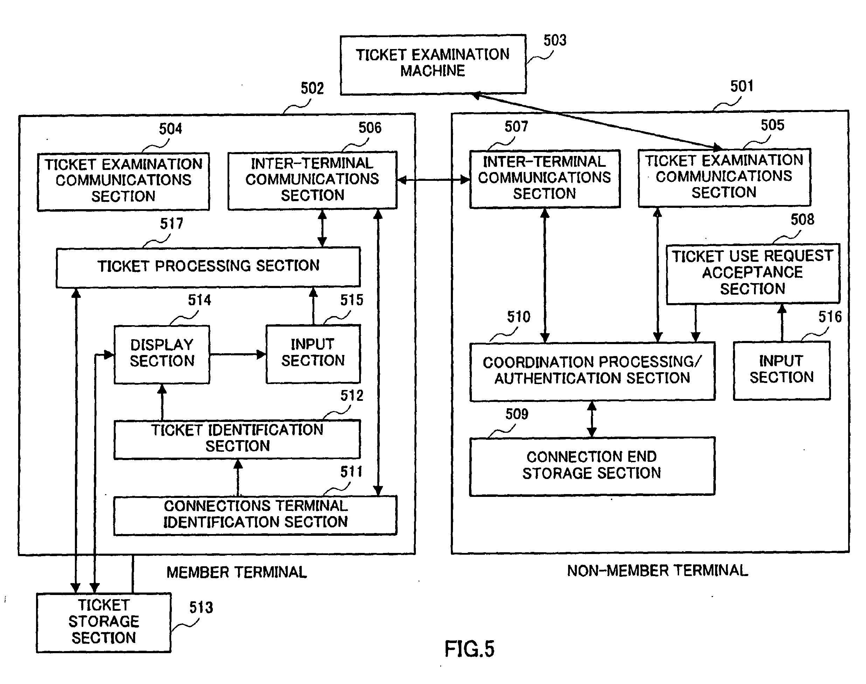

FIG. 5 is a diagram illustrating a method as to how a ticket possessed by a member-terminal is used with a non-member terminal in Embodiment 3. In FIG. 5, reference numeral 501 is a non-member terminal, while reference numeral 502 is a member terminal. Reference numeral 503 is a ticket examination machine for execution of ticket examination. In this embodiment, an explanation is given with an example of mobile phones both for the member terminal and non-member terminal, however they are not limited to mobile phones, but they may be other mobile terminals such as PDAs, notebook-sized personal computers, and so on. Reference numerals 504 and 505 are ticket examination communications sections for making communications between the terminals and the ticket examination machine respectively, and they may be a public switched telephone network, Bluetooth, IrDA, and so forth.

Reference numerals 506 and 507 are inter-terminal communications sections for making communications between the terminals, and they may be a public switched telephone network, Bluetooth, IrDA, and so forth. In addition, they may be the same media as that of the ticket examination communications sections.

Ticket use request acceptance section 508 is a section that accepts an input from the user who is a non-member for requesting the use of the ticket.

Connection end storage section 509 is a section that stores the terminal information of the other end of connections which is required for making connections.

Coordination processing / Authentication section 510 is a section that makes connections with a member terminal which is indicated by the information stored in the connection end storage section, and has the other end of connections perform authentication of the requesting terminal itself.

Connection terminal identification section 511 is a section that identifies a connection partner terminal.

Ticket identification section 512 is a section that identifies a ticket which is requested to be used by a communication partner.

Ticket storage section 513 is a section that stores the possessed ticket, and the section 513 may be a tamper-resistant module, tamper-resistant software, an IC chip, a memory, and so on.

Display section 514 is a section that displays the ticket identified by the ticket identification section.

Input sections 515 and 516 are sections that the user enters a confirmation and a request for the use of the ticket therein.

Ticket processing section 517 is a section that executes the processing for the use of the ticket.

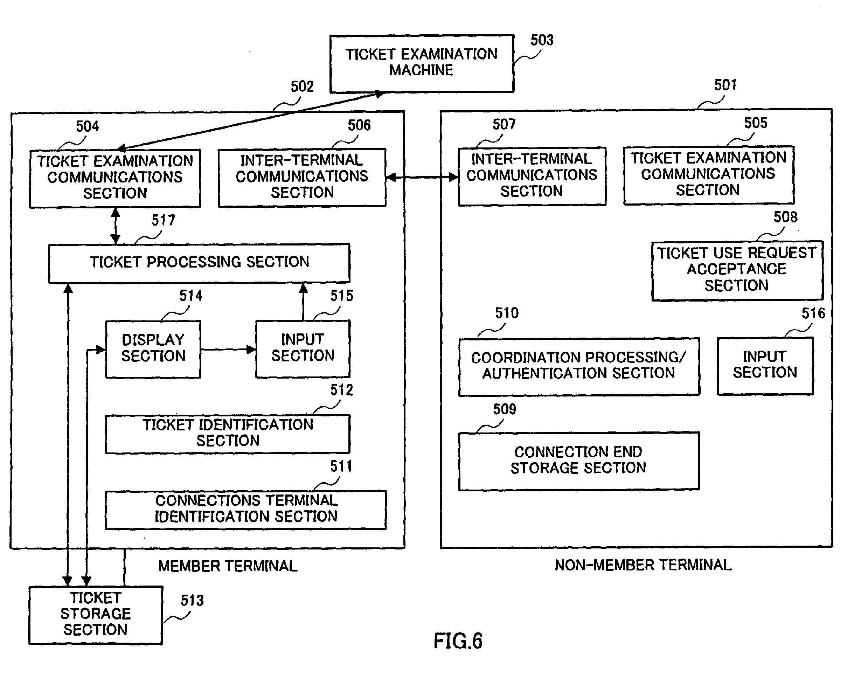

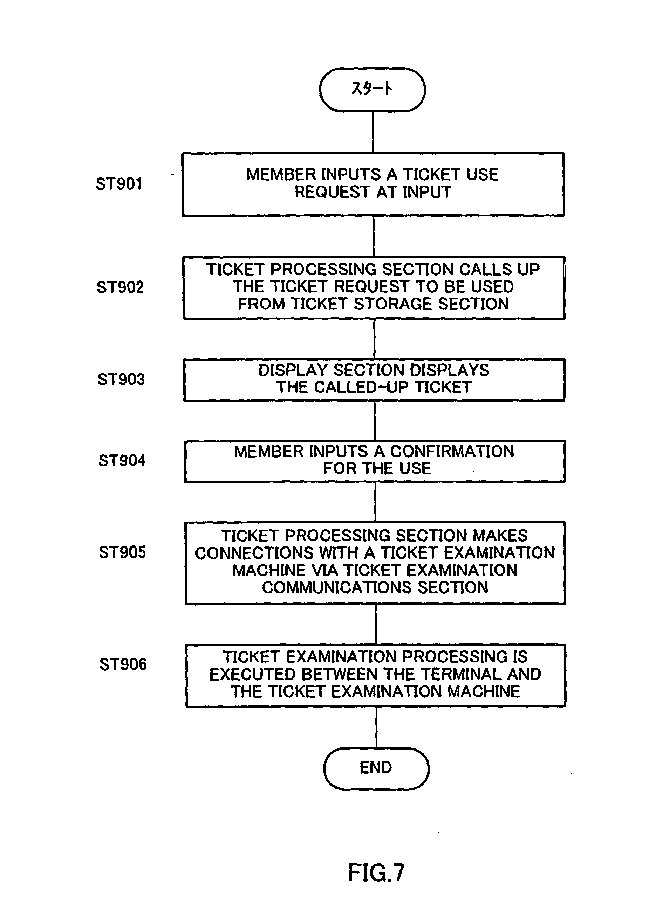

First, the processing flow for execution of normal ticket examination, which is performed by a member, who possesses a ticket, is explained below with reference to FIG. 6 and FIG. 7. In FIG. 6, however, the identical reference numerals are assigned to the parts identical to those in FIG. 5, and their detailed explanation is omitted here.

Upon acceptance of an input for requesting the use of a ticket at input section 515 (step ST 901), the ticket requested to be used is called up from ticket storage section 513 at ticket processing section 517 (step ST 902), and the called-up ticket is displayed on display section 514 (step ST 903).

Upon acceptance of an input for confirming the use of the ticket at input section 515 (step ST 904), ticket processing section 517 conducts communications with a ticket examination machine 503 via ticket examination communications section 504 (step ST 905), and executes ticket examination processing with the ticket examination machine on the other end (step ST 906). Herein, the ticket examination processing such as a kind of processing for rewriting the contents of the ticket to label the ticket as the already-used one may be performed either at the side of the ticket examination machine or the side of the member terminal.

Next, the processing flow for execution of ticket examination, which is performed by a non-member by using a ticket which is possessed by a member, is explained below with reference to FIG. 5, FIG. 8, and FIG. 9.

In this embodiment, through the exchanging of information between non-member terminal 501 and member terminal 502 in advance (advance processing), non-member terminal 501 is able to execute processing (ticket examination processing, settlement processing, and so on) with ticket examination machine 503 on the other end in coordination with member terminal 502 at the time when a necessity arises.

For the execution of this advance processing, an explanation on the preconditions for the execution of the advance processing is given below. As the precondition, functions which are provided in non-member terminal 501 in advance include a communications connection function for connections with member terminal 502, a communications connection function for connections with a processing target apparatus, and a program downloading function (such as an Internet browser), while functions which are provided in member terminal 502 in advance include a communications connection function for connections with non-member terminal 501, and a program downloading function (such as an Internet browser). Notwithstanding the above, member terminal 502 may further be provided with a communications connection function for connections with ticket examination machine 503 as its pre-provided function. Such a further function is, in this embodiment, not to be used for direct communications with ticket examination machine 503 when member terminal 502 just provides a support for the processing, however, the function is used in a situation where the member himself / herself, who is the user of this member terminal 502, uses a service which involves communications with ticket examination machine 503.

It is noted that as the communication connection functions which are respectively provided to non-terminal 501 and member terminal 502 in advance, there is, for example, a telephone function, an infrared data communications function, and so on, and the communications connection function for connections with non-member terminal 501 or member terminal 502 may be either a different type from or the identical type to the communications connection function for connections with ticket examination machine 503.

In addition, the user of this non-member terminal 501 (non-member) is assumed to know where to make connections with member terminal 502 (the address thereof) in advance.

Under these preconditions, a service provider (a company which provides electronic tickets) has presented a Web site which is accessible through the browser of non-member terminal 501 and the browser of member terminal 502 respectively, and has made a non-member program ready to be downloaded from this Web site to non-member terminal 501, while having made a member program ready to be downloaded from this Web site to member terminal 502. For further information, the member program is a program which becomes downloadable upon completion of member registration, while the non-member program is a program which is downloadable freely without any member registration.

Among the functions held by the member program are: a function to transmit a processing command (ticket examination command) to either ticket examination machine 503 or non-member terminal 501 and a function to store information which is necessary for the processing (ticket data) inside member terminal 502.

In addition, among the functions held by the non-member program are: a function to transmit an advance processing request (including identification information for identifying non-member terminal 501), a function to transmit a processing support request (ticket examination request) to member terminal 502, a function to receive from member terminal 502 a response (ticket examination command) which is a response to the processing support request, and to transmit the received response to ticket examination machine 503, and a function to make an inquiry about the contents of the processing to ticket examination machine 503.

The user of member terminal 502 (member) downloads the member program from the Web site into member terminal 502 at the time of subscription to the service. In addition, it becomes possible for the user of non-member terminal 501 to execute the advance processing, which is described below, by downloading the non-member program from the Web site into non-member terminal 501 at the occasion when s/he wishes to use the service (ticket examination).

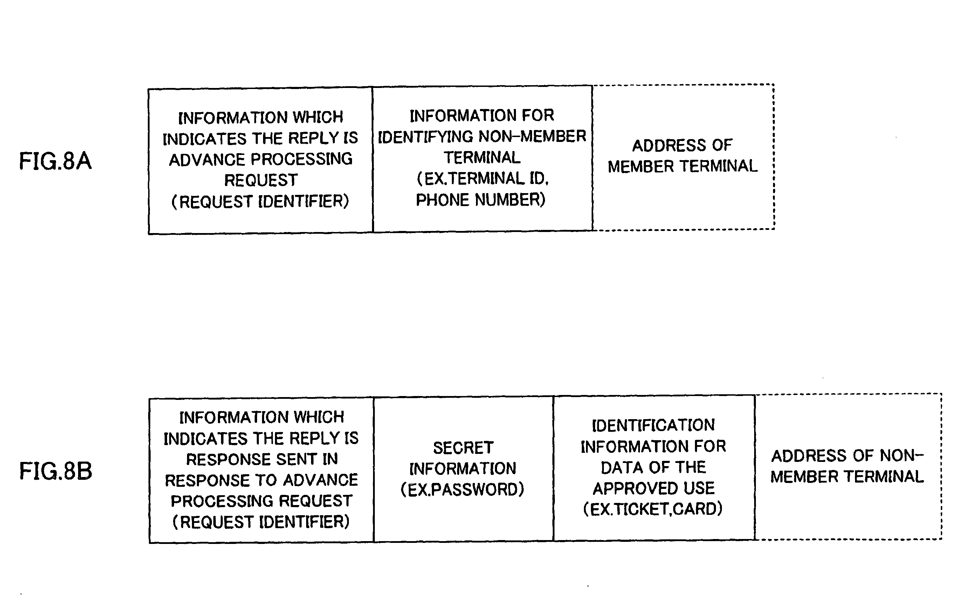

Next, an explanation is given here on the contents of the advance processing. In response to manipulation by the user of non-member terminal 501 (non-member), non-member terminal 501, in which a non-member program is downloaded, sends advance processing request information (information required for advance processing) to member terminal 502, which is used by a member (in which a member programhasalreadybeendownloaded).Asillustrated in FIG. 8 (a), information sent from non-member terminal 501 as the advance processing request information contains, information which indicates that the sent information is advance processing request information (request identifier), information for identification of non-member terminal 501 (for example, its terminal ID, telephone number, and so forth), and the address of member terminal 502).

Upon reception of the advance processing request information from non-member terminal 501, member terminal 502 sends secret information which is necessary for authentication as a response to the advance processing request to non-member terminal 501. As illustrated in FIG. 8(b), information sent from member terminal 502 as the response to the advance processing request contains, information which indicates that the sent information is a response to the advance processing request (request identifier), secret information used for authentication (such as a password), the address of non-member terminal 501, and data of the approved use (such as ticket identification information). The data of the approved use is information which indicates the kinds of tickets which are approved to be used by the user of non-member terminal 501, and in the advance processing, in a case where the kinds of the tickets which are approved by the member, who is the user of member terminal 502, to be used by the non-member, who is the user of non-member terminal 501, have been chosen, it is possible to send the data of such approved uses to non-member terminal 501 as the response to the advance processing request. Accordingly, upon reception of the data of the approved use at non-member terminal 501, the received data is displayed, which allows the non-member who looks at the displayed data to learn which data is approved by the member for use; this eliminates the waste of requesting data which is not approved for use at the occasion of sending a processing support request to member terminal 502 after advance processing, thereby attaining a smooth processing.

Alternatively, in the step of advance processing, member terminal 502 may not send data which is approved to be used by non-member terminal 501 to non-member terminal 501. In such a case, it follows that only preparation for authentication is performed in the step of the advance processing by transmitting secret information, and member terminal 502 notifies data of the approved use to non-member terminal 501 at each time when the non-member, who uses non-member terminal 501, makes a request for use. Such an alternative is effective in a case where a non-member requests processing (ticket examination processing in which a ticket is used, settlement processing in which a card is used, and so forth) to the same requested person repeatedly, for example, in a case where the non-member, who uses non-member terminal 501, makes requests to a member, who uses member terminal 502, for the same kind of processing in a repeated manner, just as in a case where a non-member makes a request, at a certain time, to a member for ticket examination processing in which a certain ticket is used, while the non-member makes a request, at another time, to the same member for ticket examination processing in which another ticket is used, or in a case where the non-member makes a request to the member for different kinds of processing in a repeated manner, just as in a case where a non-member makes a request, at a certain time, to a member for ticket examination processing in which a ticket is used for processing, while the non-member makes a request, at another time, to the same member for settlement examination processing in which a card is used for processing.

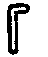 X1 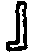

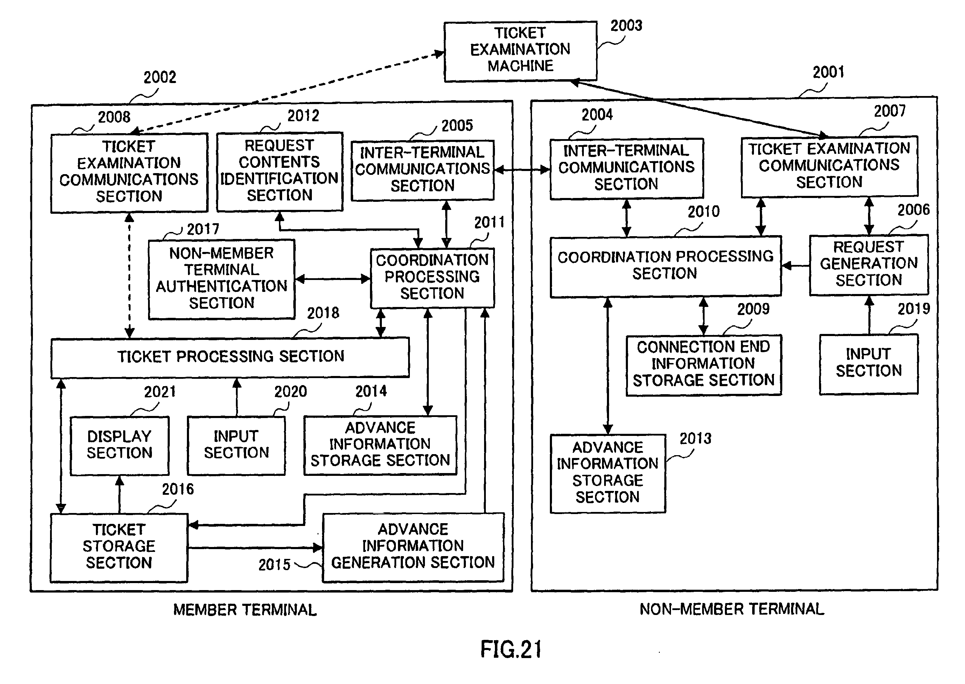

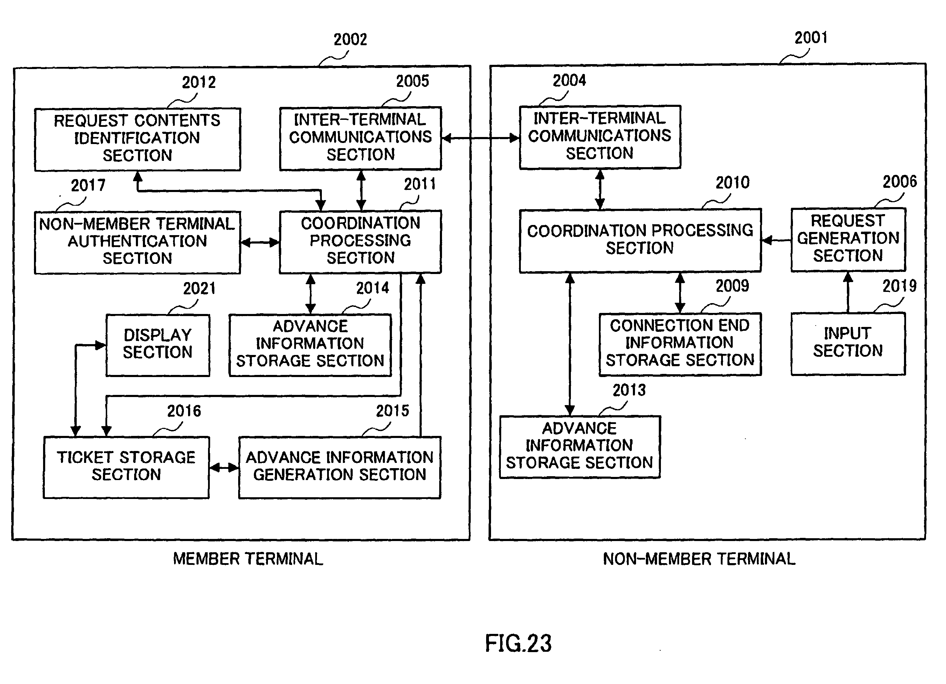

FIG. 23 is a block diagram illustrating extracted functional sections which are specifically necessary for advance processing in non-member terminal 2001 and member terminal 2002, where, in this block diagram, the identical reference numerals are assigned to the parts which correspond to those in FIG. 21. With reference to this FIG. 23, the flow of advance processing is described below in detail. At non-member terminal 2001, upon the user's (non-member's) inputting of instructions for sending an advance processing request by giving an inputting manipulation on input section 2019, input section 2019 provides the inputted instructions to request generation section 2006.

Based on the instructions for transmitting an advance processing request which are provided from input section 2019, request generation section 2006 generates an advance processing request from information which indicates that the information being sent is an advance processing request (request identifier), and from information for identification of non-member terminal 2001 (apparatus identifier), and provides the generated advance processing request to coordination processing section 2010.

Coordination processing section 2010 acquires the address of member terminal 2002 from connection end information storage section 2009, and adds the acquired address to the advance processing request. In this way, advance processing request information as illustrated in FIG. 8(a) is generated. It is noted that the address of member terminal 2002 is assumed to be stored in connection end information storage section 2009 in advance.

The generated advance processing request information is provided from coordination processing section 2010 to inter-terminal communications section 2004. Inter-terminal communications section 2004 transmits the advance processing request information to inter-terminal communications section 2005 of member terminal 2002.

At member terminal 2002, upon reception of the advance processing request information from non-member terminal 2001, inter-terminal communications section 2005 provides the received advance processing request information to coordination processing section 2011. The advance processing request information provided to coordination processing section 2011 is referred to by request contents identification section 2012. Request contents identification section 2012 identifies the referred information is advance processing request information based on the request identifier (FIG. 8(a)) contained in the advance processing request information, and notifies the identification result to coordination processing section 2011.

Coordination processing section 2011 stores the apparatus identifier (FIG. 8(a)) contained in the advance processing request information into advance information storage section 2014 in a case where the identification result notified from request contents identification section 2012 is advance processing request information.

Advance information generation section 2015 generates information which indicates that the information being responded is a response to the advance processing request (request identifier), and in addition to that, generates response information in response to the advance processing information by adding each information illustrated in FIG. 8(b) (secret information used for authentication, the data of the approved use) to the request identifier information.

In this generation processing, coordination processing section 2011 has display section 2021 display the list of tickets stored in ticket storage section 2016 based on advance information generation instructions given from advance information generation section 2015. The user of member terminal 2002 (member) makes selection of ticket(s) which are approved to be used by the user of non-member terminal 2001 (non-member) through manipulation on a predetermined input section (a figure is omitted).

The information indicating the selected tickets is provided from ticket storage section 2016 to advance information generation section 2015. Advance information generation section 2015 further provides the provided information indicating the selected tickets to coordination processing section 2011. Coordination processing section 2011 adds the provided information indicating the selected tickets to the response information responding to the advance processing request, which is under generation at that timing, as "the data of the approved use".

In addition, non-member terminal authentication section 2017 issues secret information such as a password, and provides the issued information to coordination processing section 2011, an in addition to that, establishes association between the secret information and the information for identifying non-member terminal apparatus to store the associated information in the advance information storage section. Coordination processing section 2011 adds the secret information and the address of non-member terminal 2001 to the response information responding to the advance processing request. In this way, response information illustrated in FIG. 8(b), which is a response to the advance processing request, is generated.

Coordination processing section 2011 provides the response information which is generated as described above to inter-terminal communications section 2005. Inter-terminal communications section 2005 transmits the response information to inter-terminal communications section 2004 of non-member terminal 2001.

Inter-terminal communications section 2004 of non-member terminal 2001 provides the received response information to coordination processing section 2010. Coordination processing section 2010 identifies that the received data is response information responding to the advance processing request based on the request identifier (FIG. 8(b)) of the received data (response information).

Coordination processing section 2010 stores the secret information contained in the response information responding to the advance processing request (secret information generated by member terminal 2002) and the data of the approved use contained therein (information indicating tickets, and so on) in advance information storage section 2013. Alternatively, the secret information may be displayed on a predetermined display section (a figure is omitted), and the displayed information may be memorized by the user of non-member terminal 2001 (non-member), instead of storing the secret information in advance information storage section 2013. If done in such a way, it is possible to leave no secret information in non-member terminal 2001, which helps prevent the secret information from being leaked out to a third party in advance.

Through the advance processing as described above, non-member terminal 2001 sends information for identification of non-member terminal 2001 itself to member terminal 2002, while member terminal 2002 send s secret information used for authentication (and data of tickets, etc., which are approved for use) to non-member terminal 2001, which produces a condition in which member terminal 2002 is able to identify non-member terminal 2001 and authenticates terminal identification.

Accordingly, after the advance processing, at the occasion when non-member terminal apparatus 2001 requests processing to member terminal 2002, non-member terminal 2001 sends the secret information issued by member terminal 2002 in the advance processing to member terminal 2002, thereby making it possible for member terminal 2002 to authenticate non-member terminal 2001. 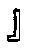

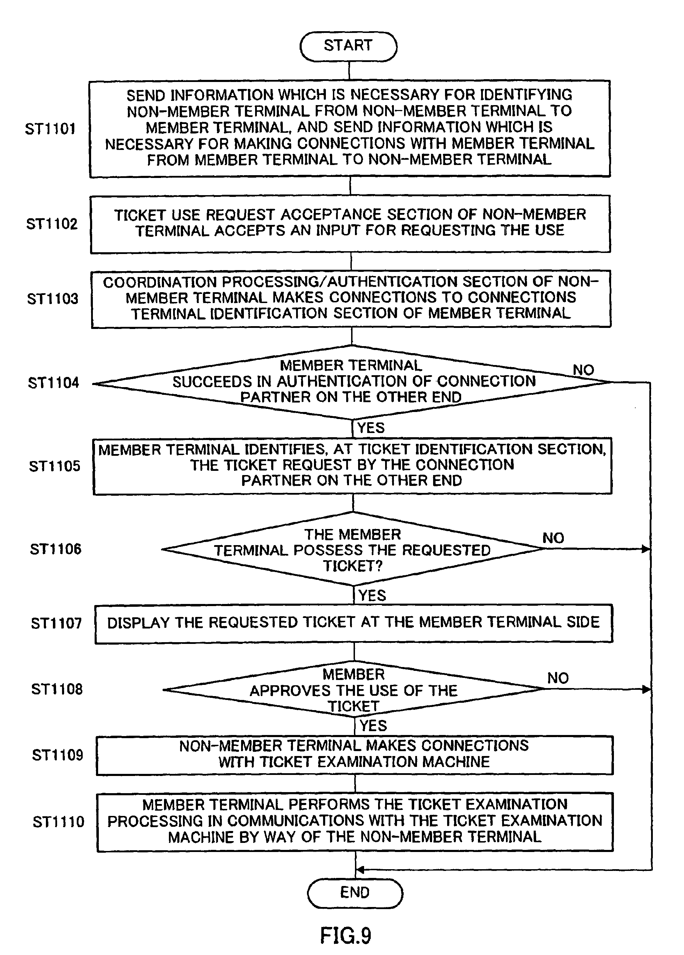

Next, the processing flow for execution of ticket examination, which is performed by a non-member by using a ticket which is possessed by a member, is explained below with reference to FIG. 5, and FIG. 9.

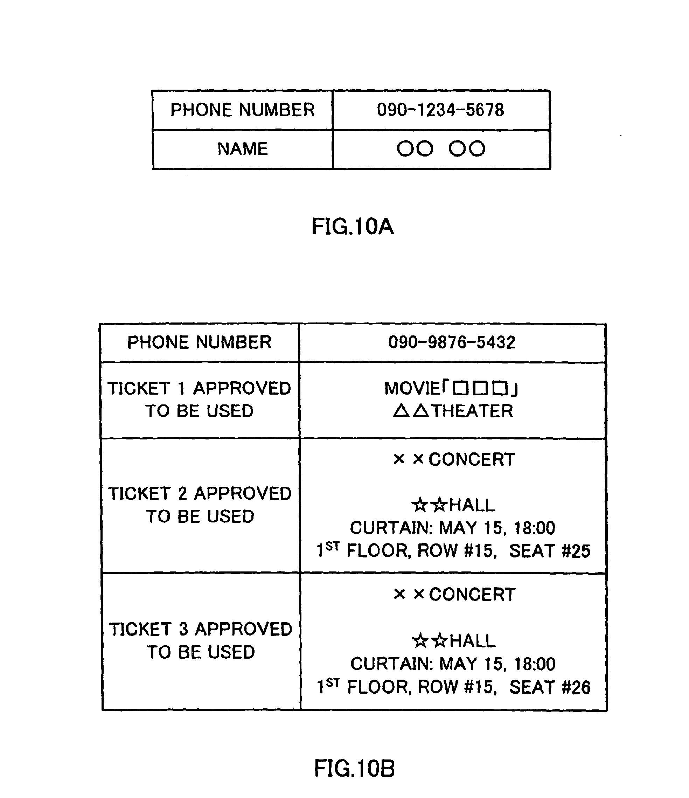

First, as advance processing which has been performed before execution of ticket examination, as described above with reference to FIG. 8, member terminal 502 has provided information which is necessary for making connections to the member terminal itself to non-member terminal 501, the user of which will be a pseudo-transferee of his / her ticket, while the non-member terminal has stored the provided information in connection end storage section 509. In addition, the member terminal has stored information for identification of the non-member terminal in connection terminal identification section 511 (step ST 1101). Herein, the information provided from member terminal 502 to non-member terminal 501 includes, other than the information which is necessary for making connections to member terminal 502, information related to the kinds of tickets possessed by the member, and so forth. An example of data transferred in advance processing is illustrated in FIG. 10A and FIG. 10B. Among the data illustrated in FIG. 10A and FIG. 10B, the data illustrated in FIG. 10A which is sent from non-member terminal 501 to member terminal 502 (the telephone number and the name of the user of non-member terminal 501) is the information for identification of the non-member terminal contained in the advance processing request information illustrated in FIG. 8 (a), while the data illustrated in FIG. 10B which is sent from member terminal 502 to non-member terminal 501 (the telephone number of the user of member terminal 502, and tickets possessedbyhim / her) is the information for approving use, which is contained in the response information responding to the advance processing request information illustrated in FIG. 8(b).

After the execution of the above-described advance processing between non-member terminal 501 and member terminal 502, in a situation where the user of non-member terminal 501 (non-member) wishes to use, for example, a movie ticket at a movie theater and so on, the non-member sends a processing request via non-member terminal 501 to member terminal 502, thereby making it possible to execute ticket examination through the use of a ticket possessed by member terminal 502 by creating a pseudo-situation as though non-member terminal 501 possessed the ticket.

That is, upon acceptance of an input for requesting the use of a ticket at input section 516 of non-member terminal 501 (step ST 1102), non-member terminal 501 generates a communication path between member terminal 502 and ticket examination machine 503 within non-member terminal 501 itself, and member terminal 502 performs the processing in communications with ticket examination machine 503 by way of non-member terminal 501. As a series of processing steps after the advance processing:
1. Ticket examination communications section 505 of non-member terminal 501 sends a connection request to ticket examination machine 503, while ticket examination machine 503 makes a request for ticket examination processing to non-member terminal 501 upon reception of the request. Next, non-member terminal 501 sends a connection request to member terminal 502, and then non-member terminal 501 and member terminal 502 perform authentication to make connections between them. Non-member terminal 501 makes a request to member terminal 502 for the execution of a part of processing which the non-member terminal itself is unable to execute among the entire processing requested by ticket examination machine 503. Next, at member terminal 502, ticket identification section 512 identifies the ticket which is requested to be used by the connection partner, and provided that member terminal 502 possesses the requested ticket, display section 514 therein displays information related to the requested ticket. The member enters either an approval or disapproval for use at input section 515. Upon approval by the member for the use of the ticket, ticket processing section 517 executes the requested ticket examination processing in communications with ticket examination machine 503 by way of non-member terminal 501 (a flowchart is omitted).
2. Ticket examination communications section 505 of non-member terminal 501 sends a connection request to ticket examination machine 503, while ticket examination machine 5003 makes a request for ticket examination processing to the non-member terminal upon reception of the request. Next, the non-member terminal sends a connection request to the member terminal, and then non-member terminal 501 and member terminal 502 perform authentication to make connections betw.een them. Non-member terminal 501 sends to member terminal 502 all part of the processing request which is received from ticket examination machine 503 in processing with ticket examination machine 503, and makes a request to member terminal 502 for processing. Next, at member terminal 502, ticket identification section 512 identifies the ticket which is requested to be used by the connection partner, and provided that member terminal 502 possesses the requested ticket, display section 514 therein displays information related to the requested ticket. The member enters either an approval or disapproval for use at input section 515. Upon approval by the member for the use of the ticket, ticket processing section 517 executes the requested ticket examination processing in communications with ticket examination machine 503 by way of non-member terminal 501 (a flowchart is omitted).
3. Non-member terminal 501 conducts communications with the other end of connections which is stored in connection end storage section 509 through use of inter-terminal communications section 507, and performs authentication between non-member terminal 501 and member terminal 502 through the workings of coordination processing / authentication section 510 to make connections with member terminal 502 (steps ST 1103, 1104). Upon establishment of connections between non-member terminal 501 and member terminal 502, at m.ember terminal 502, ticket identification section 512 identifies the ticket which is requested to be used by the connection partner (step ST 1105), and provided that member terminal 502 possesses the requested ticket (step ST 1106), display section 514 therein displays information related to the requested ticket (step ST1107). The member enters either an approval or disapproval for use at input section 515 (step ST 1103). There is a method in which, upon approval by the member for the use of the ticket, non-member terminal 501 makes connections with ticket examination machine 503 (step ST 1109), and ticket processing section 517 executes the ticket examination processing in communications with ticket examination machine 503 by way of non-member terminal 501 (step ST 1110).

Through the adoption of these methods, even when the member is located away from ticket examination machine 5003 and non-member terminal 501, the non-member is able to conduct communications with ticket examination machine 503 which is just in front of him / her. When it is viewed from the point of ticket examination machine 503, it looks as though ticket examination machine 503 were executing ticket examination processing in communications with non-member terminal 501, as a matter of fact, however, ticket examination machine 503 executes the processing of the ticket in communications with member terminal 502. Ticket examination machine 503 opens its gate, and so on, uponthecompletionofticketexaminationprocessing, and allows a non-member who is in front of ticket examination machine 503 to enter through the gate. It is noted that, herein, the ticket examination processing such as a kind of processing for rewriting the contents of the ticket to label the ticket as the already-used one may be performed, actually, either at the side of the ticket examination machine or the side of the member terminal.

In addition, in a case where, for example, a public switched telephone network is used as inter-terminal communications sections 506 and 507, there is an effect in that it is possible to execute the pseudo-transfer of a ticket even when a member is located far away from a non-member, while on the other hand in a case where two persons wish to execute ticket examination processing at the same time, however, ticket examination machine 503 allows only one person to pass through ticket examination in each execution, the adoption of Bluetooth or IrDA as inter-terminal communications sections 506 and 507 produces an effect in that communications are performed in a lower cost in comparison with a case where a public switched telephone network is employed.

It is noted that, regarding the status of non-member terminal 501, statuses are categorized into such a status in which non-member terminal 501 does not know which kind of a ticket is being requested by ticket examination machine 503 on the other end, and another status in which non-member terminal 501 actually knows which kind of a ticket should be presented to ticket examination machine 503 on the other end, however, non-member terminal 501 is unable to execute the ticket examination processing due to lack of the ticket itself or the ticket examination execution function, and so on.

In the case of the former status, the adoption of the above-described procedure 1 or 2 produces an effect in that non-member terminal 501 is able to learn which kind of processing should be requested to member terminal 502. Specifically, the above-described procedures 1 are suitable in a case where non-member terminal 501 is able to judge the processing-feasibility of the processing requested from ticket examination machine 503, while the above-described procedures 2 are suitable in a case where non-member terminal 501 is not able to judge the processing-feasibility of the processing requested from ticket examination machine 503.

In the case of the latter status, the adoption of the above-described procedures 3 produces an effect in that non-member terminal 501 does not conduct communications with ticket examination machine 503 until an approval is given by member terminal 502, which makes it unnecessary for non-member terminal 501 to conduct communications with ticket examination machine 503 in the case of a disapproval by member terminal 502.

According to the present invention, what are required to be provided in non-member terminal 501 include input section 516, ticket use request acceptance section 508, connection end storage section 509, and coordination processing / authentication section 510. Even if these sections are provided as a program(s), such a program does not contain any business know-how nor any other valuable information, and therefore has no risk of leaking-out thereof even when the program is analyzed, and accordingly the program may be prepared as a downloadable program which anyone can download it freely.

As described above, according to the present embodiment, it becomes possible for a non-member to use a ticket by providing the terminals with coordination processing / authentication section 510, connection terminal identification section 511, and ticket identification section 512 and by giving an approval from a member for use of the ticket, and;
1. It is possible to perform pseudo-transfer of a ticket to a non-member, who is not provided with a program or a device for handling the ticket.
2. It is not necessary to provide a non-member with a ticket, and a program for handling the ticket.
3. Because an approval given at a member terminal side is required for using a ticket, it is clear where the responsibility rests at the time of the occurrence of a trouble in relation to the use of the ticket by a non-member.
4. It is not necessary to employ different processing methods at a ticket examination machine for the case of use of a normal ticket by a member and for the case of use of a transferred ticket by a non-member.
5. Even if not both a transferor of a ticket and a transferee of a ticket are present, it is possible for the both persons to go through ticket examination processing regardless of which person has gone through the processing earlier.
6. A lower communications cost is achieved because it is possible to conduct communications between a member terminal and a non-member terminal without going by way of a server.

There are effects, including without limitation, as enumerated above.

As a matter of course, it is possible for one owner of a member terminal to purchase a group of tickets in a package deal and to allow a plurality of persons to use each ticket, and by doing in such a way, it is further possible, in the case of reserved-seat system, to purchase tickets for grouped reserve seats.

### (Embodiment 4)

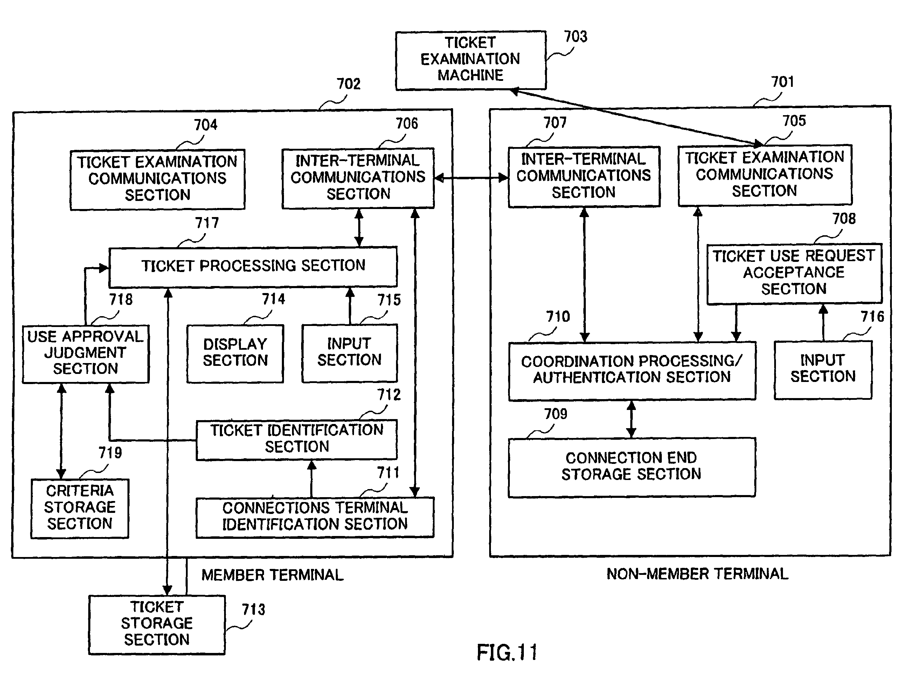

Next, an explanation is given below on Embodiment 4 according to the present invention with reference to FIG. 11.

In Embodiment 3, upon reception of a request for using a ticket from a non-member, a member inputs his / her approval for use at the member terminal side; in contrast, according to the present embodiment, use approval criteria are stored in a member terminal, and a judgment is automatically made on whether an approval is given for use or not by checking the request from a non-member against the criteria. In FIG. 11, reference numerals 701 - 717 are identical sections with reference numerals 501 - 517 in FIG. 5, respectively.

Use approval judgment section 718 checks use approval criteria stored in criteria storage section 719 against a request for use from a connection partner, and makes a judgment as to whether the requested use is approved or disapproved, while criteria storage section 719 stores ticket use approval criteria which are used for checking in making a use approval judgment.

The processing flow for execution of normal ticket examination, which is performed by a member, who possesses a ticket, is the same as the processing flow for normal ticket examination according to Embodiment 3.

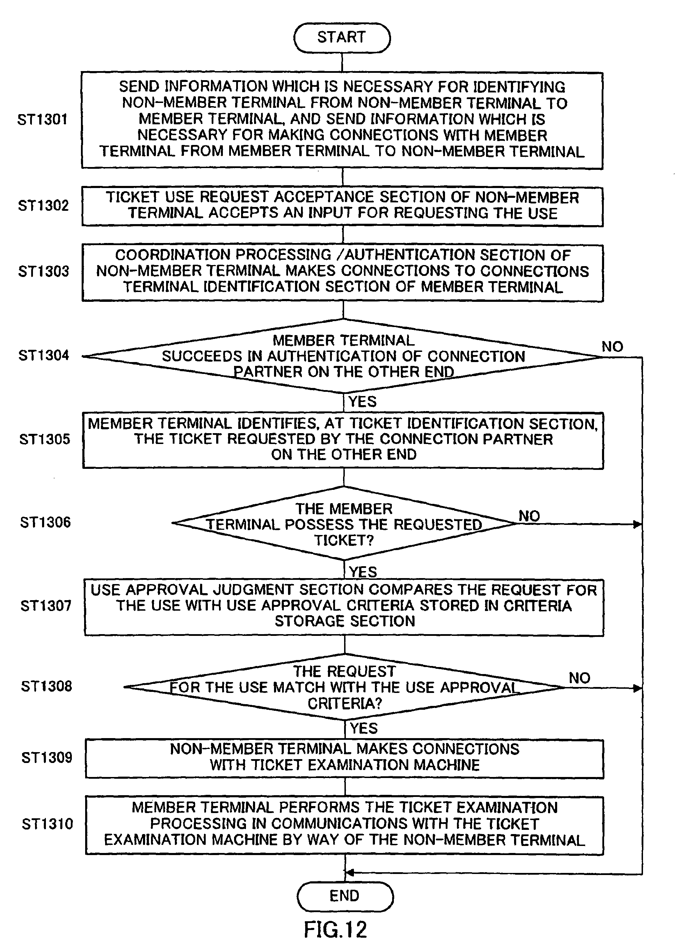

Next, the processing flow for execution of ticket examination, which is performed by a non-member by using a ticket which is possessed by a member, is explained below with reference to FIG. 11, and FIG. 12.

In this embodiment, in the same manner as in Embodiment 3, advance processing has been executed beforehand between non-member terminal 701 and member terminal 702 (step ST 1301). The details of the advance processing here are just the same as the contents of processing explained with reference to FIG. 8, and therefore its explanation is omitted here.

The connection procedures between a non-member terminal and a member terminal, and between the non-member terminal and a ticket examination machine, after the execution of the advance processing are the same as the connection procedures according to Embodiment 3, and an explanation is given here regarding a case where the same method as in the method 3 of Embodiment 3 is used. Upon completion of authentication between non-member terminal 701 and member terminal 702 and establishment of connections between the terminals (steps ST 1303, 1304), member terminal 702 identifies a ticket requested by non-member terminal 701 (step ST 1305), and in case where member terminal 702 possesses the requested ticket (step ST 1306), use approval judgment section 718 compares use approval criteria which are stored in criteria storage section 719 with the request for use from non-member terminal 701 (step ST 1307), and makes a judgment as to whether the request use is approved or disapproved (step ST 1308).

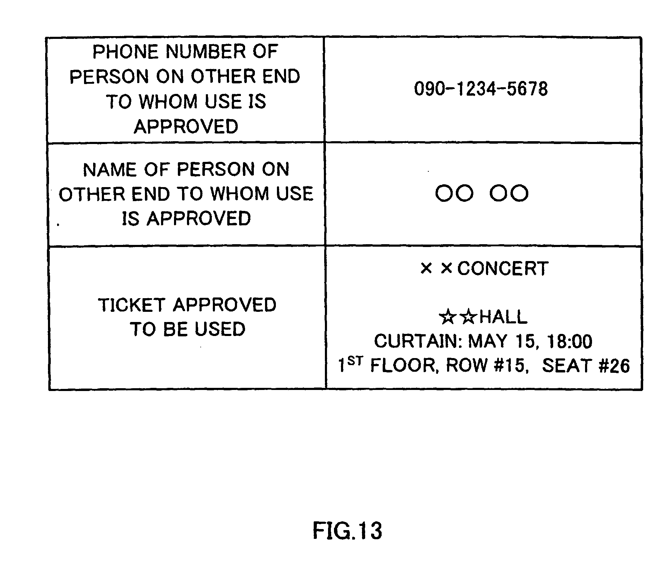

Upon approval by the member for the use, non-member terminal 701 makes connections with ticket examination machine 703 (step ST 1309), and member terminal 702 executes the ticket examination processing in communications with ticket examination machine 703 by way of non-member terminal 701 (step ST 1310). It is noted that, in a case where the requested use is disapproved by the member, non-member terminal 701 is not allowed to carry through the ticket examination processing. Herein, use approval criteria stored in member terminal 702 contains information such as information for identification of a requested ticket and information for identification of a person on the other end of line who is requesting for use. An example of data of use approval criteria is illustrated in FIG. 13.

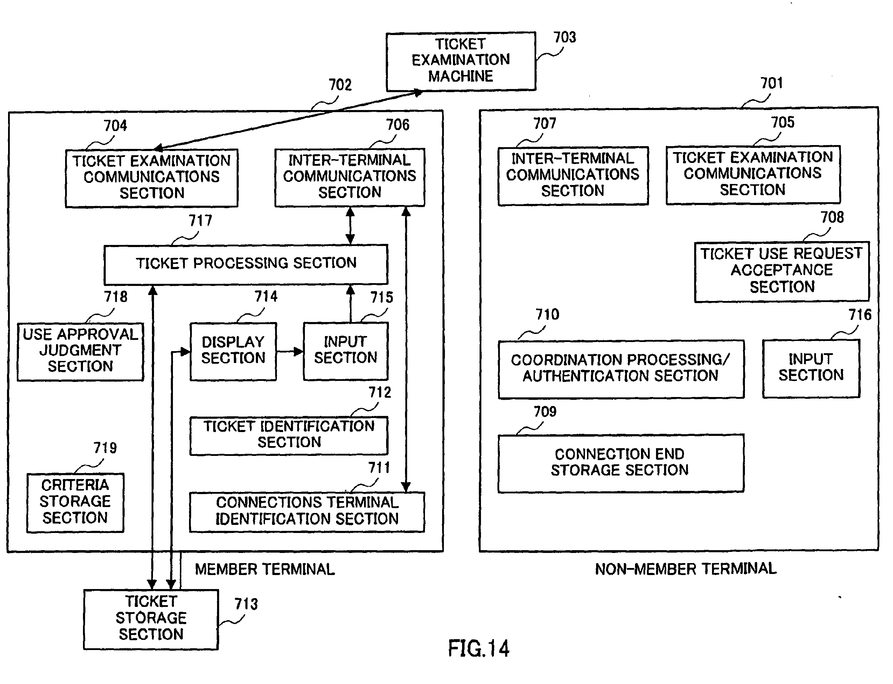

It is noted that FIG. 14 is a block diagram which illustrates the processing flow for execution of normal ticket examination, which is performed by a member, who possesses a ticket. In FIG. 14, however, the identical reference numerals are assigned to the parts identical to those in FIG. 11, and their detailed explanation is omitted here. In addition, the processing flow of ticket examination illustrated in FIG. 14 is the same as that illustrated in FIG. 7, and therefore an explanation is given here with reference to FIG. 7.

Upon acceptance of an input for requesting the use of a ticket at input section 715 (step ST 901), the ticket requested to be used is called up from ticket storage section 717 at ticket processing section 713 (step ST 902), and the called-up ticket is displayed on display section 714 (step ST 903).

Upon acceptance of an input for confirming the use of the ticket at input section 715 (step ST 904), ticket processing section 717 conducts communications with a ticket examination machine 703 via ticket examination communications section 704 (step ST 905), and executes ticket examination processing with the ticket examination machine on the other end (step ST 906). Herein, the ticket examination processing such as a kind of processing for rewriting the contents of the ticket to label the ticket as the already-used one may be performed either at the side of the ticket examination machine or the side of the member terminal.

As described above, according to the present embodiment, by providing a member terminal with criteria storage section 719 and use approval judgment section 718, in addition to the effect in Embodiment 3, there is a further effect in that it is not necessary for a member to enter a confirmation at each time of receiving a request for ticket use from a non-member and that it is possible to automatically judge whether the requested use is approved / disapproved, which also reduces the burden of trouble and time required for ticket examination processing for the benefit of the member.

### (Embodiment 5)

In this embodiment, an explanation is given on a case where service models described in Embodiments 1 and 2 are applied to settlement processing (here, processing target apparatus 103 corresponds to a settlement machine, simplified apparatus 101 corresponds to a non-member terminal, which is not provided with settlement processing capabilities, and standard apparatus 102 corresponds to a member terminal, which is provided with settlement processing capabilities). Information which is necessary for making settlement, such as a user's credit card number, is stored by the user in his / her terminal, and at the occasion of making settlement, s/he is able to use it by conducting communications between a settlement machine and his / her terminal.

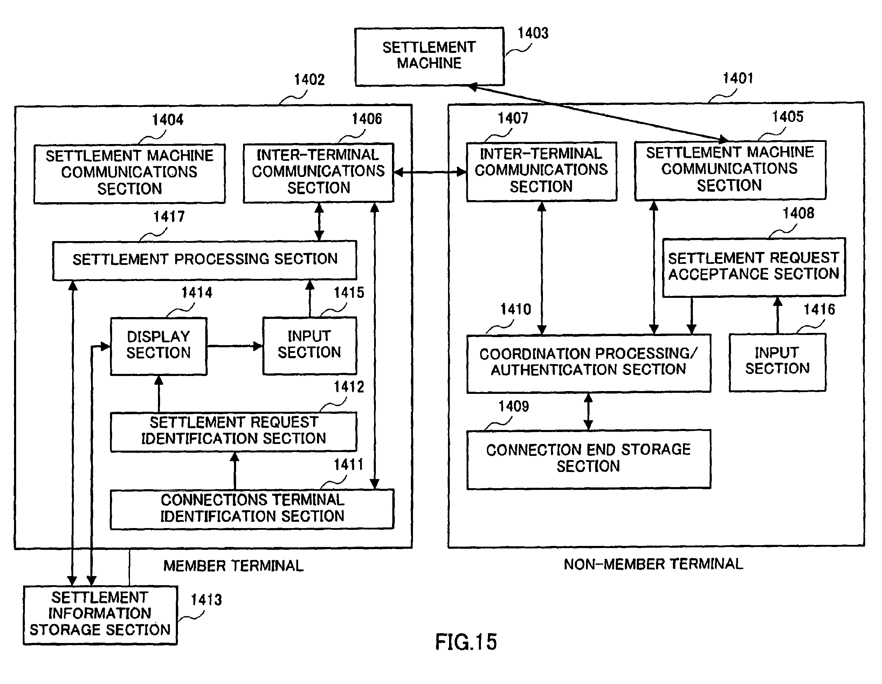

FIG. 15 is a block diagram illustrating non-member terminal 1401, member terminal 1402, and settlement machine 1403 according to Embodiment 5 of the present invention. Non-member terminal 1401 is intended to make settlement by using settlement information which is held by member terminal 1402. It is noted that settlement machine 1403, which executes settlement, may be a POS terminal and so forth. In this embodiment, an explanation is given with an example of mobile phones both for member terminal 1402 and non-member terminal 1401, however they are not limited to mobile phones, but they may be other mobile terminals such as PDAs (Personal Digital Assistants), notebook-sized personal computers, and so on.

Settlement machine communications sections 1404 and 1405 are communications sections for making communications between the terminals and the settlement machine respectively, and they may be a public switched telephone network, Bluetooth, IrDA, and so forth. Inter-terminal communications sections 1406 and 1407 are communications sections for making communications between the terminals, and they may be a public switched telephone network, Bluetooth, IrDA, and so forth. In addition, they may be the same media as that of the settlement machine communications sections.

Settlement request acceptance section 1409 is a section that accepts an input for requesting execution of settlement from a user who is a non-member, while connection end storage section 1409 is a section that stores the terminal information of the other end of connections which is required for making connections. Coordination processing / Authentication section 1410 is a section that makes connections with member terminal 1402 which is indicated by the information stored in connection end storage section 1409, and has the other end of connections perform authentication of the requesting terminal itself. Connection terminal identification section 1411 is a section that identifies a connection partner terminal. Settlement request identification section 1412 is a section that identifies the contents of a settlement request from a connection partner. Settlement information storage section 1413 is a section that stores information required for making settlement, and the section 1413 may be a tamper-resistant module, tamper-resistant software, an IC chip, a memory, and so on. Incidentally, the information to be stored may be a credit card number and so on. Display section 1414 is a section that displays the settlement request identified by settlement request identification section 1412. Input sections 1415 and 1416 are sections through which the user enters a confirmation and a request for making settlement processing. Settlement processing section 1417 is a section that executes settlement processing.

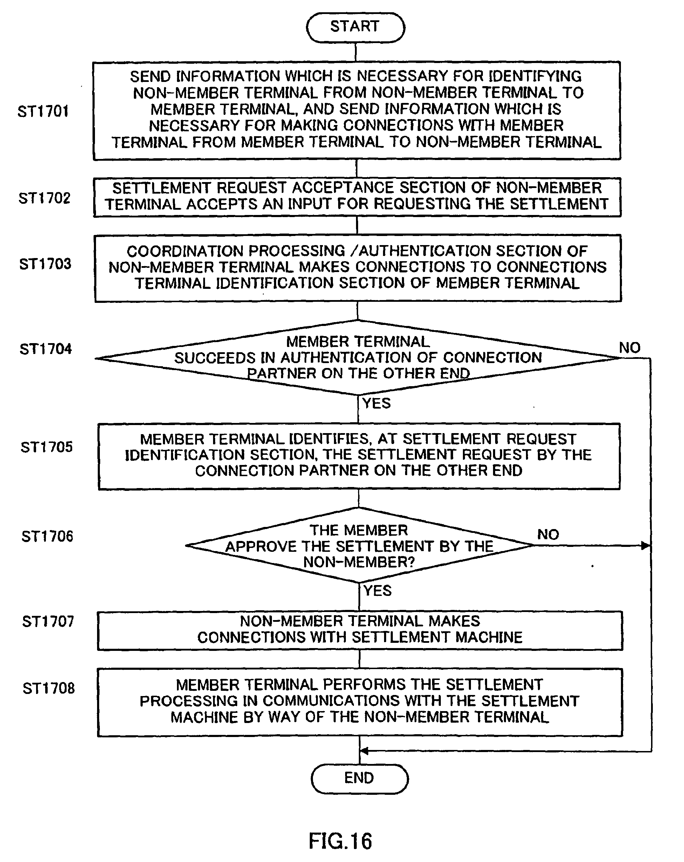

The processing flow for execution of a settlement, which is performed by a non-member by using information which is held by a member, is explained below with reference to FIG. 15, and FIG. 16.

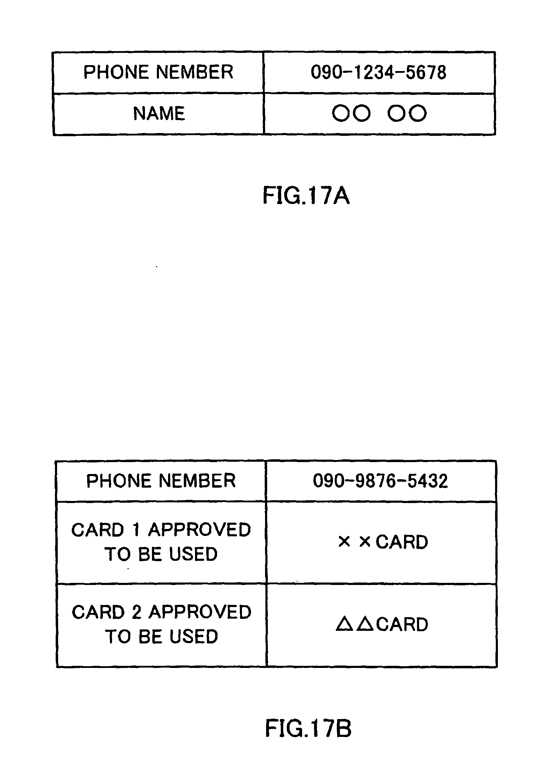

First, as advance processing which has been performed before execution of a settlement, member terminal 1402 has provided information which is necessary for making connections to the member terminal itself to non-member terminal 1401, the user of which will be a person to whom an approval for the settlement is given, while the non-member terminal has stored the provided information in connection end storage section 1409. In addition, the member terminal has stored information for identification of the non-member terminal in connection terminal identification section 1411 (step ST 1701). Herein, the information provided from the member terminal to the non-member terminal includes, other than the information which is necessary for making connections to the member terminal, information on the kinds of cards possessed by the member, and so forth. An example of data transferred in advance processing is illustrated in FIG. 17A and FIG. 17B.

The details of the advance processing according to the present embodiment are just the same as the contents of processing explained with reference to FIG. 8, and therefore its explanation is omitted here. However, "data of the approved use" which is contained in response information responding to an advance processing request, which is illustrated in FIG. 8(b), is identification information for identifying a card used for settlement here, and the response information containing such identification information has been sent from member terminal 1402 to non-member terminal 1401 as response information in advance processing.

Upon accepting an input of a settlement request at non-member terminal 1401 (step ST 1702), non-member terminal 1401 generates a communication path between member terminal 1402 and settlement machine 1403 within the non-member terminal itself, and non-member terminal 1401 has member terminal 1402 execute the requested processing in communications with settlement machine 1403. As a series of processing schemes after the advance processing:
1. Settlement machine communications section 1405 of non-member terminal 1401 sends a connection request to settlement machine 1403, while settlement machine 1403 makes a request for settlement processing to non-member terminal 1401 upon reception of the request. Next, non-member terminal 1401 sends a connection request to member terminal 1402, and then non-member terminal 1401 and member terminal 1402 perform authentication to make connections between them. Non-member terminal 1401 makes a request to member terminal 1402 for the execution of a part of processing which the non-member terminal itself is unable to execute among the entire processing requested by settlement machine 1403. For example, in a case where non-terminal apparatus 1401 is able to execute a part of the processing requested by settlement machine 1403, just as in a case where non-member terminal 1401 is provided with a settlement function, but does not have a sufficient monetary amount for making the settlement, the contents of the processing requested to member terminal 1402 may be a part of the entire processing requested by settlement machine 1403. Next, at member terminal 1402, settlement request identification section 1412 identifies the contents of the settlement request from the connection partner, and display section 1414 displays information related to the contents of the settlement request. The member enters either an approval or disapproval for settlement at input section 1415. Upon approval by the member for the settlement, settlement processing section 1417 executes the requested settlement processing in communications with settlement machine 1403 by way of the non-member terminal (a flowchart is omitted).
2. Settlement machine communications section 1405 of non-member terminal 1401 sends a connection request to settlement machine 1403, while settlement machine 1403 makes a request for settlement processing to non-member terminal 1401 upon reception of the request. Next, non-member terminal 1401 sends a connection request to member terminal 1402, and then non-member terminal 1401 and member terminal 1402 perform authentication to make connections between them. Non-member terminal 1401 sends to member terminal 1402 all part of the processing request which is received from settlement machine 1403 in processing with settlement machine 1403, and makes a request to member terminal 1402 for processing. Next, at member terminal 1402, settlement request identification section 1412 identifies the contents of the settlement request from the connection partner, and display section 1414 displays information related to the contents of the settlement request. The member enters either an approval or disapproval for settlement at input section 1415. Upon approval by the member for the settlement, settlement processing section 1417 executes the requested settlement processing in communications with the settlement machine by way of the non-member terminal (a flowchart is omitted).
3. Non-member terminal 1401 conducts communications with the other end of connections which is stored in connection end storage section 1409 through use of inter-terminal communications section 1407, and performs authentication between non-member terminal 1401 and member terminal 1402 through the workings of coordination processing / authentication 1410 to make connections with member terminal 1402 (steps ST 1703, 1704). Upon establishment of connections between non-member terminal 1401 and member terminal 1402, at member terminal 1402, settlement request identification section 1412 identifies the contents of the settlement request from the connection partner, and display section 1414 displays information related to the contents of the settlement request (step ST 1705), and the member enters either an approval or disapproval for settlement at input section 1415. (step ST 1706).

Upon approval by the member for the settlement, non-member terminal 1401 makes connections with settlement machine 1403 (step ST 1707), and settlement processing section 1417 executes the settlement processing in communications with settlement machine 1403 by way of non-member terminal 1401 (step ST 1708). There are methods as enumerated above.

Through the adoption of these methods, even when the member is located away from settlement machine 1403 and non-member terminal 1401, the non-member is able to conduct communications with settlement machine 1403 which is just in front of him / her. When it is viewed from the point of settlement machine 1403, it looks as though settlement machine 1403 were executing settlement processing in communications with non-member terminal 1401, as a matter of fact, however, settlement machine 1403 executes the settlement processing in communications with the member terminal. In addition, in a case where, for example, a public switched telephone network is used as inter-terminal communications sections 1406 and 1407, there is an effect in that it is possible to execute the settlement processing even when a member is located far away from a non-member, while on the other hand in a case where the two persons are close to each other, the adoption of Bluetooth or IrDA (Infrared Data Association) as inter-terminal communications sections 1406 and 1407 produces an effect in that communications are performed in a lower cost in comparison with a case where a public switched telephone network is employed.

It is noted that, regarding the status of non-member terminal 1401, statuses are categorized into such a status in which non-member terminal 1401 does not know the contents of settlement processing being requested by settlement machine 1403 on the other end, and another status in which non-member terminal 1401 actually knows the contents of settlement processing being requested by settlement machine 1403 on the other end, however, non-member terminal 1401 is unable to execute the settlement processing due to lack of the settlement execution function or the settlement execution authority, and so on.

In the case of the former status, the adoption of the above-described procedure 1 or 2 produces an effect in that non-member terminal 1401 is able to learn which kind of processing should be requested to member terminal 1402. Specifically, the above-described procedures 1 are suitable in a case where non-member terminal 1401 is able to judge the processing-feasibility of the processing requested from settlement machine 1403, while the above-described procedures 2 are suitable in a case where non-member terminal 1401 is not able to judge the processing-feasibility of the processing requested from settlement machine 1403.

In the case of the latter status, the adoption of the above-described procedures 3 produces an effect in that non-member terminal 1401 does not conduct communications with settlement machine 1403 until an approval is given by member terminal 1402, which makes it unnecessary for non-member terminal 1401 to conduct communications with settlement machine 1403 in the case of a disapproval by member terminal 1402.

According to the present invention, what are required to be provided in non-member terminal 1401 include input section 1416, settlement request acceptance section 1408, connection end storage section 1409, and coordination processing / authentication section 1410. Even if these sections are provided as a program(s), such a program does not contain any business know-how nor any other valuable information, and therefore has no risk of leaking-out thereof even when the program is analyzed, and accordingly the program may be prepared as a downloadable program which anyone can download it freely.

As described above, according to the present embodiment, it becomes possible for a non-member to make settlement by providing the terminals with coordination processing / authentication section 1410, connection terminal identification section 1411, and settlement request identification section 1412, and by giving an approval by a member for the settlement processing, and;
1. It is possible for a non-member, who is not provided with a program or a device for dealing with information required for making settlement, to execute settlement processing.
2. It is not necessary to provide a non-member with member-only information or an application for processing such information.
3. Because an approval given at a member terminal side is required for execution of settlement processing, it is clear where the responsibility rests at the time of the occurrence of a trouble in relation to the settlement made by a non-member.
4. It is not necessary to employ different processing methods at a settlement machine for the case of normal settlement made by a member and for the case of settlement made by a non-member.
   It is possible to make settlement even when not both a member and a non-member are present.
6. A lower communications cost is achieved because it is possible to conduct communications between a member terminal and a non-member terminal without going by way of a server.
There are effects, including without limitation, as enumerated above.

### (Embodiment 6)

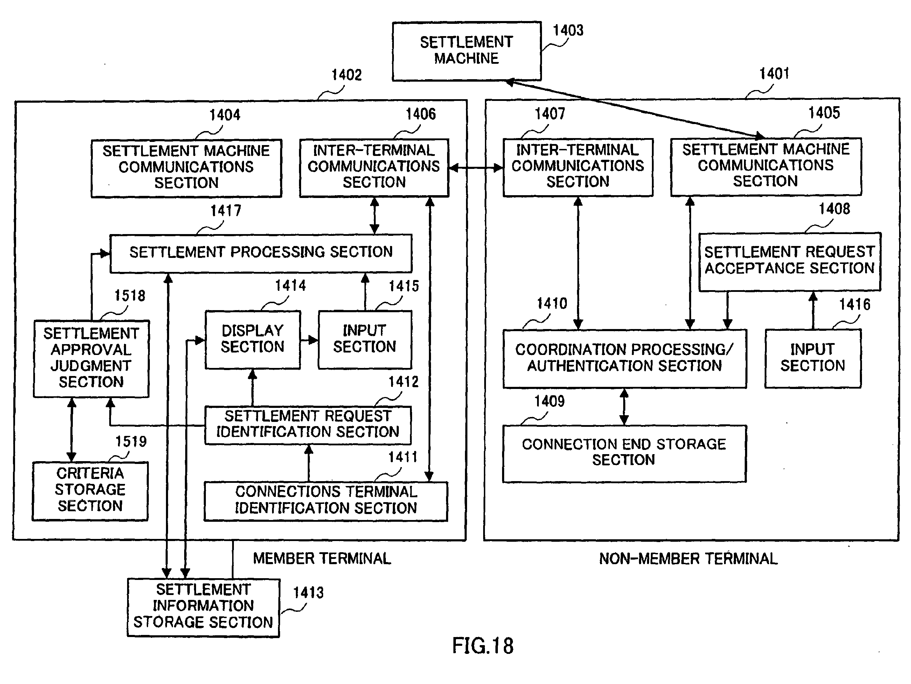

Next, an explanation is given below on Embodiment 6 according to the present invention with reference to FIG. 18. In Embodiment 5 described above, upon reception of a request for making settlement from a non-member, a member inputs his / her approval for settlement at the member terminal side; in contrast, according to the present embodiment, settlement approval criteria are stored in a member terminal, and a judgment is automatically made on whether an approval is given for settlement or not by checking the request from a non-member against the criteria. Accordingly, among the components of the configuration illustrated in FIG. 18, criteria storage section 1519 and settlement approval judgment section 1518 are newly added ones to member terminal 1402 described above with reference to FIG. 15, and because its configuration other than such an addition is the same as the configuration of member terminal 1402, the identical reference numerals are assigned to the parts identical to those in FIG. 15, and their detailed explanation is omitted here. In addition, in this embodiment, it is assumed that each of non-member terminal 1401 and settlement machine 1403 has the same configuration as that described above with reference to FIG. 15.

In FIG. 18, settlement approval judgment section 1518 checks settlement approval criteria which are stored in criteria storage section 1519 against a settlement request from a connection partner, and makes a judgment as to whether the settlement processing is approved or disapproved. Criteria storage section 1519 is a section that stores settlement approval criteria used for checking in making a settlement approval judgment.

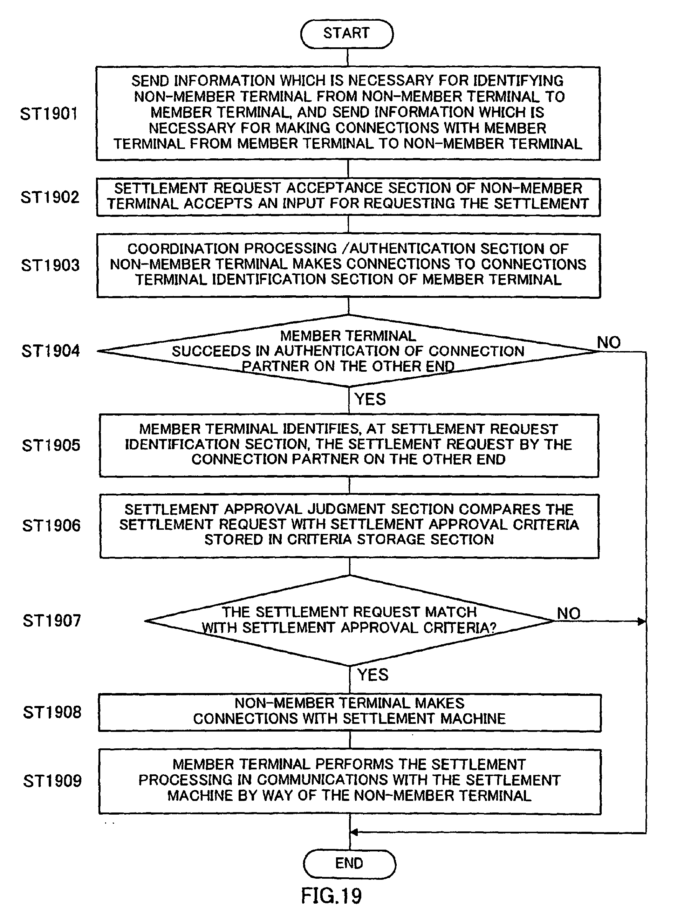

The processing flow for execution of a settlement, which is performed by a non-member by using information which is held by a member, is explained below with reference to FIG. 18, and FIG. 19.

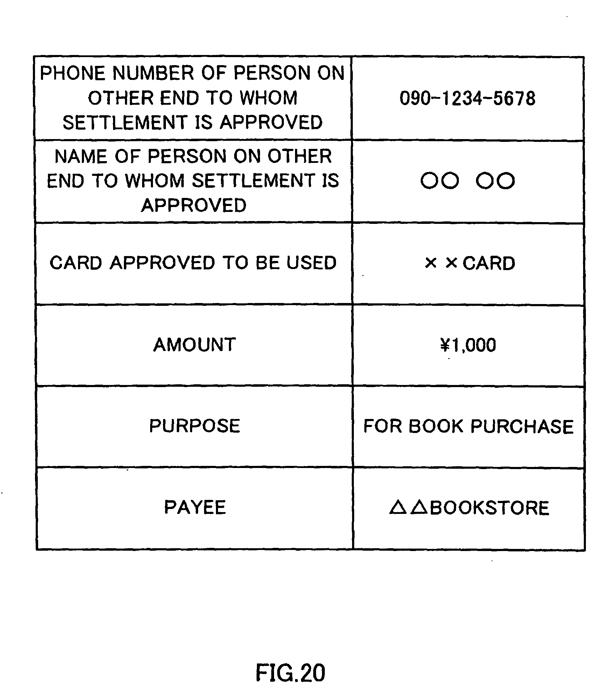

In the same manner as in Embodiment 5, advance processing has been executed beforehand between non-member terminal 1401 and member terminal 1502 (step ST 1901) . The connection procedures between non-member terminal 1401 and member terminal 1502, and between non-member terminal 1401 and settlement machine 1403, after the execution of the advance processing are the same as the connection procedures according to Embodiment 5, and an explanation is given here regarding a case where the same method as in the method 3 of Embodiment 5 is used. Upon completion of authentication between non-member terminal 1401 and member terminal 1502 and establishment of connections between the terminals (steps ST 1903, 1904), member terminal 1502 identifies the contents of settlement request from non-member terminal 1401 (step ST 1905), and settlement approval judgment section 1518 compares settlement approval criteria which are stored in criteria storage section 1519 with the settlement request from non-member terminal 1401 (step ST 1906), and makes a judgment as to whether the request settlement processing is approved or disapproved (step ST 1907). Upon approval by the member for the settlement processing, non-member terminal 1401 makes connections with settlement machine 1403 (step ST 1908), and member terminal 1502 executes the settlement processing in communications with settlement machine 1403 by way of non-member terminal 1401 (step ST 1909). Incidentally, in a case where the requested settlement is disapproved by the member, non-member terminal 1401 is not allowed to carry through the settlement processing. Herein, settlement approval criteria stored in member terminal 1502 contains information such as information related to the purpose and the monetary amount of settlement and information for identification of a person on the other end of line who is requesting for settlement. An example of data of settlement approval criteria is illustrated in FIG. 20.

As described above, according to the present embodiment, by providing a member terminal with a criteria storage section and a settlement approval judgment section, in addition to the effect in Embodiment 5, there is a further effect in that it is not necessary for a member to enter a confirmation at each time of receiving a request for settlement from a non-member and that it is possible to automatically judge whether the requested settlement is approved / disapproved, which also reduces the burden of trouble and time required for settlement processing for the benefit of the member.

### (Embodiment 7)

In the explanation given in Embodiments 3 through 6, a dominant role for processing (as done by coordination processing / authentication section 510, and so on) of authentication, which is executed based on advance processing information, is played by a non-member terminal (simplified apparatus) side; however, it is perfectly all right even if such a role is, conversely, played by a member terminal (standard apparatus) side.

In this embodiment, an explanation is given on a case where a member terminal (standard apparatus) side plays an active role in executing advance-processing authentication, and especially on a case where service models described in Embodiments 1 and 2 are applied to ticket examination processing (here, processing target apparatus 103 corresponds to a ticket examination machine, simplified apparatus 101 corresponds to a non-member terminal, which is not provided with ticket examination processing capabilities, and standard apparatus 102 corresponds to a member terminal, which is provided with ticket examination processing capabilities).

It is noted that the present embodiment modifies Embodiment 3 in such a way that a member terminal notifies the contents (kinds) of ticket(s) approved to be used to a non-member terminal at the time of advance processing. Though the detailed explanation of a part of processing such as authentication is omitted in Embodiment 3 for simplification, in this embodiment, an explanation of procedure for each processing as well as of the contents of data transferred is provided in greater detail.

FIG. 21 is a block diagram illustrating Embodiment 7 according to the present invention. In FIG. 21, reference numeral 2001 is a non-member terminal, while reference numeral 2002 is a member terminal. Reference numeral 2003 is a ticket examination machine for execution of ticket examination. In this embodiment, an explanation is given with an example of mobile phones both for the member terminal and non-member terminal, however they are not limited to mobile phones, but they may be other mobile terminals such as PDAs, notebook-sized personal computers, and so on. In addition, the member terminal may be a non-mobile terminal such as a home server, a central server which provides a global control on such a server, or a set top box and so forth.

Inter-terminal communications sections 2004 and 2005 are sections that are used for conducting communications between terminals, and examples of such sections include modems which utilize a telephone network, Bluetooth as well as wireless LAN both of which employ radio wave, IrDA which use infrared radiation, and so on.

Request generation section 2006 is a section that generates a request to be transmitted based on an inputted command and information acquired from other section.

Ticket examination communications sections 2007 and 2008 are sections that are used for conducting communications between a member terminal and a ticket examination machine or between a non-member terminal and a ticket examination machine, and examples of such sections include modems which utilize a telephone network, Bluetooth as well as wireless LAN both of which employ radio wave, IrDA which use infrared radiation, and so on. It is noted that ticket examination communications sections 2007 and 2008 may be the same media as inter-terminal communications sections 2004 and 2005.

Connection end information storage section 2009 is a section that stores information required for making connections to other terminal.

Coordination processing sections 2010 and 2011 are sections that relay data or a command between sections of its own terminal (i.e. terminal accommodating the sections 2010 and 2011).

Request contents identification section 2012 is a section that identifies the contents of a request from a non-member terminal, including: which kind of request it is, from which terminal the request is issued, which kind of processing is being requested, and so on.

Advance information storage sections 2013 and 2014 are sections that store advance information acquired from a non-member terminal or a member terminal.

Advance information generation section 2015 is a section that generates advance information based on information acquired from other section.

Ticket storage section 2016 is a section that stores tickets possessed, and storage may be implemented by hardware such as an IC chip for data protection, or by program in a processed or encrypted form in storage area of a memory chip or hard disk, etc., so that the stored data is not easily read out.

Non-member terminal authentication section 2017 is a section that authenticates a non-member terminal by using information acquired from the non-member terminal through the inter-terminal communications sections of the member terminal and of the non-member terminal, and the section 2017 is assumed to use, for example, a password scheme, a challenge response scheme, and so on.

Ticket processing section 2018 is a section that generates a ticket examination command to send the generated command to either a ticket examination communications section or a coordination processing section.

Input sections 2019 and 2020 are sections that a user enters a confirmation for use of a ticket, a command for use of a ticket, or an approval / disapproval for use of a ticket therein.

Display section 2021 is a section that acquires ticket information from the ticket storage section and that displays the acquired ticket.

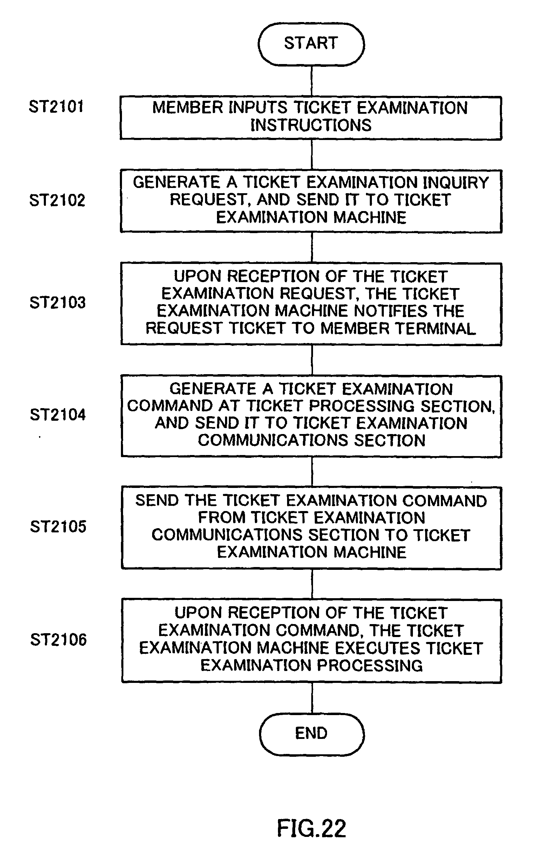

First, the processing flow for execution of normal ticket examination, which is performed by a member, who possesses a ticket, is explained below with reference to FIG. 21 and FIG. 22.

Upon acceptance of an input of ticket examination instructions at input section 2020 (step ST 2101), a ticket examination inquiry request is generated at ticket processing section 2018, and the generated request is sent to ticket examination machine 2003 via ticket examination communications section 2008 (step ST 2102).

Upon reception of the ticket examination inquiry request, ticket examination machine 2003 returns information indicating a ticket which is required for executing ticket examination to ticket processing section 2018 via ticket examination communications section 2008 (step ST 2103).

Upon reception of the information indicating the required ticket from ticket examination machine 2003, ticket processing section 2018 calls up the data of the ticket to be used from ticket storage section 2016, and the called-up information related to the ticket is displayed on display section 2021.

Upon acceptance of an input of a user confirmation for use of the displayed ticket at input section 2020, ticket processing section 2018 generates a ticket examination command (step ST 2104), and the generated command is sent to ticket examination machine 2003 via ticket examination communications section 2008 (step ST 2105), and the ticket examination processing is executed (step ST 2106). Herein, it is noted that the ticket examination processing such as a kind of processing for rewriting the contents of the ticket to label the ticket as the already-used one may be performed either at the side of the ticket examination machine or the side of the member terminal.

Enters 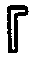 X1 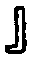

Next, an explanation is given on a case where a non-member executes ticket examination using a ticket possessed by a member. Discussion here assumes a case where wireless LAN is used for inter-terminal communications section, while IrDA is used for ticket examination communications section, and the apparatus identifier of a non-member terminal as well as the password thereof is used for authentication of the non-member terminal by a member terminal.

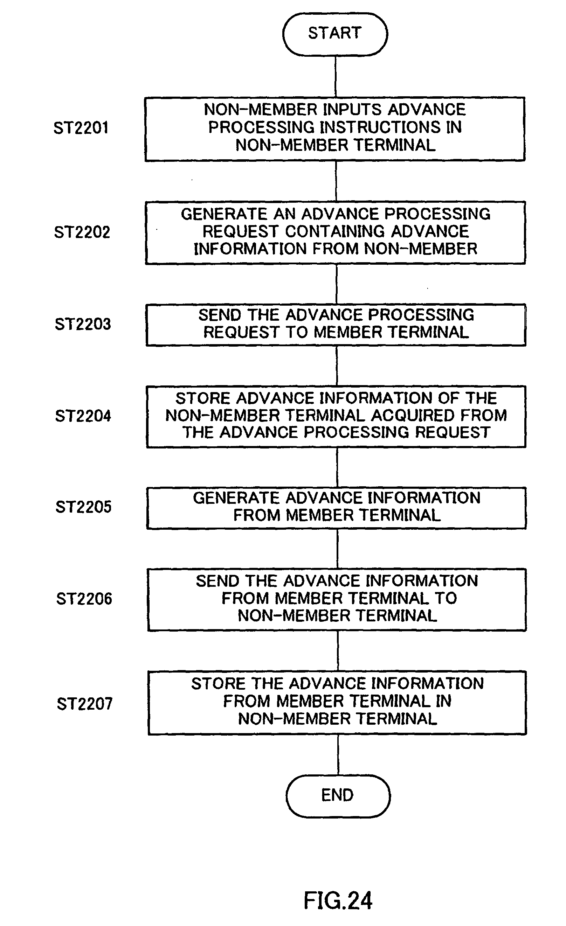

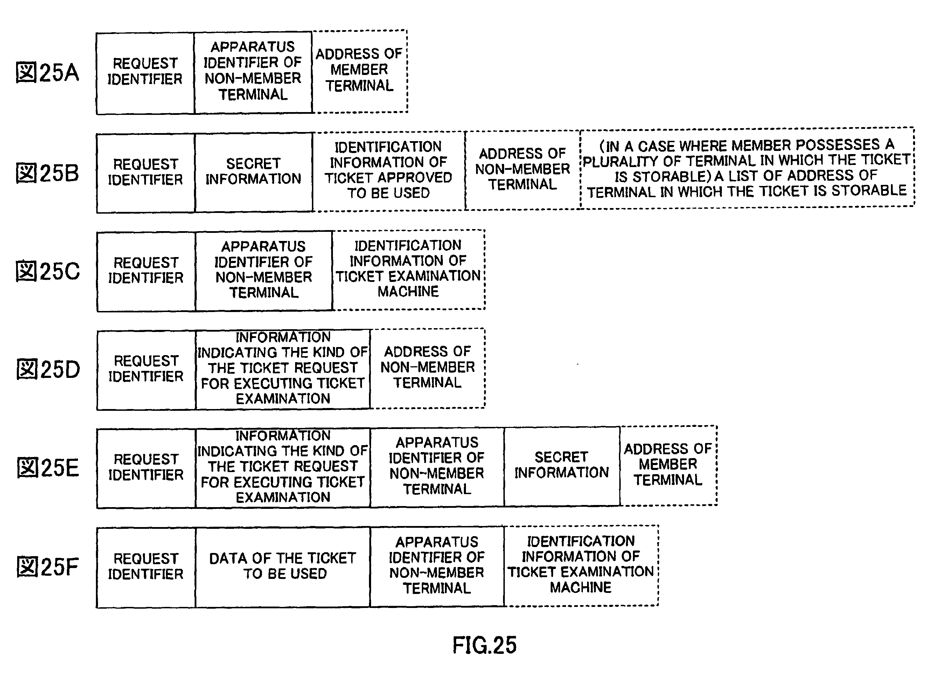

First of all, advance processing executed prior to ticket examination is explained with reference to FIG. 21 and FIG. 24. Upon inputting of advance processing instructions by a non-member at input section 2019 (step ST 2201), request generation section 2006 generates, under the command, an advance processing request from a request identifier, which indicates that the request is an advance processing request, and an apparatus identifier of the non-member terminal, and the generated advance processing request is provided to coordination processing section 2010. Upon reception of the advance processing request, coordination processing section 2010 acquires the address of the member terminal out of connection end information storage section 2009 to add the acquired address to the advance processing request (step ST 2202), and sends the advance processing request (FIG. 25A) to coordination processing section 2011 via inter-terminal communications section 2004 and 2005 (step ST 2203).

Next, coordination processing section 2011 sends the advance processing request to request contents identification section 2012, and request contents identification section 2012 identifies that the request sent to the section 2012 itself is an advance processing request by referring to the request identifier, and notifies such identification to coordination processing section 2011. Coordination processing section 2011 sends the advance information of the non-member terminal contained in the advance processing request to advance information storage section 2014 (step ST 2204), and the advance processing request to ticket storage section 2016. The list of tickets stored in ticket storage section 2016 is displayed on display section 2021, and upon the member's selection of ticket (s) which are approved to be used by the non-member, advance information generation section 2015 generates advance information of the member terminal based on a request identifier which indicates that the reply is a response to the advance processing request, and sends the generated advance information to coordination processing section 2011. It is noted that the information for identifying the ticket (s) approved to be used by the non-member may be added to the advance information of the member terminal. Herein, the "information for identifying the ticket" contained in the advance information is information which uniquely indicates the ticket, and assumed to include information for identifying the kind of the ticket. Coordination processing section 2011 adds the address of the non-member terminal to the advance information of the member terminal, and then acquires the password issued at non-member terminal authentication section 2017 to add the acquired password to the advance information of the member terminal sent from advance information generation section 2015. Here, in a case where the member possesses a plurality of terminals each of which is able to store the ticket(s) possessed by the member, a list of the addresses of such terminals may be added to the advance information.

Next, coordination processing section 2011 sends the advance information of the member terminal (FIG. 25B) to coordination processing section 2010 via inter-terminal communications section 2005 and 2004 (step ST 2206).

Upon reception of the advance information of the member terminal, coordination processing section 2010 in the non-member terminal identifies that the received information is the advance information of the member terminal by referring to the request identifier, and stores the identified advance information of the member terminal in advance information storage section 2013 (step ST 2207).

Alternatively, in a case where there is a security problem such as in a situation where there is no area in the non-member terminal where data is protected safely, or in other similar situations, information such as a password may be displayed on the screen of the non-member terminal in order to allow the owner-user of the non-member terminal to keep the displayed information into his / her memory, rather than storing such information into the advance information storage section of the non-member terminal.

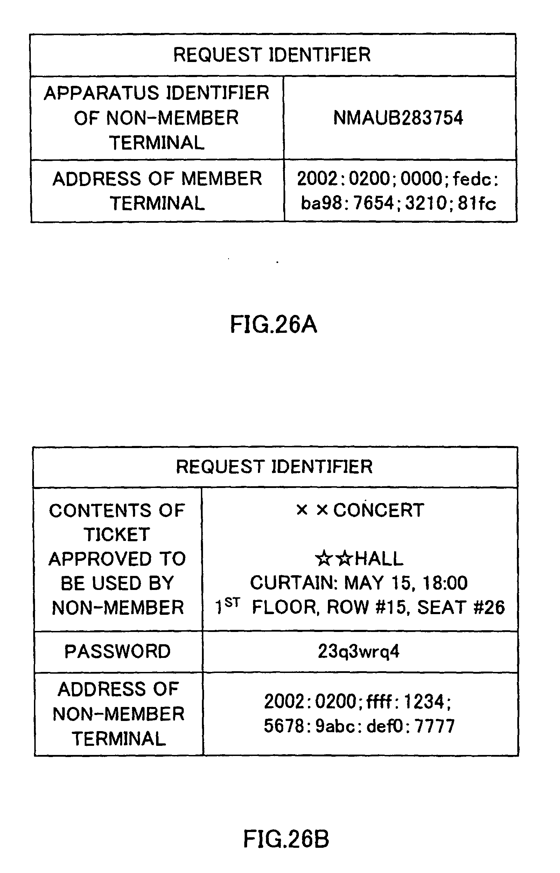

Incidentally, an example of data transferred from a non-member terminal to a member terminal in advance processing is illustrated in FIG. 26A, while an example of data transferred from a member terminal to a non-member terminal in advance processing is illustrated in FIG. 26B.

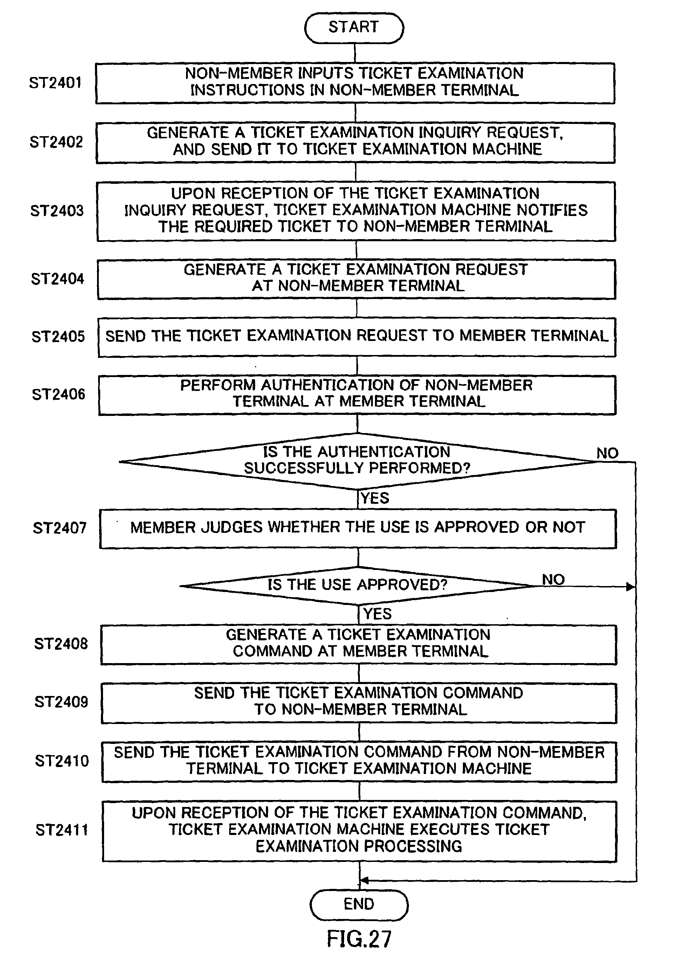

Next, an explanation of the ticket examination processing after advance processing is given below with reference to FIG. 22 and FIG. 27.

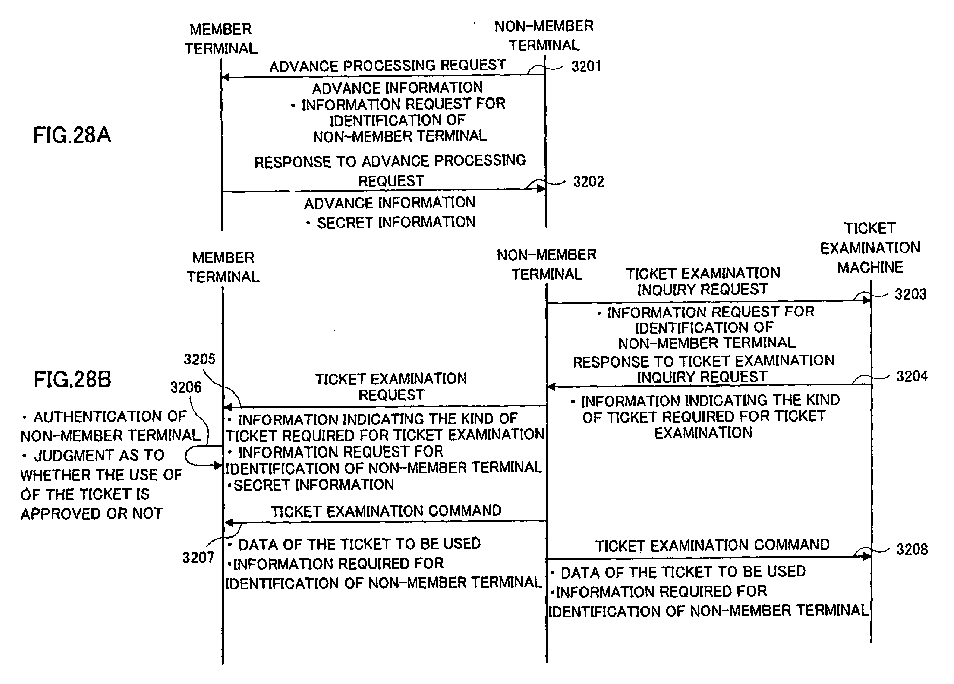

Here, it is discussed regarding the two patterns of procedures: one procedure in which a non-member terminal inquires the contents of processing to a ticket examination machine, and after that, the non-member terminal sends a tick.et examination request which contains the response given from the ticket examination machine to a member terminal, and another procedure in which a non-member terminal sends a ticket examination request to a member terminal; and after the member approves the request from the non-member and then sends a ticket examination command to the non-member terminal, the non-member terminal initiates connections to the ticket examination machine. FIG. 27 illustrates a flowchart which shows a case where the former procedure is adopted. FIG. 28A and FIG. 28B illustrate a sequence chart including advance processing. The configuration examples of data to be transferred are illustrated in FIG. 25C through FIG. 25F. In FIG. 25A through FIG. 25F, portions boxed in dotted lines, that is, the address of the member terminal, the address of the non-member terminal, the identification information of the ticket examination machine indicate data which must be specified in some cases but do not need to be specified in other cases, depending on the situation such as the type (s) of inter-terminal communications sections and ticket examination communications sections.

In the advance processing illustrated in FIG. 28A, the non-member terminal sends the advance processing request together with advance information to the member terminal (3201), while the member terminal returns advance information containing secret information to the non-member terminal as a response to the advance processing request (3202).

In addition, in the ticket examination processing illustrated in FIG. 28B, the non-member terminal sends a ticket examination inquiry request together with information which is necessary for identification of the non-member terminal itself to the ticket examination machine (3203), and the ticket examination machine returns information which indicates the kind of the ticket required for executing ticket examination to the non-member terminal as a response to the ticket examination inquiry request (3204).

Then, based on the returned information, which indicates the kind of the required ticket, received from the ticket examination machine as the response, the non-member terminal sends a ticket examination request to the member terminal, where the ticket examination request includes information indicating the kind of the ticket, information required for identification of the non-member terminal, secret information which has been pre-received from the member terminal in advance processing, and so on (3205).

Upon reception of the ticket examination request, the member terminal authenticates the non-member terminal by referring to the secret information contained in the ticket examination request, and also judges whether the use of the ticket is approved or disapproved (3206), and in a case where the requested use of the ticket is approved, the member terminal returns, as a ticket examination command, the data of the ticket to be used and the information required for identification of the non-member terminal to the non-member terminal (3207), thereby the member terminal providing support in the ticket examination processing.

Upon reception of the ticket examination command from the member terminal, the non-member terminal transfers the ticket examination command to the ticket examination machine without any processing (3208). This allows the ticket examination machine to execute ticket examination processing in accordance with the ticket examination command sent from the member terminal by way of the non-member terminal. In this way, because the ticket examination command issued from the member terminal is sent to the ticket examination machine by way of the non-member terminal, when it is viewed from the point of the ticket examination machine, it looks as though the ticket examination command was issued from the non-member terminal, which allows the ticket examination processing to be executed for the benefit of the non-member terminal.

Here, as the first procedure, an explanation is given on a case where a ticket examination request is sent to a member terminal after the contents of processing is inquired by a non-member terminal to a ticket examination machine.

First of all, upon inputting of ticket examination instructions by a non-member at input section 2019 (step ST 2401), request generation section 2006 generates a ticket examination inquiry request (FIG. 25C) based on a request identifier, which indicates that the request is a ticket examination inquiry request issued against a ticket examination machine, and an apparatus identifier of the non-member terminal, and the generated ticket examination inquiry request is provided to ticket examination communications section 2007. Ticket examination communications section 2007 sends the ticket examination inquiry request received from request generation section 2006 to ticket examination machine 2003 (step ST 2402), and upon reception of the ticket examination inquiry request, ticket examination machine 2003 generates a response (FIG. 25D) based on a request identifier, which indicates that the reply is a response to the ticket examination inquiry request, and on information which indicates the kind of the ticket required for executing ticket examination, and sends the generated response to ticket examination communications section 2007 (step ST 2403).

Upon acquisition of the response from ticket examination machine 2003, which is made in reply to the ticket examination inquiry request, via ticket examination communications section 2007, request generation section 2006 generates a ticket examination request based on information which indicates the kind of the ticket being required for executing ticket examination, which is requested from the ticket examination machine, the request identifier which indicates that the request is a ticket examination request, and the apparatus identifier of the non-member terminal, and then sends the generated ticket examination request to coordination processing section 2010. Alternatively, in a case where the non-member terminal has been notified of the information related to the tickets which are approved to be used from the member terminal, the non-member terminal may retrieve the same kind of the ticket as the ticket being requested from the ticket examination machine among the notified tickets approved to be used, and may use the information indicating the retrieved ticket for the purpose of the ticket examination request instead of the aforementioned information which indicates the kind of the ticket being required for executing ticket examination.

Upon reception of the ticket examination request, coordination processing section 2010 acquires the address of the member terminal from connection end information storage section 2009, and adds the acquired address to the ticket examination request (step ST 2404), and further adds the password inputted by the non-member to the ticket examination request. Then, coordination processing section 2010 sends the ticket examination request (FIG. 25E) to coordination processing section 2011 via inter-terminal communications section 2004 and 2005 (step ST 2405). It is noted that the timing of password input by the non-member may be during a time period from the generation of the ticket examination request through the reaching of the generated ticket examination request to the member terminal, or during a time period from the reception of the response from the ticket examination machine by the non-member terminal through the generation of the ticket examination request. In addition, in a case where the member possesses a plurality of terminals each of which is able to store the ticket (s) possessed by the member, and in a case where the non-member terminal has received a list of the addresses of such terminals in advance processing, the non-member terminal is assumed to perform sequential retrieval for searching and selecting of the other end of connections out of the list.

Coordination processing section 2011 sends the ticket examination request to request contents identification section 2012, and request contents identification section 2012 identifies that the request sent to the section 2012 itself is a ticket examination request by referring to the request identifier, and notifies such identification to coordination processing section 2011. Coordination processing section 2011 acquires the advance information of the non-member terminal out of advance information storage section 2014, and sends the acquired advance information together with the password and the apparatus identifier of the non-member terminal contained in the ticket examination request to non-member terminal authentication section 2017.

Non-member terminal authentication section 2017 compares the stored password with the password contained in the ticket examination request, and also compares the advance information of the non-member terminal sent from coordination processing section 2011 with the apparatus identifier of the non-member terminal for authentication of the non-member terminal, and upon successful authentication of the non-member terminal, the section 2017 notifies the success in authentication to coordination processing section 2011 (step ST 2406).

Upon reception of the notification of the successful authentication, coordination processing section 2011 sends the information which indicates the kind of the ticket required for executing ticket examination to ticket storage section 2016, where such information is contained in the ticket examination request. Next, the information which indicates the ticket requested from the non-member terminal is sent to display section 2021 to be displayed on the member terminal screen, and then the member inputs either an approval / disapproval for the use of the requested ticket through input section 2020 (step ST 2407).

When the use of the ticket is approved, ticket processing section 2018 acquires the data of the ticket to be used from ticket storage section 2016, and adds the acquired data to the request identifier which indicates that it is a ticket examination command (FIG. 25F) (step ST 2408), and sends the generated ticket examination command to coordination processing section 2011. Upon reception of the ticket examination command, coordination processing section 2011 adds the apparatus identifier of the non-member terminal to the ticket examination command, and sends the command to coordination processing section 2010 via inter-terminal communications section 2005 and 2004 (step ST 2409). Alternatively, the request identifier which indicates that it is a ticket examination command may be added to the ticket examination command at coordination processing section 2011.

Coordination processing section 2010 sends the ticket examination command to ticket examination communications section 2007, and then the ticket examination command is further transferred from ticket examination communications section 2007 to ticket examination machine 2003 (step ST 2410) so that ticket examination processing is executed there (step ST 2411). It is noted that, herein, the ticket examination processing such as a kind of processing for rewriting the contents of the ticket to label the ticket as the already-used one may be performed, actually, either at the side of the ticket examination machine or the side of the member terminal.

Next, as the second procedure, an explanation is given on a case where a ticket examination request is sent from a non-member terminal to a member terminal, and the non-member terminal initiates communications with a ticket examination machine only after a member approves the request and sends a ticket examination command to the non-member terminal.

First of all, when a non-member inputs ticket examination instructions through input section 2019, request generation section 2006 generates a ticket examination request based on the request identifier which indicates that the request is a ticket examination request, information which indicates the kind of the ticket being required for executing ticket examination, and the apparatus identifier of the non-member terminal, and then sends the generated ticket examination request to coordination processing section 2010.

Next, coordination processing section 2010 acquires the address of the member terminal out of connection end information storage section 2009 to add the acquired address to the ticket examination request, further acquires the password inputted by the non-member to further add the acquired password to the ticket examination request, and sends the ticket examination request to coordination processing section 2011 via inter-terminal communications section 2004 and 2005. It is noted that the timing of password input by the non-member may be during a time period from the generation of the ticket examination request through the reaching of the generated ticket examination request to the member terminal, or during a time period from the inputting of the ticket examination instructions by the non-member through the generation of the ticket examination request. In addition, in a case where the member possesses a plurality of terminals each of which is able to store the ticket (s) possessed by the member, and in a case where the non-member terminal has received a list of the addresses of such terminals in advance processing, the non-member terminal is assumed to perform sequential retrieval for searching and selecting of the other end of connections out of the list.

Coordination processing section 2011 sends the ticket examination request to request contents identification section 2012, and request contents identification section 2012 identifies that the request sent to the section 2012 itself is a ticket examination request by referring to the request identifier, and notifies such identification to coordination processing section 2011. Coordination processing section 2011 acquires the advance information of the non-member terminal out of advance information storage section 2014, and sends the acquired advance information together with the password and the apparatus identifier of the non-member terminal contained in the ticket examination request to non-member terminal authentication section 2017.

Non-member terminal authentication section 2017 compares the stored password with the password contained in the ticket examination request sent to the section 2017 itself, and also compares the advance information of the non-member terminal with the apparatus identifier of the non-member terminal for authentication of the non-member terminal, and upon successful authentication of the non-member terminal, the section 2017 notifies the success in authentication to coordination processing section 2011.

Upon reception of the notification of the successful authentication, coordination processing section 2011 sends the ticket examination request to ticket storage section 2016.

Next, the information which indicates the ticket requested from the non-member terminal, where such information is contained in the ticket examination request, is sent to display section 2021 to be displayed on the member terminal screen, and then the member inputs either an approval / disapproval for the use of the requested ticket through input section 2020.

When the use of the ticket is approved, ticket processing section 2018 acquires the data of the ticket to be used from ticket storage section 2016, and adds the acquired data to the request identifier which indicates that it is a ticket examination command, and sends the generated ticket examination command to coordination processing section 2011.

Upon reception of the ticket examination command, coordination processing section 2011 sends the ticket examination command to coordination processing section 2010 via inter-terminal communications section 2005 and 2004.

Coordination processing section 2010 sends the ticket examination command received from the member terminal to ticket examination communications section 2007, and then the ticket examination command is further transferred from ticket examination communications section 2007 to ticket examination machine 2003 so that ticket examination processing is executed there. It is noted that, herein, the ticket examination processing such as a kind of processing for rewriting the contents of the ticket to label the ticket as the already-used one may be performed, actually, either at the side of the ticket examination machine or the side of the member terminal.

The first procedure has an advantage in that non-member terminal 2001 is able to acquire information as to which processing must be requested to member terminal 2002 even in a case where non-member terminal 2001 does not know the kind of the ticket being requested from ticket examination machine 2003, while the second procedure is suitable for a situation where the kind of the ticket required for ticket examination processing has already been known, as in a case where the non-member stands just in front of ticket examination machine 2003, and the second procedure has an advantage in that non-member terminal 2001 does not have to conduct communications with ticket examination machine 2003 provided that member terminal 2002 disapproves the request.

Through the adoption of these methods, even when the member is located away from ticket examination machine 2003 and non-member terminal 2001, the non-member is still able to execute ticket examination processing in communications with ticket examination machine 2003 which is just in front of him / her on the other end of connections. In other words, when it is viewed from the point of ticket examination machine 2003, although it looks as though ticket examination machine 2003 itself was executing ticket examination processing between ticket examination machine 2003 itself and non-member terminal 2001, as a matter of fact, ticket examination machine 2003 executes ticket processing between ticket examination machine 2003 itself and member terminal 2002, and upon completion of the ticket examination processing, the ticket examination machine opens its gate, etc., to allow the non-member who is in front of the ticket examination machine itself to enter through the gate.

In addition, in a case where Bluetooth or IrDA is used as inter-terminal communications sections 2004 and 2005, there is a produced effect in that communications are performed in a lower cost in comparison with a case where a public switched telephone network is employed, while on the other hand, in a case where, for example, wide area communications media such as public switched telephone network is used as inter-terminal communications sections 2004 and 2005, there is a produced effect in that it is possible to execute ticket examination by a non-member's using a ticket possessed by a member even when the member is located far away from the non-member.

According to the present invention, what are required to be provided in non-member terminal 2001 include input section 2019, request generation section 2006, connection end information storage section 2009, coordination processing section 2010, and advance information storage section 2013. Even if these sections are provided as a program(s), such a program does not contain any business know-how nor any other valuable information, and therefore has no risk of leaking-out thereof even when the program is analyzed, and accordingly the program may be prepared as a downloadable program which anyone can download it freely.

As described above, according to the present embodiment, by providing non-member terminal 2001 with request generation section 2006, connection end information storage section 2009, coordination processing section 2010, and advance information storage section 2013, while by providing member terminal 2002 with coordination processing section 2011, non-member terminal authentication section 2017, request contents identification section 2012, advance information storage section 2014, and advance information generation section 2015, there is a produced effect in that it becomes possible for a non-member to use a ticket, attained by giving an approval from a member for use of the ticket, and;
1. It is possible for a non-member, who is not provided with a program or a device for handling the ticket, to use a ticket possessed by a member.
2. It is not necessary to provide a non-member with a ticket, and a program for handling the ticket.
3. Because an approval given at a member terminal side is required for using a ticket, it is clear where the responsibility rests at the time of the occurrence of a trouble in relation to the use of the ticket by a non-member.
4. It is not necessary to employ different processing methods at a ticket examination machine for the case of ticket possessed and used by a member and for the case of ticket used by a non-member but actually possessed by a member.
5. In a case where a non-member executes ticket examination by using a ticket held by a member, the non-member is able to carry through ticket examination processing even when not both of the member and the non-member are present, and in addition, the both persons are able to execute ticket examination processing regardless of which person has gone through the processing earlier.
6. In comparison with a centralized control type system which deploys a server between a member terminal and a non-member terminal, it is possible to reduce system construction cost, system operation cost, and other costs.
7. There is a possibility to achieve a lower communications cost because it is possible to conduct communications between a member terminal and a non-member terminal without going by way of a server.
There are effects, including without limitation, as enumerated above.

As a matter of course, it is possible for one owner of member terminal 2002 to purchase a group of tickets in a package deal and to allow a plurality of persons to use each ticket, and by doing in such a way, it is further possible, in the case of reserved-seat system, to purchase tickets for grouped reserve seats.

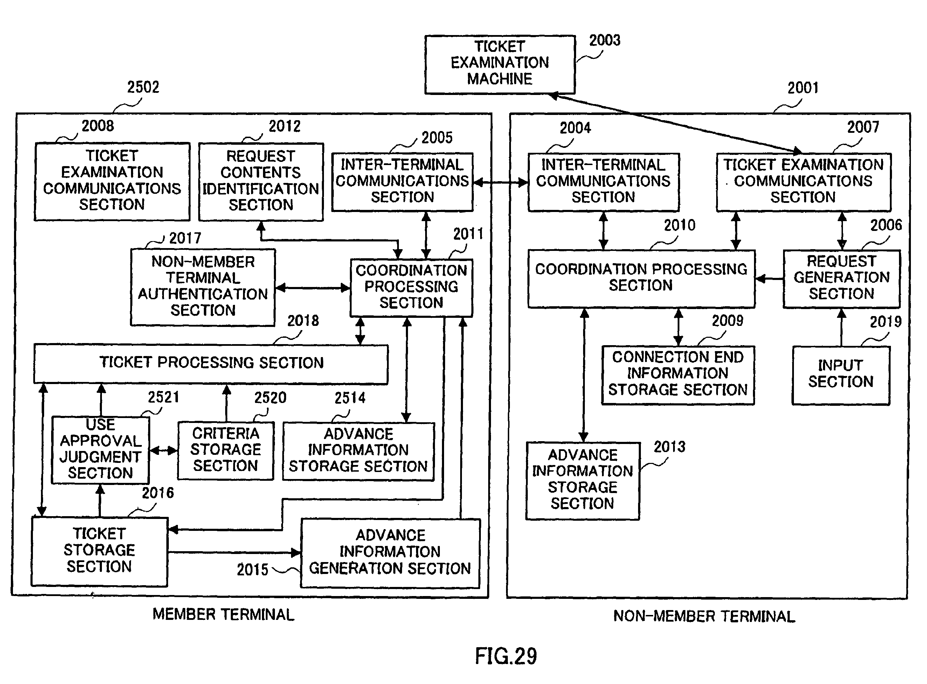

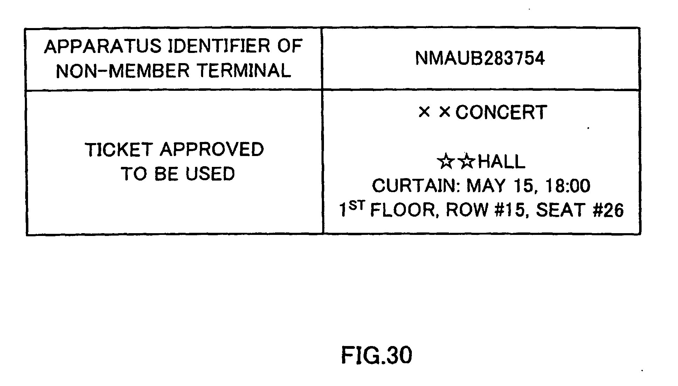

Alternatively, as illustrated in FIG. 29, in which the identical reference numerals are assigned to the parts which correspond to those in FIG. 22, member terminal 2502 may be provided with criteria storage section 2520 and use approval judgment section 2521. In this case, the storing of approval criteria in criteria storage section 2520 produces an effect in that it is possible to automatically judge whether the requested use of the ticket is approved / disapproved by comparing the ticket examination request sent from the non-member with the approval criteria, which also reduces the burden of trouble and time required for ticket examination processing for the benefit of the member. The data of the approval criteria includes, for example, the apparatus identifier of the non-member terminal, information related to the ticket(s) approved to be used by the non-member, and so on. FIG. 30 illustrates one example of approval criteria.

With the present invention applied to ticket examination, even when the member is located away from ticket examination machine 2003 and non-member terminal 2001, the non-member is still able to conduct communications with ticket examination machine 2003 which is just in front of him / her. In such a situation, when it is viewed from the point of ticket examination machine 2003, it looks as though ticket examination machine 2003 were executing ticket examination processing in communications with non-member terminal 2001, as a matter of fact, however, ticket examination machine 2003 executes the processing of the ticket in communications with member terminal 2502.

### (Embodiment 8)

In the explanation given in Embodiments 3 through 6, a dominant role for processing (as done by coordination processing / authentication section 510, and so on) of authentication, which is performed based on advance processing information, is played by a non-member terminal (simplified apparatus) side; however, it is perfectly all right even if such a role is, conversely, played by a member terminal (standard apparatus) side.

In this embodiment, an explanation is given on a case where a member terminal (standard apparatus) side plays an active role in executing advance-processing authentication, and especially on a case where service models described in Embodiments 1 and 2 are applied to settlement processing such as credit card (hereafter simply referred to as "card") number settlement and the like (here, processing target apparatus 103 corresponds to a settlement machine, simplified apparatus 101 corresponds to a non-member terminal, which is not provided with settlement processing capabilities, and standard apparatus 102 corresponds to a member terminal, which is provided with settlement processing capabilities). Information which is necessary for making settlement, such as a user's card number, is stored by the user in his / her terminal, and at the occasion of making settlement, s/he is able to use it by conducting communications between a settlement machine and his / her terminal.

It is noted that the present embodiment modifies Embodiment 5 in such a way that a member terminal notifies the kind(s) of card(s) approved to be used to a non-member terminal at the phase of advance processing. Though the detailed explanation of a part of processing such as authentication is omitted in Embodiment 5 for simplification, in this embodiment, an explanation of processing procedure as well as of the contents of data transferred is provided in greater detail. In addition, in Embodiment 5, an explanation is given on a case where a dominant role for performing authentication, which is performed based on advance processing, is played by non-member terminal side; in contrast, it is explained here regarding authentication actively performed by the member terminal side in the present embodiment.

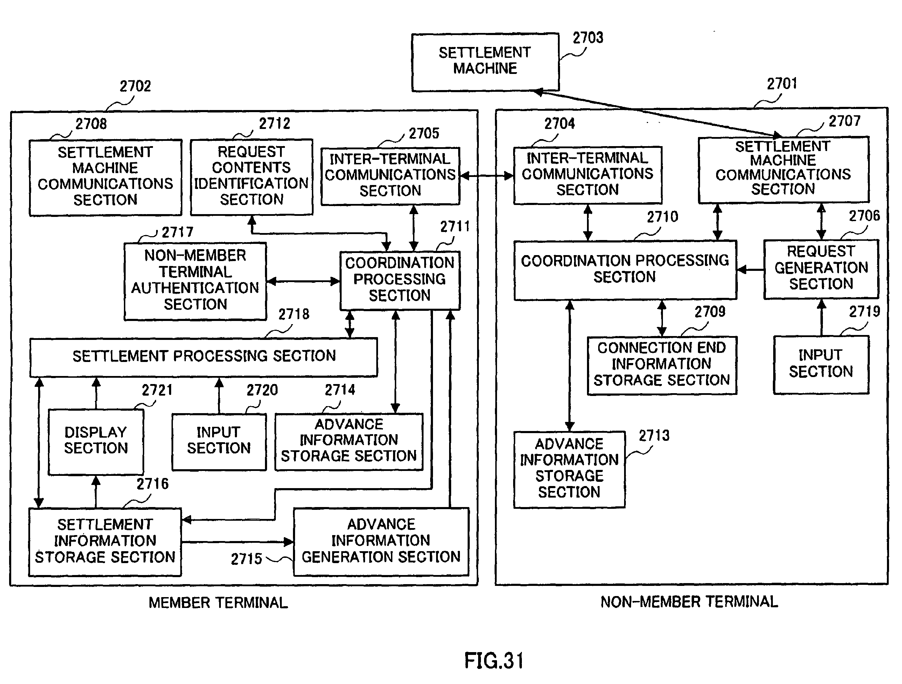

FIG. 31 is a diagram illustrating Embodiment 8 according to the present invention. Reference numeral 2701 is a non-member terminal, while reference numeral 2702 is a member terminal. Reference numeral 2703 is a settlement machine for execution of settlement processing. In this embodiment, an explanation is given with an example of mobile phones both for the member terminal and non-member terminal, however they are not limited to mobile phones, but they may be other kinds of terminals such as PDAs, notebook-sized personal computers, and so on. In addition, the member terminal may be a home server, a central server which provides a global control on such a server, or a non-mobile terminal such as a set top box and so forth.

Inter-terminal communications sections 2704 and 2705 are sections that are used for conducting communications between terminals, and examples of such sections include modems which utilize a telephone network, Bluetooth as well as wireless LAN both of which employ radio wave, IrDA which use infrared radiation, and so on.

Request generation section 2706 is a section that generates a request to be transmitted based on an inputted command and information acquired from other section.

Settlement machine communications sections 2707 and 2708 are sections that are used for conducting communications between member terminal 2702 and settlement machine 2703 or between non-member terminal 2701 and settlement machine 2703, and examples of such sections include modems which utilize a telephone network, Bluetooth as well as wireless LAN both of which employ radio wave, IrDA which use infrared radiation, and so on. It is noted that settlement machine communications sections 2707 and 2708 may be the same media as inter-terminal communications sections 2704 and 2705.

Connection end storage section 2709 is a section that stores information required for making connections to other terminal.

Coordination processing sections 2710 and 2711 are sections that relay data or a command between sections of its own terminal (i.e. terminal accommodating the sections 2710 and 2711).

Request contents identification section 2712 is a section that identifies the contents of a request from a non-member terminal, including: which kind of request it is, from which terminal the request is issued, which kind of processing is being requested, and so on.

Advance information storage sections 2713 and 2714 are sections that store advance information received from a non-member terminal or a member terminal.

Advance information generation section 2715 is a section that generates advance information based on information acquired from other section.

Settlement information storage section 2716 is a section that stores information required for execution of settlement processing such as credit card number, etc., and storage may be implemented by hardware such as an IC chip for data protection, or by program in a processed or encrypted form in storage area of a memory chip or hard disk, etc., so that the stored data is not easily read out.

Non-member terminal authentication section 2717 is a section that authenticates non-member terminal 2701 by using information acquired from non-member terminal 2701 through the inter-terminal communications sections of member terminal 2702 and of non-member terminal 2701, and the section 2717 is assumed to use, for example, a password scheme, a challenge response scheme, and so on.

Settlement processing section 2718 is a section that generates a settlement command to send the generated command to either the settlement machine communications section or the coordination processing section.

Input sections 2719 and 2720 are sections through which the user enters a confirmation and a command for making settlement processing.

Display section 2721 is a section that acquires information required for making settlement from the settlement information storage section and that displays the acquired information.

Next, an explanation is given here on a case where the non-member makes settlement by using information held by the member, and in this explanation, it is assumed for illustration purpose that wireless LAN is used for inter-terminal communications sections 2704 and 2705, while IrDA is used for settlement machine communications sections 2707 and 2708, and further assumed that the apparatus identifier of non-member terminal 2701 as well as the password thereof is used for authentication of non-member terminal 2701 by member terminal 2702.

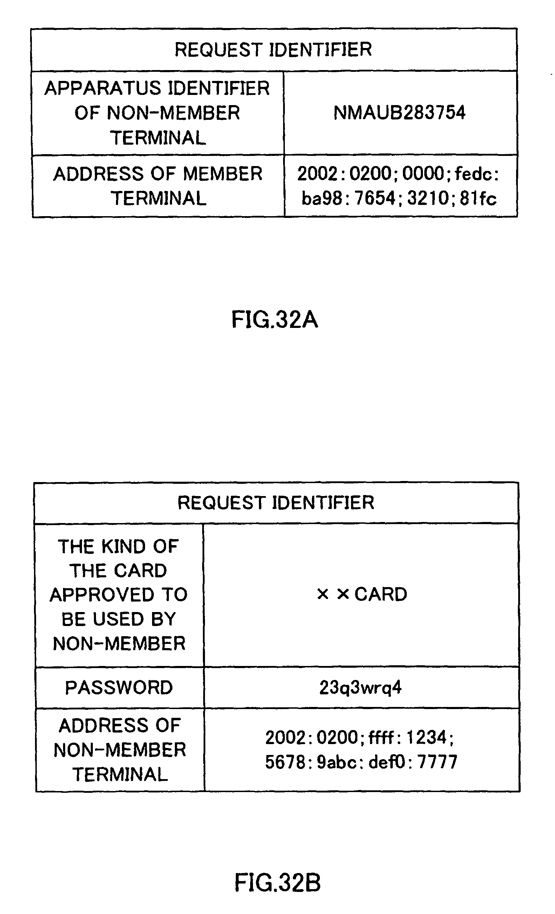

The procedure of advance processing which must be performed before making settlement is as illustrated in FIG. 24, and because it is almost the same as the procedure in Embodiment 7, its explanation is omitted here. An example of data transferred from non-member terminal 2701 to member terminal 2702 in advance processing is illustrated in FIG. 32A, while an example of data transferred from member terminal 2702 to non-member terminal 2701 in advance processing is illustrated in FIG. 32B. It is noted that the advance information which is provided from member terminal 2702 to non-member terminal 2701 in advance processing does not necessarily have to contain information which indicates the kind(s) of card(s) approved by the member to be used by the non-member.

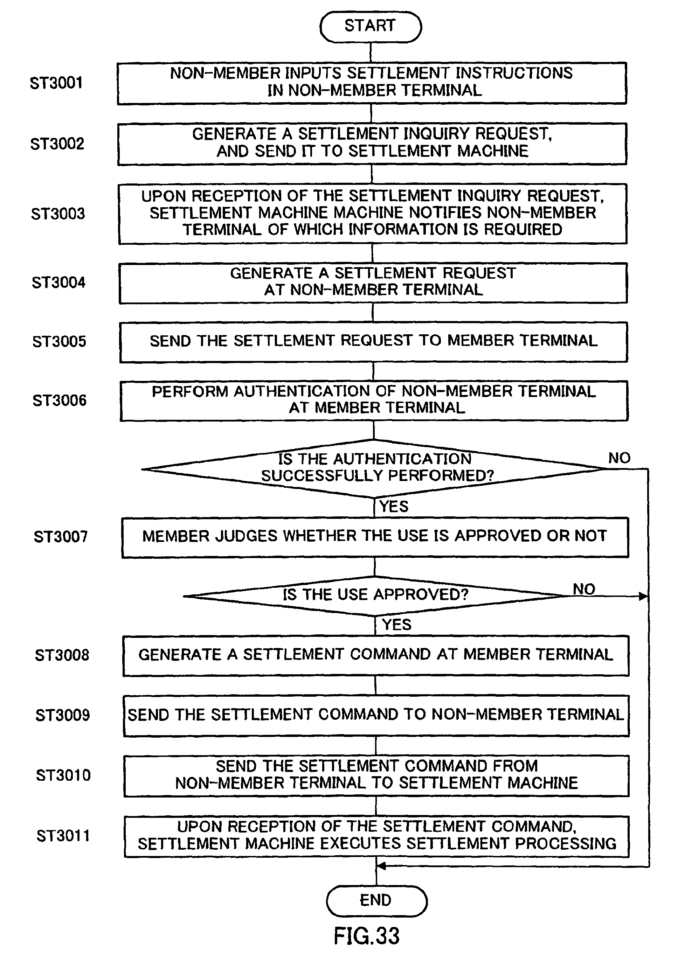

An explanation of the settlement processing after advance processing is given below with reference to FIG. 31 and FIG. 33.

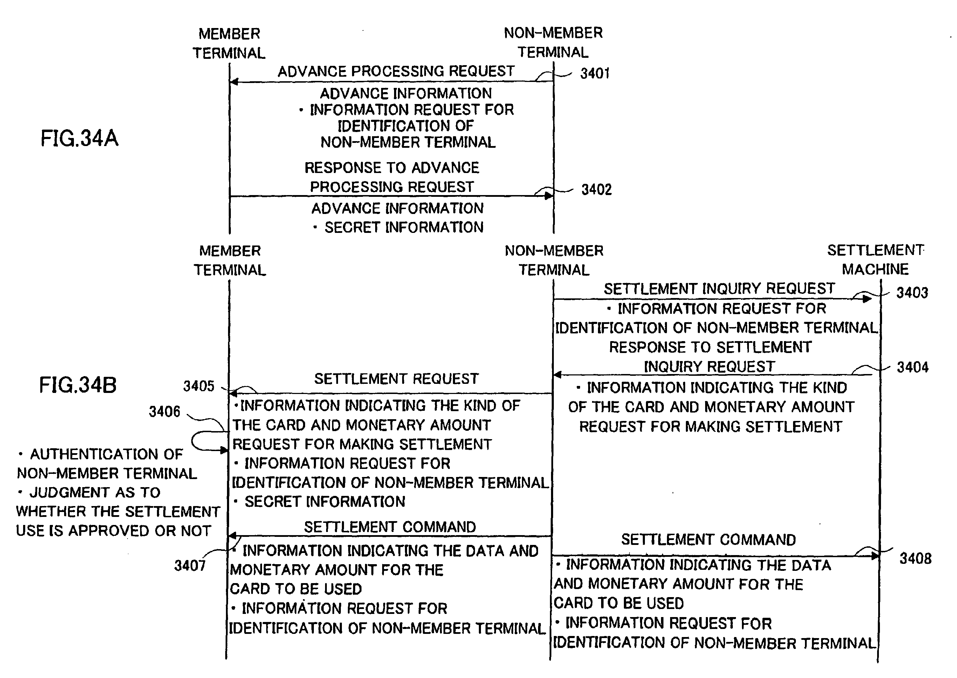

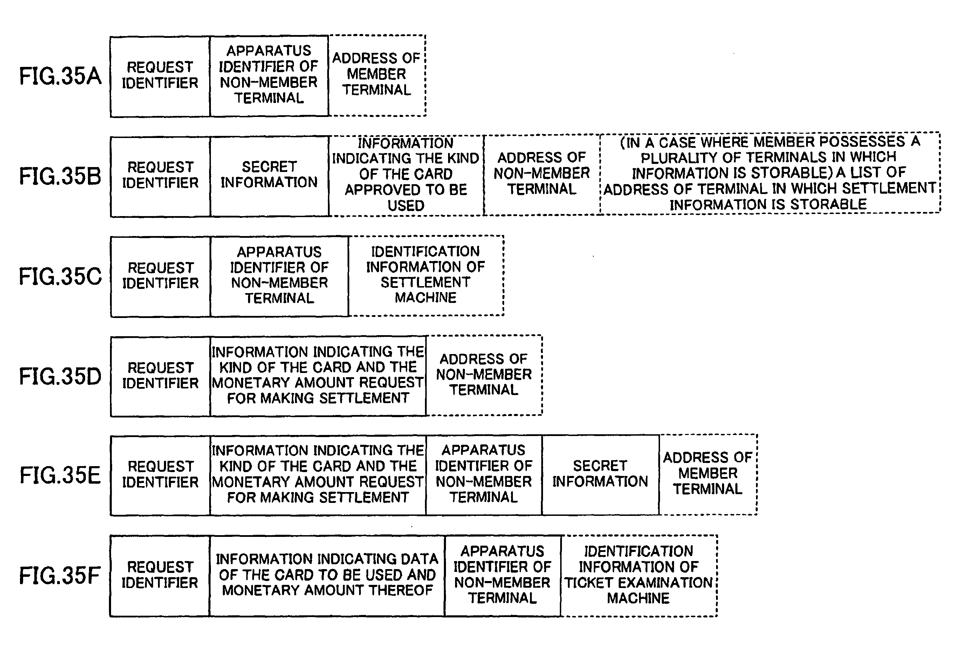

Here, it is discussed regarding the two patterns of procedures: one procedure in which non-member terminal 2701 inquires the contents of processing to settlement machine 2703, and after that, non-member terminal 2701 sends a settlement request which contains the response given from settlement machine 2703 to member terminal 2702, and another procedure in which non-member terminal 2701 sends a settlement request to member terminal 2702; and after the member approves the request from the non-member and then sends a settlement command to non-member terminal 2701, non-member terminal 2701 initiates connections to settlement machine 2703. FIG. 33 illustrates the processing flow which shows a case where the former procedure is adopted. FIG. 34A and FIG. 34B illustrates a sequence chart including advance processing. The configuration examples of data to be transferred are illustrated in FIG. 35A through FIG. 35F. In FIG. 35A through FIG. 35F, portions boxed in dotted lines, that is, the address of the member terminal, the address of the non-member terminal, the identification information of the settlement machine indicate data which must be specified in some cases but do not need to be specified in other cases, depending on the situation such as the type (s) of inter-terminal communications sections and settlement machine communications sections.

In the advance processing illustrated in FIG. 34A, the non-member terminal sends the advance processing request (FIG. 35A) together with advance information to the member terminal (3401), while the member terminal returns advance information containing secret information (FIG. 35B) to the non-member terminal as a response to the advance processing request (3402).

In addition, in the settlement processing illustrated in FIG. 34B, the non-member terminal sends a settlement inquiry request together with information which is necessary for identification of the non-member terminal itself to the settlement machine (3403), and the settlement machine returns information which indicates the kind of the card to be used for making the settlement and the monetary amount required for the settlement to the non-member terminal as a response to the settlement inquiry request (3404).

Then, based on the returned information, which indicates the kind of the required card and monetary amount, received from the settlement machine as the response, the non-member terminal sends a settlement request to the member terminal, where the settlement request includes information indicating the kind of the card and the monetary amount, information required for identification of the non-member terminal, secret information which has been pre-received from the member terminal in advance processing, and so on (3405).

Upon reception of the settlement request, the member terminal authenticates the non-member terminal by referring to the secret information contained in the settlement request, and also judges whether the requested settlement is approved or disapproved (3406), and in a case where the requested use of the card and the monetary amount is approved, the member terminal returns, as a settlement command, the data of the card to be used as well as the data indicating the monetary amount, and the information required for identification of the non-member terminal to the non-member terminal (3407), thereby the member terminal providing support in the settlement processing.

Upon reception of the settlement command from the member terminal, the non-member terminal transfers the settlement command to the settlement machine without any processing (3408). This allows the settlement machine to execute settlement processing in accordance with the settlement command sent from the member terminal by way of the non-member terminal. In this way, because the settlement command issued from the member terminal is sent to the settlement machine by way of the non-member terminal, when it is viewed from the point of the settlement machine, it looks as though the settlement command was issued from the non-member terminal, which allows the settlement processing to be executed for the benefit of the non-member terminal.

Here, as the first procedure, an explanation is given on a case where a settlement request is sent to a member terminal after the contents of processing is inquired by a non-member terminal to a settlement machine.

First of all, upon inputting of settlement instructions by a non-member at input section 2719 (step ST 3001), request generation section 2706 generates a settlement inquiry request (FIG. 35C) based on a request identifier, which indicates that the request is a settlement inquiry request issued against settlement machine 2703, and an apparatus identifier of non-member terminal 2701, and the generated settlement inquiry request is provided to settlement machine communications section 2707. Settlement machine communications section 2707 sends the settlement inquiry request received from request generation section 2706 to settlement machine 2703 (step ST 3002), and then settlement machine 2703 generates a response (FIG. 35D) based on a request identifier, which indicates that the reply is a response to the settlement inquiry request, and on information which indicates the kind of the card required for making the settlement as well as on information indicating the contents of processing being requested by the settlement machine, such as the required monetary amount information, and sends the generated response to settlement machine communications section 2707 (step ST 3003).

Upon acquisition of the response from settlement machine 2703, which is made in reply to the settlement inquiry request, via settlement machine communications section 2707, request generation section 2706 generates a settlement request based on information which indicates the kind of the card as well as the monetary amount being required for making the settlement, which is requested from the settlement machine, the request identifier which indicates that the request is a settlement request, and the apparatus identifier of non-member terminal 2701, and then sends the generated settlement request to coordination processing section 2710. It is noted that, herein, regarding the information which indicates the monetary amount being required by the settlement machine, where such information is contained in the settlement request, it may be information which indicates the amount of shortage in a case where non-member terminal 2701 is provided with a settlement function. In addition, in a case where information indicating the kind(s) of card(s) approved to be used is contained in the information which has been received by the non-member terminal from the member terminal in advance processing, the non-member terminal may retrieve the same kind of the card as the card being requested from the settlement machine among the pre-notified cards approved by the member terminal to be used, and may use the information indicating the retrieved card for the purpose of the settlement request instead of the aforementioned information which indicates the kind of the card being required for making the settlement.

Upon reception of the settlement request, coordination processing section 2710 acquires the address of the member terminal from connection end information storage section 2709, and adds the acquired address to the settlement request, and further acquires the password inputted by the non-member to add the acquired password to the settlement request (step ST 3004). Coordination processing section 2710 sends the settlement request (FIG. 35E) to coordination processing section 2711 via inter-terminal communications section 2704 and 2705 (step ST 3005). It is noted that, in a case where the member possesses a plurality of terminals each of which is able to store the settlement information held by the member, and in a case where non-member terminal 2701 has received a list of such terminals in advance processing, non-member terminal 2701 is assumed to conduct sequential retrieval for searching and selecting of the other end of connections out of the list.

Next, coordination processing section 2711 sends the settlement request to request contents identification section 2712, and request contents identification section 2712 identifies that the request sent to the section 2712 itself is a settlement request by referring to the request identifier, and notifies such identification to coordination processing section 2711. Coordination processing section 2711 acquires the advance information of the non-member terminal out of advance information storage section 2714, and sends the acquired advance information together with the password and the apparatus identifier of the non-member terminal contained in the settlement request to non-member terminal authentication section 2717.

Non-member terminal authentication section 2717 compares the stored password with the password contained in the settlement request, and also compares the advance information of the non-member terminal sent from coordination processing section 2711 with the apparatus identifier of the non-member terminal for authentication of the non-member terminal, and upon successful authentication of the non-member terminal, the section 2717 notifies the success in authentication to coordination processing section 2711 (step ST 3006).

Upon reception of the notification of the successful authentication, coordination processing section 2711 sends the information which indicates the kind of the card and the monetary amount required for making the settlement to settlement information storage section 2716, where such information is contained in the settlement request. Next, the information which indicates the card and the monetary amount requested from the non-member terminal is sent to display section 2721 to be displayed on the member terminal screen, and then the member inputs either an approval / disapproval for the requested settlement through input section 2720 (step ST 3007). It is noted that in a case where, in advance processing, the member has not sent to the non-member the information which indicates the kind of the card approved by the member to be used by the non-member, the member is assumed to select the card(s) approved to be used at the time of entering his / her approval.

When the requested settlement is approved, settlement processing section 2718 acquires the information required for making the settlement, including the data of the card to be used as well as the monetary amount and so forth, from settlement information storage section 2716, and adds the acquired information to the request identifier which indicates that it is a settlement command, thereby generating a settlement command (FIG. 35F) (step ST 3008), and sends the generated settlement command to coordination processing section 2711. Upon reception of the settlement command, coordination processing section 2711 adds the apparatus identifier of non-member terminal 2701 to the settlement command, and sends the command to coordination processing section 2710 via inter-terminal communications section 2705 and 2704 (step ST 3009).

Coordination processing section 2710 sends the received settlement command to settlement machine communications section 2707, and then the settlement command is further transferred from settlement machine communications section 2707 to settlement machine 2703 (step ST 3010) so that settlement processing is executed there (step ST 3011).

Next, as the second procedure, an explanation is given on a case where a settlement request is sent from a non-member terminal to a member terminal, and the non-member terminal initiates communications with a settlement machine only after a member approves the request and sends a settlement command to the non-member terminal.

First of all, when a non-member inputs settlement instructions through input section 2719, request generation section 2706 generates a settlement request based on the request identifier which indicates that the request is a settlement request, information which indicates the kind of the card and the monetary amount being required for making the settlement, and the apparatus identifier of the non-member terminal, and then sends the generated settlement request to coordination processing section 2710. It is noted that, in a case where information indicating the kind (s) of card (s) approved to be used is contained in the information which has been received by non-member terminal 2701 from member terminal 2702 in advance processing, non-member terminal 2701 may retrieve the same kind of the card as the card which is necessary for making the settlement among the pre-notified cards approved by member terminal 2702 to be used, and may use the information indicating the retrieved card for the purpose of the settlement request instead of the aforementioned information which indicates the kind of the card which is necessary for making the settlement.

Next, coordination processing section 2710 acquires the address of the member terminal out of connection end information storage section 2709, and further acquires the password inputted by the non-member to add the acquired password to the settlement request, and sends the settlement request to coordination processing section 2711 via inter-terminal communic ations section 2704 and 2705. It is noted that, in a case where the member possesses a plurality of terminals each of which is able to store the settlement information held by the member, and in a case where non-member terminal 2701 has received a list of such terminals in advance processing, non-member terminal 2701 is assumed to conduct sequential retrieval for searching and selecting of the other end of connections out of the list.

Coordination processing section 2711 sends the settlement request to request contents identification section 2712, and request contents identification section 2712 identifies that the request sent to the section 2712 itself is a settlement request by referring to the request identifier, and notifies such identification to coordination processing section 2711. Coordination processing section 2711 acquires the advance information of the non-member terminal out of advance information storage section 2714, and sends the acquired advance information together with the password and the apparatus identifier of the non-member terminal contained in the settlement request to non-member terminal authentication section 2717.

Non-member terminal authentication section 2717 compares the stored password with the password contained in the settlement request sent to the section 2717 itself, and also compares the stored advance information of the non-member terminal with the apparatus identifier of the non-member terminal for authentication of the non-member terminal, and upon successful authentication of the non-member terminal, the section 2717 notifies the success in authentication to coordination processing section 2711.

Upon reception of the notification of the successful authentication, coordination processing section 2711 sends the information which indicates the kind of information required for making the settlement to settlement information storage section 2716, where such information is contained in the settlement request.

Next, the information which indicates the card and the monetary amount, which is required for making the settlement and is requested from the non-member terminal, is sent to display section 2721 to be displayed on the member terminal screen, and then the member inputs either an approval / disapproval for the execution of the requested settlement processing through input section 2720. It is noted that in a case where, in advance processing, the member has not sent to the non-member the information which indicates the kind of the card approved by the member to be used by the non-member, the member is assumed to select the card (s) approved to be used at the time of entering his / her approval.

When the requested settlement processing is approved, settlement processing section 2718 acquires the information required for making the settlement, including the data of the card to be used as well as the monetary amount and so forth, from settlement information storage section 2716, to generate a settlement command, and sends the generated settlement command to coordination processing section 2711.

Upon reception of the settlement command, coordination processing section 2711 sends the settlement command to coordination processing section 2710 via inter-terminal communications section 2705 and 2704.

Coordination processing section 2710 sends the settlement command received from the member terminal to settlement machine communications section 2707, and then the settlement command is further transferred from settlement machine communications section 2707 to settlement machine 2003 so that settlement processing is executed there.

The first procedure has an advantage in that non-member terminal 2701 is able to acquire information as to which processing must be requested to member terminal 2702 even in a case where non-member terminal 2701 does not know the kind of the card or the monetary amount being requested from settlement machine 2703, while the second procedure is suitable for a situation where the kind of the card and the monetary amount required for settlement processing has already been known, as in a case where the non-member stands just in front of settlement machine 2703, and the second procedure has an advantage in that non-member terminal 2701 does not have to conduct communications with settlement machine 2703 provided that member terminal 2702 disapproves the request.

Through the adoption of these methods, even when the member is located away from settlement machine 2703 and non-member terminal 2701, the non-member is still able to execute settlement processing in communications with settlement machine 2703 which is just in front of him / her on the other end of connections. When it is viewed from the point of settlement machine 2703, it looks as though settlement machine 2703 were executing settlement processing in communications with non-member terminal 2701, as a matter of fact, however, settlement machine 2703 executes the settlement processing in communications with member terminal 2702.

In addition, in a case where Bluetooth or IrDA is used as inter-terminal communications sections 2704 and 2705, there is a produced effect in that communications are conducted in a lower cost in comparison with a case where a public switched telephone network is employed, while on the other hand, in a case where, for example, wide area communications media such as public switched telephone network is used as inter-terminal communications sections 2704 and 2705, there is a produced effect in that it is possible to execute settlement processing by a non-member' s using a card possessed by a member even when the member is located far away from the non-member.

According to the present invention, what are required to be provided in non-member terminal 2701 include input section 2719, request generation section 2706, connection end information storage section 2709, coordination processing section 2710, and advance information storage section 2713. Even if these sections are provided as a program(s), such a program does not contain any business know-how nor any other valuable information, and therefore has no risk of leaking-out thereof even when the program is analyzed, and accordingly the program may be prepared as a downloadable program which anyone can download it freely.

As described above, according to the present embodiment, by providing non-member terminal 2701 with request generation section 2706, connection end information storage section 2709, coordination processing section 2710, and advance information storage section 2713, while by providing member terminal 2702 with coordination processing section 2711, non-member terminal authentication section 2717, request contents identification section 2712, advance information storage section 2714, and advance information generation section 2715, there is a produced effect in that it becomes possible for a non-member to execute settlement processing, attained by giving an approval from a member for execution of the settlement processing, and;
1. It is possible for a non-member, who is not provided with a program or a device for dealing with information required for making settlement, to execute settlement processing.
2. It is not necessary to provide a non-member with member-only information such as a card number and so forth, or an application for processing such information.
3. Because an approval given at a member terminal side is required for execution of settlement processing, it is clear where the responsibility rests at the time of the occurrence of a trouble in relation to the settlement processing executed by a non-member.
4. It is not necessary to employ different processing methods at a settlement machine for the case of settlement made by a member and for the case of settlement made by a non-member by using information held by the member.
5. In a case where a non-member makes settlement by using a card held by a member, the non-member is able to carry through settlement processing even when not both of the member and the non-member are present.
6. In comparison with a centralized control type system which deploys a server between a member terminal and a non-member terminal, it is possible to reduce system construction cost, system operation cost, and other costs.
7. There is a possibility to achieve a lower communications cost because it is possible to conduct communications between a member terminal and a non-member terminal without going by way of a server.
There are effects, including without limitation, as enumerated above.

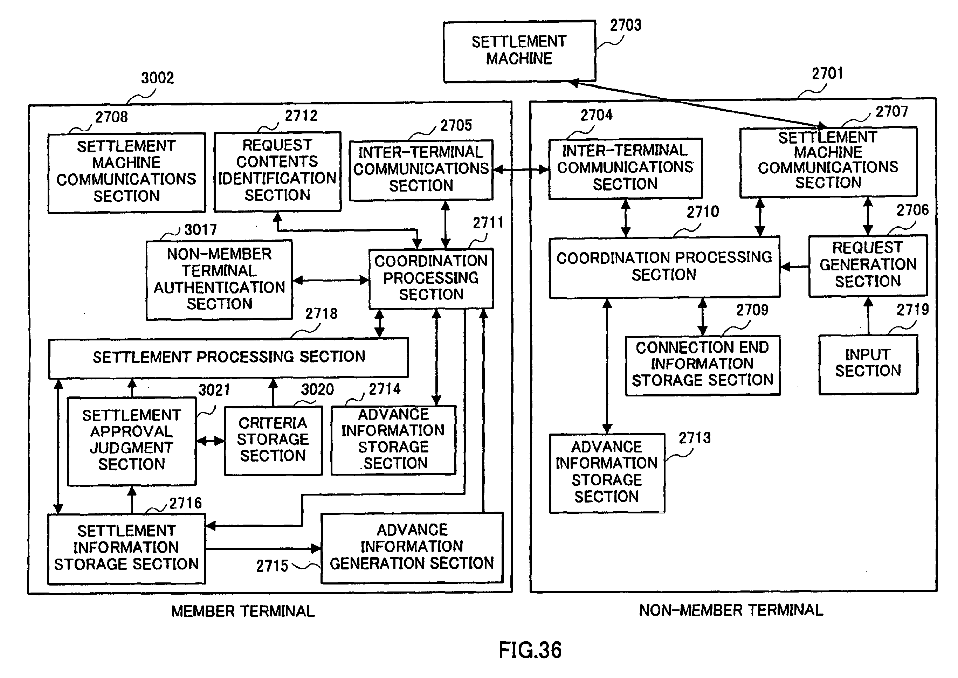

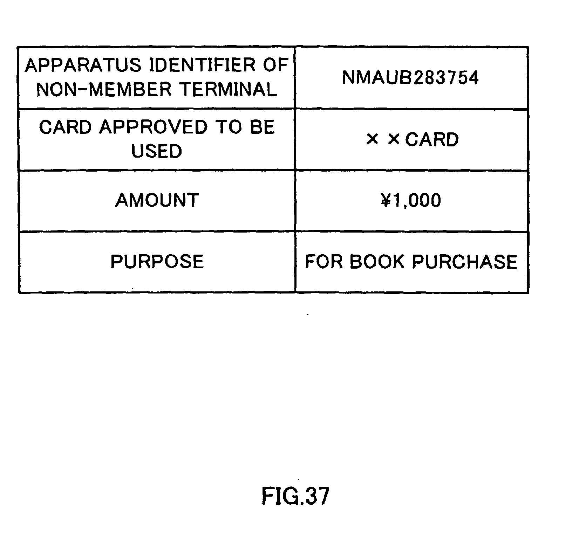

Alternatively, as illustrated in FIG. 36, in which the identical reference numerals are assigned to the parts which correspond to those in FIG. 31, member terminal 3002 may be provided with criteria storage section 3020 and settlement approval judgment section 3021. In this case, the storing of settlement approval criteria in criteria storage section 3020 produces an effect in that it is possible to automatically judge whether the requested settlement processing is approved / disapproved by comparing the settlement request sent from the non-member with the settlement approval criteria, which also reduces the burden of trouble and time required for settlement processing for the benefit of the member. The data of the settlement approval criteria includes, for example, the apparatus identifier of non-member terminal 2701, information indicating the contents of the settlement approved to be executed by the non-member, where such contents include monetary amount, use of the money, and so on. FIG. 37 illustrates one example of such approval criteria.

With the present invention applied to settlement processing, even when the member is located away from settlement machine 2703 and non-member terminal 2701, the non-member is still able to conduct communications with settlement machine 2703 which is just in front of him / her. In such a situation, when it is viewed from the point of settlement machine 2703, it looks as though settlement machine 2703 were executing settlement processing in communications with non-member terminal 2701, as a matter of fact, however, settlement machine 2703 executes the settlement processing in communications with member terminal 3002.

### (Embodiment 9)

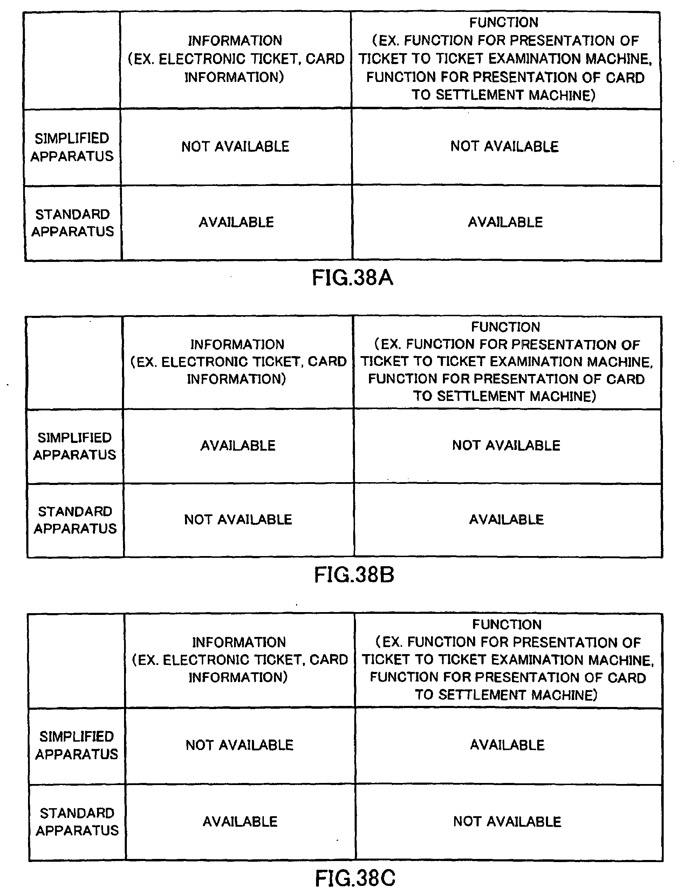

According to the above-described Embodiments 1 through 8, as illustrated in FIG. 38A, it is assumed that a simplified apparatus (non-member terminal) does not possess a ticket or card information, neither is the simplified apparatus provided with a function for presenting a ticket or a card to a processing target apparatus (ticket examination machine, settlement machine, and so on), however, on the contrary, it is assumed that a standard apparatus (member terminal) possesses a ticket or card information, and is also provided with a function for presenting a ticket or a card to a processing target apparatus (ticket examination machine, settlement machine, and so on). In contrast, in this embodiment, as illustrated in FIG. 38B, an explanation is given with an assumption that a simplified apparatus (non-member terminal) possesses a ticket or card information, however, is not provided with a function for presenting a ticket or a card to a processing target apparatus (ticket examination machine, settlement machine, and so on), while on the other side, it is assumed that although a standard apparatus (member terminal) does not possess a ticket or card information, the standard apparatus is provided with a function for presenting a ticket or a card to a processing target apparatus (ticket examination machine, settlement machine, and so on).

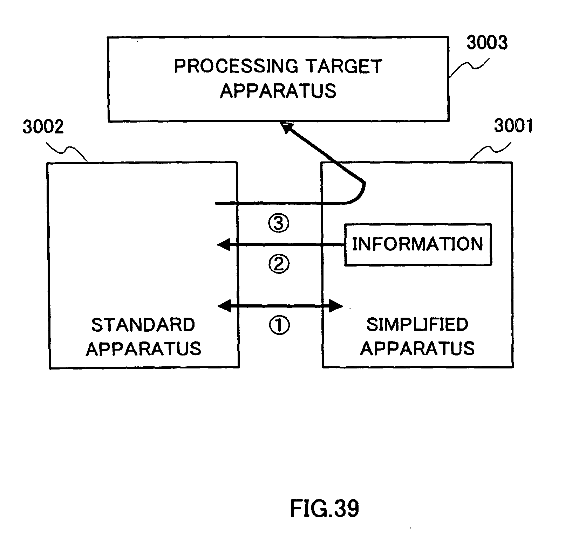

FIG. 39 is a diagram illustrating a processing flow between each of apparatuses in Embodiment 9 according to the present invention.

In FIG. 39, simplified apparatus 3001 is provided with a function to conduct communications with another apparatus, a function to request processing to said another apparatus, a function to give an approval for an authorized apparatus to conduct communications with some other apparatus other than said another apparatus by having the authorized apparatus going through the simplified apparatus 3001 itself, and a function to store ticket information or card information, and standard apparatus 3002 is provided with a function to conduct communications with another apparatus, and a function for an input or execution of a judgment on an approval / disapproval upon reception of a processing request from said another apparatus.

Processing target apparatus 3003 conducts communications with either simplified apparatus 3001 or standard apparatus 3002 to perform some kind of processing (for example, in a case of a ticket examinationsystemorasettlementprocessingsystem and so on, simplified apparatus 3001 and standard apparatus 3002 correspond to mobile phones, PDAs, notebook-sized personal computers, and so forth, while processing target apparatus 103 corresponds to a ticket examination machine, a settlement machine, and so forth).

That is, when the user of simplified apparatus 3001 wishes to perform some kind of processing with processing target apparatus 3003 on the other end, even if simplified apparatus 3001 alone is not able to do so because simplified apparatus 3001 is insufficient in terms of its functions, it is made to look as if simplified apparatus 3001 were performing the processing with processing target apparatus 3003 on the other end through the coordination of simplified apparatus 3001 with standard apparatus 3002. Namely, simplified apparatus 3001 has exchanged information (advance processing) with standard apparatus 3002 in advance [①], and makes some kind of a request, which is required for the processing with processing target apparatus 3003 on the other end, to standard apparatus 3002 based on the advance processing information at the occasion of the actual execution of the processing with processing target apparatus 3003 on the other end [②], while standard apparatus 3002 executes the processing with processing target apparatus 3003 on the other end not in direct communications but by way of simplified apparatus 3001 upon reception of the processing request [③].

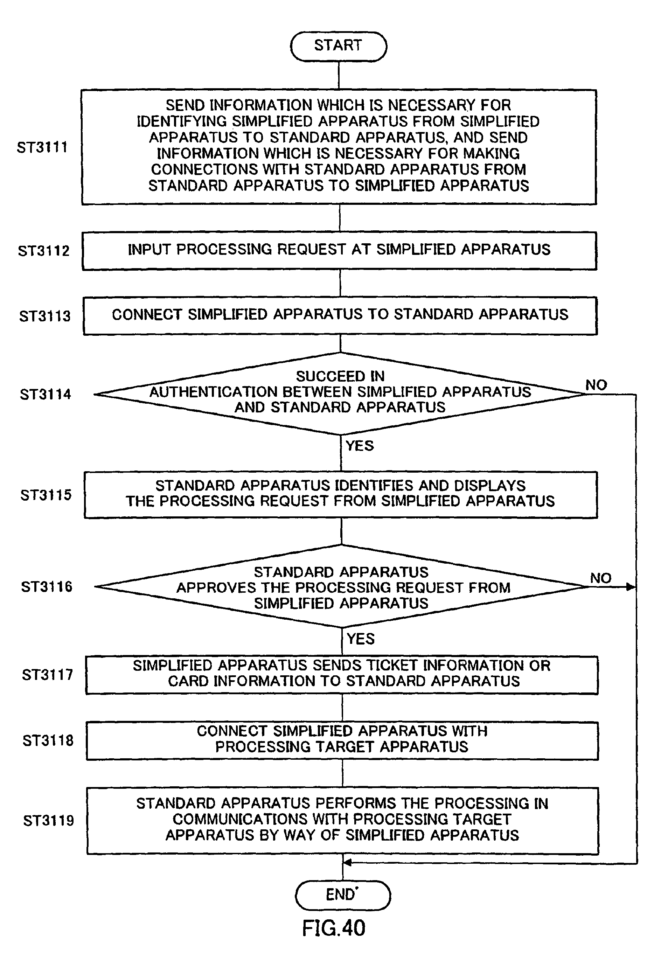

Next, a processing flow in Embodiment 9 is described below with reference to FIG. 39 and FIG. 40.

In advance, simplified apparatus 3001 provides information which is necessary for identifying simplified apparatus 3001 to standard apparatus 3002, while standard apparatus 3002 provides information which is necessary for making connections to standard apparatus 3002 to simplified apparatus 3001 (step ST 3111). Herein, in a case where both simplified apparatus 3001 and standard apparatus 3002 are mobile phones, each apparatus has exchanged information for identification of the apparatus itself with the other, that is, the telephone number (and the name) of the user of simplified apparatus 3001, which is used for identification of simplified apparatus 3001 by standard apparatus 3002, provided from simplified apparatus 3001 to standard apparatus 3002, and in reverse, the telephone number of standard apparatus 3002, which is used for the identification of standard apparatus 3002 by simplified apparatus 3001, provided from standard apparatus 3002 to simplified apparatus 3001.

Upon accepting an input of a processing request at simplified apparatus 3001 (step ST 3112), simplified apparatus 3001 generates a communication path between standard apparatus 3002 and processing target apparatus 3003 within simplified apparatus 3001 itself, and standard apparatus 3002 performs the processing in communications with processing target apparatus 3003 by way of simplified apparatus 3001. As a series of procedures to be performed after the advance processing, for example, it is possible to cite methods as described below.
1. Simplified apparatus 3001 sends a connection request to processing target apparatus 3003, while processing target apparatus 3003 makes a request for processing to simplified apparatus 3001 upon reception of the request. Next, simplified apparatus 3001 sends a connection request to standard apparatus 3002, and simplified apparatus 3001 and standard apparatus 3002 perform authentication to make connections between them. Simplified apparatus 3001 makes a request to standard apparatus 3002 for the execution of a part of processing which the simplified apparatus itself is unable to execute among the entire processing requested by processing target apparatus 3003. Next, standard apparatus 3002 identifies the contents of the request from simplified apparatus 3001 and displays the identified contents, and prompts the user of standard apparatus 3002 to enter either an approval / disapproval to the processing request. In a case where the requested processing is approved, simplified apparatus 3001 sends ticket information or card information to standard apparatus 3002. Standard apparatus 3002, in turn, executes the processing requested from simplified apparatus 3001 (i.e. processing in which the ticket information or the card information is utilized) in communications with processing target apparatus 3003 by way of simplified apparatus 3001 (a flowchart is omitted). Alternatively, the timing when simplified apparatus 3001 sends the ticket information or the card information to standard apparatus 3002 may be prior to the point in time at which the approval is given to the requested processing by the user of standard apparatus 3002.
2. Simplified apparatus 3001 sends a connection request to processing target apparatus 3003, while processing target apparatus 3003 makes a request for processing to simplified apparatus 3001 upon reception of the request. Next, simplified apparatus 3001 sends a connection request to standard apparatus 3002, and simplified apparatus 3001 and standard apparatus 3002 perform authentication to make connections between them. Simplified apparatus 3001 sends all part of the processing request received from processing target apparatus 3003 to standard apparatus 3002, and makes a request to standard apparatus 3002 for processing. Next, standard apparatus 3002 identifies the contents of the request from simplified apparatus 3001 and displays the identified contents, and prompts the user of standard apparatus 3002 to enter either an approval / disapproval to the processing request. In a case where the requested processing is approved, simplified apparatus 3001 sends ticket information or card information to standard apparatus 3002. Standard apparatus 3002 then executes the processing requested from simplified apparatus 3001 in communications with processing target apparatus 3003 by way of simplified apparatus 3001 (a flowchart is omitted). Alternatively, the timing when simplified apparatus 3001 sends the ticket information or the card information to standard apparatus 3002 may be prior to the point in time at which the approval is given to the requested processing by the user of standard apparatus 3002.
3. Simplified apparatus 3001 performs authentication between simplified apparatus 3001 itself and standard apparatus 3002 using information provided in advance, and makes connections to standard apparatus 3002 (steps ST 3113, ST 3114). Upon establishment of connections between simplified apparatus 3001 and standard apparatus 3002, standard apparatus 3002 identifies the contents of the request from simplified apparatus 3001, and displays the identified contents (step ST 3115). The user of standard apparatus 3002 enters an approval / disapproval to the requested processing (step ST 3116). In a casewhere the request is given an approval, simplified apparatus 3001 sends the ticket information stored in simplified apparatus 3001 itself to standard apparatus 3002, and in addition to that, simplified apparatus 3001 makes connections with processing target apparatus 3003 (step ST 3118), and standard apparatus 3002 performs the processing in communications with processing target apparatus 3003 by way of simplified apparatus 3001 by using these communication paths (step ST 3119). Alternatively, the timing when simplified apparatus 3001 sends the ticket information or the card information to standard apparatus 3002 may be prior to the point in time at which the approval is given to the requested processing by the user of standard apparatus 3002.

In addition, authentication herein may be made in various kinds of methods including without limitation a simple method such as identification of a connection partner terminal based on information exchanged in advance processing, a complex one which employs a signature and so on, and there is no intention to limit the authentication in one specified method.

By using the method as described above, even in a case where simplified apparatus 3001 is insufficient in its capabilities and thus has a problem in executing processing in direct communications with processing target apparatus 3003, standard apparatus 3002, which is provided with a sufficient capabilities, executes the processing in communications with processing target apparatus 3003 by way of simplified apparatus 3001, thereby producing the same effects as that would be produced in a case where simplified apparatus 3001 were able to execute the processing in direct communications with processing target apparatus 3003.

Moreover, simplified apparatus 3001 provides the ticket information or the card information held by simplified apparatus 3001 itself to standard apparatus 3002, and standard apparatus 3002 in turn executes the processing (such as ticket examination processing, settlement processing, and so on) by using the provided ticket information or card information in communications with processing target apparatus 3003 by way of simplified apparatus 3001; this makes it possible to execute processing even under a situation where simplified apparatus 3001 is not provided with the capabilities to execute the processing in communications with target processing apparatus 3003 on the other end, where such execution is attained by having standard apparatus 3002, which is provided with the capabilities, act as a substitute in executing the processing. Accordingly, even though simplified apparatus 3001 is not provided with any capabilities to execute the processing between simplified apparatus 3001 itself and processing target apparatus 3003 (e.g. a ticket examination machine), it is still possible for the user of simplified apparatus 3001 to download (purchase) a ticket(s) which s/he demands from the Web site and executes ticket examination processing in which the downloaded ticket is used by utilizing the capabilities of standard apparatus 3002, thereby making it further possible for the user of simplified apparatus 3001 to purchase a ticket and so on without worrying about the lack of the processing capabilities of simplified apparatus 3001. Consequently, this helps avoid a situation where ticket purchase is restrictively available, depending on the processing capabilities of the user apparatus, which will then contribute to increase in the sale of the ticket.

It is noted that, although the above-described embodiment discusses a case where simplified apparatus 3001 is supposed to provide ticket information or card information to standard apparatus 3002, the present invention is not limited to such a case; instead, at the occasion when standard apparatus 3002 executes processing in communications with processing target apparatus 3003 by way of simplified apparatus 3001 in response to a processing request issued from simplified apparatus 3001, simplified apparatus 3001 may add ticket information or card information held by simplified apparatus 3001 itself to information which is going to be provided from standard apparatus 3002 to processing target apparatus 3003 by way of simplified apparatus 3001, thereby providing such combined information to processing target apparatus 3003.

### (Embodiment 10)

According to the present embodiment, as illustrated in FIG. 38C, it is assumed that a simplified apparatus (non-member terminal) does not possess ticket information or card information, but is provided with a function for presenting a ticket or a card to a processing target apparatus (ticket examination machine, settlement machine, and so on), and on the other hand, it is assumed that a standard apparatus (member terminal) possesses ticket information or card information, but is not provided with a function for presenting a ticket or a card to a processing target apparatus (ticket examination machine, settlement machine, and so on).

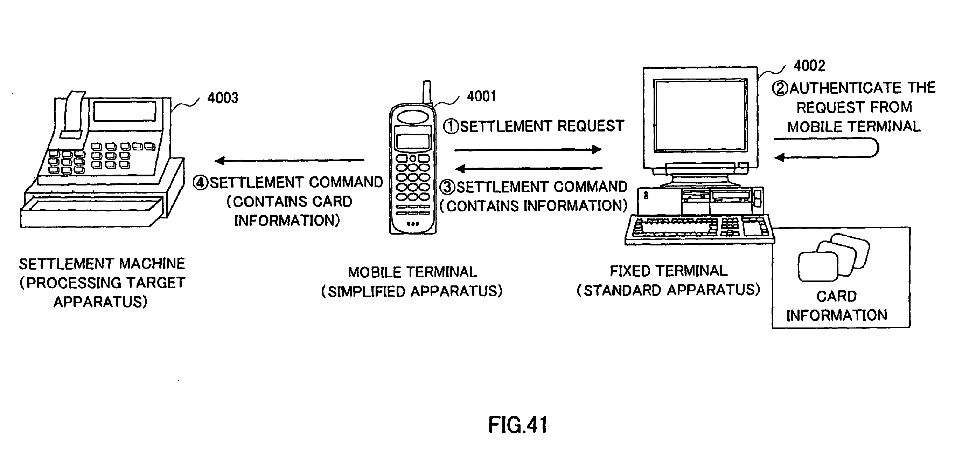

In such an assumption, as illustrated in FIG. 41, if it is further assumed that simplified apparatus 4001 is a mobile phone while standard apparatus 4002 is a fixed terminal, and that processing target apparatus 4003 is a settlement machine, the user of simplified apparatus 4001 will be able to execute settlement processing by using simplified apparatus 4001 in communications with processing target apparatus 4003 on the other end even without carrying any card information along, where such settlement is attained by reading out the required card information from standard apparatus 4002 at the occasion of making settlement. In this way, according to the present embodiment, simplified apparatus 4001 is able to carry through the processing by having standard apparatus 4002 provide the required information which simplified apparatus 4001 lacks for execution of the processing between simplified apparatus 4001 and processing target apparatus 4003. It is noted that, in such an assumption, the user of simplified apparatus 4001 and that of standard apparatus 4002 may be either the identical person or not.

As described above, according to the present invention;
1. There is a produced effect in that, in a case where it is wished that an apparatus having an insufficient function or lacking in security performs processing with some other apparatus, it is possible to execute the wished processing by having another apparatus which has an sufficient function or enough security act as a substitute; and moreover, in a case where approval criteria are set so as to ensure that a judgment for approving / disapproving the wished processing is given automatically, then;
2. There is a further produced effect in that it is not necessary to enter an approval / disapproval at each time of receiving a request and that it is possible to automatically judge whether the request is approved / disapproved, which also reduces the burden of trouble and time required for processing for the benefit of the user of an apparatus.

In addition, depending on which data is to be transferred at the occasion of advance processing or on which is the contents of approval criteria, the present application is applicable to various uses. For example, in a case where the present invention is applied to and implemented in ticket examination processing or settlement processing;
1. By giving an approval from the side of a member terminal, it becomes possible for a non-member to execute processing such as ticket use processing or settlement processing.
2. It is not necessary to provide non-members with other wise member-only information and content, or an application program for dealing with such information and content.
3. Because an approval given by a member at a member terminal side is required for using member-only information and content, it is clear where the responsibility rests at the time of the occurrence of a trouble in relation to the execution of ticket examination processing or settlement processing by a non-member.
4. The same processing may be performed by a ticket examination machine or a settlement machine in the case of processing performed by a non-member under the approval from a member as that performed in the case of processing performed by a member.
5. A lower communications cost is achieved because it is possible to conduct communications between a member terminal and a non-member terminal without going by way of a server.
6. It is not necessary for a person who requests processing and a person who performs processing upon reception of the request to be present at the same time of ticket examination processing or settlement processing, and in the case of ticket examination processing, it is possible for the both persons to go through ticket examination processing regardless of which person has gone through the processing earlier.

The effects such as enumerated above are produced.

This specification is based on the Japanese Patent Application No. 2002-092115 filed on March 28, 2002, the entire content of which is expressly incorporated by reference herein.

### INDUSTRIAL APPLICABILITY

The present invention is suitably applicable to a system which executes processing by using a mobile terminal apparatus, where the processing is targeted at a ticket examination machine, settlement machine, and so on.

## Claims

1. A service processing apparatus which executes processing targeted at a processing target apparatus to which the processing is executed, comprising:
a first communication section that conducts communications with the processing target apparatus;
a second communications section that conducts communications with a standard apparatus which is provided with capabilities for executing the processing targeted at the processing target apparatus and which provides a support in the processing in response to a service processing request which is a request from the service processing apparatus related to the processing targeted at the processing target apparatus;
a storage section that stores received information which is information received from the standard apparatus; and
a pass processing section that allows data transmitted from the standard apparatus to pass.

2. The service processing apparatus according to claim 1, wherein, when executing the processing targeted at the processing target apparatus, in a case where a successful authentication is performed based on the received information, said second communications section transmits the service processing request to the standard apparatus and receives return data from the standard apparatus in response to the service processing request, and said pass processing section sends out the return data to said first communications section.

3. The service processing apparatus according to claim 1, further comprising:
a request generation section that generates an advance processing request which contains identification information for identifying the service processing apparatus as advance processing which is executed before making the request to the standard apparatus for the support in the processing to be provided in response to the service processing request, and that transmits the generated advance processing request to the standard apparatus via said second communications section.

4. The service processing apparatus according to claim 1, further comprising:
a request generation section that generates an advance processing request which contains identification information for identifying the service processing apparatus and also contains contents of the processing for which the support is requested as advance processing which is executed before making the request to the standard apparatus for the support in the processing to be provided in response to the service processing request, and that transmits the generated advance processing request to the standard apparatus via said second communications section.

5. A processing support apparatus, comprising:
a communications section that conducts communications with a simplified apparatus which requests for support in processing to be provided by the processing support apparatus;
a storage section that stores received information, which is information received from the simplified apparatus;
an authentication section that performs authentication between the simplified apparatus and the processing support apparatus; and
a processing execution section that executes the processing requested by the simplified apparatus;
wherein said processing support apparatus performs authentication by using the received information, receives a processing request from the simplified apparatus to execute the processing in response to the processing request in a case where the authentication is successfully performed, and returns data which is outputted through the processing to the simplified apparatus.

6. The processing support apparatus according to claim 5, further comprising:
a criteria storage section that stores criteria for approving the processing requested from the simplified apparatus; and
a judgment section that judges whether the processing request is approved or disapproved by comparing the criteria stored in said criteria storage section with the processing request from the simplified apparatus.

7. The processing support apparatus according to claim 5, further comprising:
a response information generation section that generates response information containing secret information for authentication based on advance information sent from the simplified apparatus as advance processing executed before the request for support in the processing is received from the simplified apparatus;
wherein the generated response information is transmitted to the simplified apparatus.

8. The processing support apparatus according to claim 7, wherein said response information generation section generates, as the response information, a result of a judgment on whether the support is approved to be provided or not based on contents of the processing which is sent from the simplified apparatus as the advance information and which the support is requested for.

9. A service processing program which executes, when a simplified apparatus executes processing targeted at a processing target apparatus, service processing in coordination with another program in a standard apparatus, which provides a support in processing in response to a service processing request, which is a request from the simplified apparatus related to the processing targeted at the processing target apparatus, wherein said service processing program comprising the steps of:
transmitting a service processing request to the standard apparatus;
receiving a return data in response to the service processing request or command; and
transmitting the received return data or command to the processing target apparatus.

10. The service processing program according to claim 9, further comprising, in advance of the step of transmitting the service processing request by the simplified apparatus to the standard apparatus, the steps of:
inquiring contents of processing requested by the processing target apparatus to the processing target apparatus itself;
receiving data which indicates the contents of the processing requested by the processing target apparatus as a response to the inquiry; and
generating a service processing request based on the data received from the processing target apparatus.

11. The service processing program according to claim 9, wherein, in the step of receiving the return data by the simplified apparatus from the standard apparatus in response to the service processing request, the return data contains data which indicates an approval to the service processing request, and connections with the processing target apparatus are made only after such data is received.

12. The service processing program according to claim 9, further comprising the step of: searching and selecting of another end of connections out of a list of standard apparatuses in communication-accessible area to make connections when transmitting the service processing request to the standard apparatus.

13. A service processing program which executes processing in coordination with a standard apparatus which is provided with capabilities for executing the processing targeted at a processing target apparatus and which provides a support in the processing in response to a service processing request which is a request from an apparatus accommodating the service processing program related to the processing targeted at the processing target apparatus when executing the processing targeted at the processing target apparatus to which the processing is executed, wherein said service processing program comprising:
a first step of storing received information which is information received from the standard apparatus;
a second step of performing authentication with the standard apparatus by using the received information;
a third step of transmitting a service processing request to the standard apparatus in a case where the authentication is successfully performed;
a fourth step of receiving return data in response to the service processing request; and
a fifth step of transmitting the return data to the processing target apparatus.

14. The service processing program according to claim 13, wherein in said third step, in the case where the authentication is successfully performed, a part of processing which is unable to be executed by the apparatus accommodating the service processing program itself among the entire service processing request is transmitted to the standard apparatus.

15. The service processing program according to claim 13, wherein in said third step, in the case where the authentication is successfully performed, all part of the service processing request is transmitted to the standard apparatus.

16. A service processing program which executes processing in coordination with a standard apparatus which is provided with capabilities for executing the processing targeted at the processing target apparatus and which provides a support in the processing in response to a service processing request which is a request from an apparatus accommodating the service processing program related to the processing targeted at the processing target apparatus when executing the processing targeted at the processing target apparatus to which the processing is executed, wherein said service processing program comprising:
a first step of storing received information which is information received from the standard apparatus;
a second step of transmitting a service processing request to the standard apparatus;
a third step of performing authentication with the standard apparatus by using the received information;
a fourth step of receiving return data in response to the service processing request; and
a fifth step of transmitting the received data to the processing target apparatus.

17. The service processing program according to claim 16, wherein in said second step, in the case where the authentication is successfully performed, a part of processing which is unable to be executed by the apparatus accommodating the service processing program itself among the entire service processing request is transmitted to the standard apparatus.

18. The service processing program according to claim 16, wherein in said second step, in the case where the authentication is successfully performed, all part of the service processing request is transmitted to the standard apparatus.

19. A processing support program which is a program for providing a support in processing in response to a service processing request which is a request that is related to the processing targeted at a processing target apparatus and that is sent from a simplified apparatus, which is not provided with capabilities for executing the processing targeted at the processing target apparatus to which the processing is executed, wherein said processing support program comprising the steps of:
storing received information which is information received from the simplified apparatus;
performing authentication with the simplified apparatus by using the received information;
receiving a service processing request from the simplified apparatus in a case where the authentication is performed successfully;
executing a processing in response to the service processing request; and
returning data which is outputted through the processing.

20. The processing support program according to claim 19, further comprising:
a step of comparing criteria stored in an apparatus which executes said program with the processing request from the simplified apparatus to make a judgment as to whether the processing in response to the service processing request is approved or not.

21. A processing support program which is a program for providing a support in processing in response to a service processing request that is a request related to the processing targeted at a processing target apparatus and that is sent from a simplified apparatus, which is not provided with capabilities for executing the processing targeted at the processing target apparatus to which the processing is executed, wherein said processing support program comprising the steps of:
storing received information which is information received from the simplified apparatus;
receiving a service processing request from the simplified apparatus;
performing authentication with the simplified apparatus by using secret information for authentication contained in the service processing request;
executing a processing in response to the service processing request; and
returning data which is outputted through the processing.

22. The processing support program according to claim 21, further comprising:
a step of comparing criteria stored in an apparatus which executes said program with the processing request from the simplified apparatus to make a judgment as to whether the processing in response to the service processing request is approved or not.

23. A ticket examination processing apparatus for executing a processing targeted at a ticket examination machine, comprising:
a ticket examination communications section that conducts communications with the ticket examination machine;
an inter-terminal communications section that conducts communications with a ticket examination processing support apparatus which is provided with capabilities for executing the processing targeted at the ticket examination machine and which provides a support in the processing in response to a ticket examination processing request which is a request from the ticket examination processing apparatus itself related to the processing targeted at the ticket examination machine;
a coordination processing section that relays data or a command between sections within the ticket examination processing apparatus itself and said inter-terminal communications section;
a connection end information storage section that stores information required for making connections with the ticket examination processing support apparatus;
an advance information storage section that stores received information which is information received from the ticket examination processing support apparatus;
an input section that accepts an input of ticket examination instructions; and
a request generation section that generates a request to be transmitted to either the ticket examination machine or the ticket examination processing support apparatus upon reception of the input of the ticket examination instructions at said input section.

24. The ticket examination processing apparatus according to claim 23, wherein, when executing the processing targeted at the ticket examination machine, said coordination processing section receives the ticket examination request generated at said request generation section to send out the received ticket examination request to said inter-terminal communications section, and said inter-terminal communications section transmits the ticket examination request received from said coordination processing section to the ticket examination processing support apparatus and then receives a ticket examination command as a response to the ticket examination request, and in addition to that, sends out the received ticket examination command to said coordination processing section, and said coordination processing section sends out the ticket examination command to said ticket examination communications section.

25. The ticket examination processing apparatus according to claim 23, further comprising:
a request generation section that generates an advance processing request which contains identification information for identifying the ticket examination processing apparatus as advance processing which is executed before making the request to the ticket examination processing support apparatus for the support in the processing to be provided in response to the ticket examination processing request, and that transmits the generated advance processing request to the ticket examination processing support apparatus via said inter-terminal communications section.

26. The ticket examination processing apparatus according to claim 23, further comprising:
a request generation section that generates an advance processing request which contains identification information for identifying the ticket examination processing apparatus and also contains contents of the processing for which the support is requested as advance processing which is executed before making the request to the ticket examination processing support apparatus for the support in the processing to be provided in response to the ticket examination processing request, and that transmits the generated advance processing request to the ticket examination processing support apparatus via said inter-terminal communications section.

27. A ticket examination processing support apparatus, comprising:
an inter-terminal communications section that conducts communications with a ticket examination processing apparatus which requests for a support in a ticket examination processing to be provided by the ticket examination processing support apparatus itself;
a coordination processing section that relays data or a command between sections within the ticket examination processing support apparatus itself and said inter-terminal communications section;
an advance information storage section that stores information which is received from the ticket examination processing apparatus prior to execution of the ticket examination processing and which is required for authenticating the ticket examination processing apparatus;
a non-member terminal authentication section that authenticates the ticket examination processing apparatus based on the information stored in said advance information storage section;
a ticket storage section that stor.es a ticket;
a ticket processing section that executes ticket examination processing;
a request contents identification section that identifies contents of the request received by said coordination processing section from the ticket examination processing apparatus; and
an input section that accepts an input of either an approval or a disapproval to use of the ticket.

28. The ticket examination processing support apparatus according to claim 27, further comprising:
a criteria storage section that stores approval criteria, which are criteria for approving the requested processing; and
a use approval judgment section that judges whether the requested processing is approved or disapproved by comparing the ticket examination request from the ticket examination processing apparatus with the approval criteria stored in said criteria storage section.

29. The ticket examination processing support apparatus according to claim 27, further comprising:
a response information generation section that generates response information containing secret information for authentication based on advance information sent from the ticket examination processing apparatus as advance processing executed before the request for support in the ticket examination processing is received from the ticket examination processing apparatus;
wherein the generated response information is transmitted to the ticket examination processing apparatus.

30. The ticket examination processing support apparatus according to claim 29, wherein said response information generation section generates, as the response information, a result of a judgment on whether the support is approved to be provided or not based on contents of the processing which is sent from the ticket examination processing apparatus as the advance information and which the support is requested for.

31. A ticket examination processing program which executes, when a ticket examination processing apparatus executes processing targeted at a ticket examination machine, ticket examination processing in coordination with another program in a ticket examination processing support apparatus, which provides a support in processing in response to a ticket examination request, which is a request from the ticket examination processing apparatus related to the processing targeted at the ticket examination machine, wherein said ticket examination processing program comprising the steps of:
transmitting the ticket examination request to the ticket examination processing support apparatus;
receiving a return data in response to the ticket examination request or command; and
transmitting the received return data or command to the ticket examination machine.

32. The ticket examination processing program according to claim 31, further comprising, in advance of the step of transmitting the ticket examination request by the ticket examination processing apparatus to the ticket examination processing support apparatus, the steps of:
inquiring contents of processing requested by the ticket examination machine to the ticket examination machine;
receiving data which indicates the contents of the processing requested by the ticket examination machine as a response to the inquiry; and
generating a ticket examination request based on the data received from the ticket examination machine.

33. The ticket examination processing program according to claim 31, wherein, in the step of receiving the return data by the ticket examination processing apparatus from the ticket examination processing support apparatus in response to the ticket examination request, the return data contains data which indicates an approval to the ticket examination request, and connections with the ticket examination machine are made only after such data is received.

34. The ticket examination processing program according to claim 31, further comprising the step of:
searching and selecting of another end of connections out of a list of the ticket examination processing support apparatuses in communication-accessible area to make connections when transmitting the ticket examination request to the ticket examination processing support apparatus.

35. A ticket examination processing support program which executes processing requested by a ticket examination processing apparatus which requests for a support in ticket examination processing to be provided by a ticket examination processing support apparatus, wherein said ticket examination processing support program comprising the steps of:
receiving a ticket examination request from the ticket examination processing apparatus;
performing authentication of the ticket examination processing apparatus based on information which has been received from the ticket examination processing apparatus in advance and which is required for the authentication of the ticket examination processing apparatus;
executing the processing in response to the ticket examination request; and
transmitting data or a command which is outputted through the processing to the ticket examination processing apparatus.

36. The ticket examination processing support program according to claim 35, further comprising, in advance of the step of executing the processing by the ticket examination processing support apparatus in response to the ticket examination request, the step of:
making a judgment as to whether the requested ticket examination processing is approved or disapproved by comparing the ticket examination request from the ticket examination processing apparatus with the approval criteria stored in the ticket examination processing support apparatus.

37. The ticket examination processing support program according to claim 36, wherein the approval criteria contain criteria as to which a ticket is used for or a kind of the ticket for passing through the ticket examination machine.

38. A settlement processing apparatus for executing a processing targeted at a settlement machine, comprising:
a settlement machine communications section that conducts communications with the settlement machine;
an inter-terminal communications section that conducts communications with a settlement processing support apparatus which is provided with capabilities for executing the processing targeted at the settlement machine and which provides a support in the processing in response to a settlement processing request which is a request from the settlement processing apparatus itself related to the processing targeted at the settlement machine;
a coordination processing section that relays data or a command between sections within the settlement processing apparatus itself and said inter-terminal communications section;
a connection end information storage section that stores information required for making connections with the settlement processing support apparatus;
an advance information storage section that stores received information which is information received from the settlement processing support apparatus;
an input section that accepts an input of settlement instructions; and
a request generation section that generates a request to be transmitted to either the settlement machine or the settlement processing support apparatus upon reception of the input of the settlement instructions at said input section.

39. The settlement processing apparatus according to claim 38, wherein, when executing the processing targeted at the settlement machine, said coordination processing section receives the settlement request generated at said request generation section to send out the received settlement request to said inter-terminal communications section, and said inter-terminal communications section transmits the settlement request received from said coordination processing section to the settlement processing support apparatus and then receives a settlement command as a response to the settlement request, and in addition to that, sends out the received settlement command to said coordination processing section, and said coordination processing section sends out the settlement command to said settlement machine communications section.

40. The settlement processing apparatus according to claim 38, further comprising:
a request generation section that generates an advance processing request which contains identification information for identifying the settlement processing apparatus itself as advance processing which is executed before making the request to the settlement processing support apparatus for the support in the processing to be provided in response to the settlement processing request, and that transmits the generated advance processing request to the settlement processing support apparatus via said inter-terminal communications section.

41. The settlement processing apparatus according to claim 38, further comprising:
a request generation section that generates an advance processing request which contains identification information for identifying the settlement processing apparatus and also contains contents of the processing for which the support is requested as advance processing which is executed before making the request to the settlement processing support apparatus for the support in the processing to be provided in response to the settlement processing request, and that transmits the generated advance processing request to the settlement processing support apparatus via said inter-terminal communications section.

42. A settlement processing support apparatus, comprising:
an inter-terminal communications section that conducts communications with a settlement processing apparatus which requests for a support in a settlement processing to be provided by the settlement processing support apparatus;
a coordination processing section that relays data or a command between sections within the settlement processing support apparatus and said inter-terminal communications section;
an advance information storage section that stores information which is received from the settlement processing apparatus prior to execution of the settlement processing and which is required for authenticating the settlement processing apparatus;
a non-member terminal authentication section that authenticates the settlement processing apparatus based on the information stored in said advance information storage section;
a settlement information storage section that stores information required for making settlement such as a credit card number;
a settlement processing section that executes settlement processing;
a request contents identification section that identifies contents of the request received by said coordination processing section from the settlement processing apparatus; and
an input section that accepts an input of either an approval or a disapproval to execution of the settlement processing.

43. The settlement processing support apparatus according to claim 42, further comprising:
a criteria storage section that stores approval criteria, which are criteria for approving the requested processing; and
a use approval judgment section that judges whether the requested processing is approved or disapproved by comparing the settlement request from the settlement processing apparatus with the approval criteria stored in said criteria storage section.

44. The settlement processing support apparatus according to claim 42, further comprising:
a response information generation section that generates response information containing secret information for authentication based on advance information sent from the settlement processing apparatus as advance processing executed before the request for support in the settlement processing is received from the settlement processing apparatus;
wherein the generated response information is transmitted to the settlement processing apparatus.

45. The settlement processing support apparatus according to claim 44, wherein said response information generation section generates, as the response information, a result of a judgment on whether the support is approved to be provided or not based on contents of the processing which is sent from the settlement processing apparatus as the advance information and which the support is requested for.

46. A settlement processing program which executes, when a settlement processing apparatus executes processing targeted at a settlement machine, settlement processing in coordination with another program in a settlement processing support apparatus, which provides a support in processing in response to a settlement request, which is a request from the settlement processing apparatus related to the processing targeted at the settlement machine, wherein said settlement processing program comprising the steps of:
transmitting the settlement request to the settlement processing support apparatus;
receiving a return data in response to the settlement request or command; and
transmitting the received return data or command to the settlement machine.

47. The settlement processing program according to claim 46, further comprising, in advance of the step of transmitting the settlement request by the settlement processing apparatus to the settlement processing support apparatus, the steps of:
inquiring contents of processing requested by the settlement machine to the settlement machine itself;
receiving data which indicates the contents of the processing requested by the settlement machine as a response to the inquiry; and
generating a settlement request based on the data received from the settlement machine.

48. The settlement processing program according to claim 46, wherein, in the step of receiving the return data by the settlement processing apparatus from the settlement processing support apparatus in response to the settlement request, the return data contains data which indicates an approval to the settlement request, and connections with the settlement machine are made only after such data is received.

49. The settlement processing program according to claim 46, further comprising the step of: searching and selecting of another end of connections out of a list of the settlement processing support apparatuses in communication-accessible area to make connections when transmitting the settlement request to the settlement processing support apparatus.

50. A settlement processing support program which executes processing requested by a settlement processing apparatus which requests for a support in settlement processing to be provided by a settlement processing support apparatus, wherein said settlement processing support program comprising the steps of:
receiving a settlement request from the settlement processing apparatus;
performing authentication of the settlement processing apparatus based on information which has been received from the settlement processing apparatus in advance and which is required for the authentication of the settlement processing apparatus;
executing the processing in response to the settlement request; and
transmitting data or a command which is outputted through the processing to the settlement processing apparatus.

51. The settlement processing support program according to claim 50, further comprising the step of:
making a judgment as to whether the requested settlement processing is approved or disapproved by comparing the settlement request from the settlement processing apparatus with the approval criteria stored in the settlement processing support apparatus prior to the step of executing the processing by the settlement processing support apparatus in response to the settlement request.

52. The settlement processing support program according to claim 51, wherein the approval criteria contain a monetary amount or a purpose of the settlement.
